(19) **Europäisches Patentamt / European Patent Office / Office européen des brevets**

(11) **EP 2 115 525 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(21) Anmeldenummer: **08707294.8**

(22) Anmeldetag: **25.01.2008**

(51) Int Cl.:
***G02C 7/02*** *(2006.01)*

(86) Internationale Anmeldenummer:
**PCT/EP2008/000585**

(87) Internationale Veröffentlichungsnummer:
**WO 2008/089996 (31.07.2008 Gazette 2008/31)**

(54) **FLEXIBLER GLEITSICHTGLASOPTIMIERER**

FLEXIBLE VARIFOCAL LENS OPTIMIZER

OPTIMISEUR FLEXIBLE DE VERRES PROGRESSIFS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.01.2007 DE 102007003849**

(43) Veröffentlichungstag der Anmeldung:
**11.11.2009 Patentblatt 2009/46**

(73) Patentinhaber: **Rodenstock GmbH
80469 München (DE)**

(72) Erfinder:
- **ALTHEIMER, Helmut
  87650 Baisweil-Lauchdorf (DE)**
- **BECKEN, Wolfgang
  81541 München (DE)**
- **ESSER, Gregor
  81735 München (DE)**
- **UTTENWEILER, Dietmar
  82057 Icking (DE)**

(74) Vertreter: **Müller-Boré & Partner
Patentanwälte
Grafinger Straße 2
81671 München (DE)**

(56) Entgegenhaltungen:
**WO-A-2004/086125    DE-A1- 19 701 312**

- **GUTH O: "GRADAL INDIVIDUAL FRAMEFITTM-DIE NEUE GESTALTUNGSFREIHEI BEI GLEITSICHTGLAESERN" DEUTSCHE OPTIKERZEITUNG, OPT. FACHVEROEFF., HEIDELBERG, DE, 1. Juni 2006 (2006-06-01), Seiten 76-80, XP000962819 ISSN: 0344-7103**
- **"IMPRESSIONIST - DAS 4-IN-1 INTEGRIERTE SERVICE-TERMINAL VON RODENSTOCK" DEUTSCHE OPTIKER ZEITUNG, XX, DE, 1. Januar 2006 (2006-01-01), Seiten 56-61, XP000962763**
- **ESSER G ET AL: "DIE PERFORMANCE INDIVIDUELLER GLEITSICHTGLAESER" DEUTSCHE OPTIKER ZEITUNG, XX, DE, 1. Dezember 2005 (2005-12-01), Seiten 38-44, XP000962762**
- **STEFANIE SCHULDT: "ysis - Natürliches sehen erleben" DEUTSCHE OPTIKER ZEITUNG, XX, DE, Nr. 5/2004, 1. Mai 2004 (2004-05-01), Seiten 38-43, XP002398937**

EP 2 115 525 B1

**Beschreibung**

Die Erfindung betrifft ein Verfahren zum Berechnen eines individuellen Brillenglasdesigns, ein Verfahren zum Herstellen eines individuellen progressiven Brillenglases, sowie eine entsprechende Vorrichtung zum Herstellen eines individuellen Brillenglases, ein Computerprogrammerzeugnis, ein Speichermedium und eine Verwendung eines Brillenglases.

Die Berechnung und Optimierung von Gleitsichtbrillengläsern in der jeweiligen Gebrauchsstellung bzw. Gebrauchssituation hat mittlerweile einen hohen technischen und optischen Standard erreicht. So können nach dem Stand der Technik Gleitsichtbrillengläser unter Berücksichtigung der individuellen Verordnung (sph, Zyl, Achse, Add, Prisma, Basis) und der individuellen Lage bzw. Anordnung der Gläser vor dem Auge des Brillenträgers (z.B. Hornhautscheitelabstand (HSA), Fassungsscheibenwinkel (FSW), Vorneigung bzw. pantoskopischer Winkel) und Berücksichtigung von physiologischen Parametern (z.B. Pupillendistanz) online nach Bestelleingang als Unikat optimiert und berechnet werden. Die Positionierung des Brillenglases zum Kundenauge, d.h. in der Brillenfassung, wird jedoch vom Hersteller fest vorgegeben (z.B. durch die Bezugspunktforderung) und kann nicht variiert werden. Ebenso kann der Kunde nur aus wenigen (meistens 2) Brillenglasdesigns auswählen, welche sich dann nur durch die Progressionslänge unterscheiden. Eine Anpassung der Sehbereiche an besondere Kundenwünsche bezüglich individueller Hauptblickrichtungen und Anwendungsschwerpunkte gekoppelt mit einer bestimmten, eventuell limitierenden, Fassungswahl ist bisher nicht möglich.

Nach dem Stand der Technik werden ferner für jedes neu zu entwickelnde Design und speziell auch für jede Progressionszonenlänge eigene Sollvorgaben (Designs) erarbeitet und hinterlegt. So werden neben den Universalgleitsichtgläsern auch für diverse Spezialgleitsichtgläser Designs entwickelt, die sich häufig im Wesentlichen nur bezüglich der Hauptssehaufgaben und damit bezüglich der Hauptblickrichtungen im Fern- und im Nahbereich unterscheiden. In der PCT/DE01/00188 wird deswegen vorgeschlagen, das Design für unterschiedliche Anwendungen (Autofahrer, Pilot, Uhrmacher,...) direkt vorzugeben. Doch auch mit diesem sehr aufwendigen Vorgehen bezüglich Designerarbeitung als auch bezüglich der Logistik der vielen unterschiedlichen Designs beim Hersteller als auch der notwendigen Produktschulungen beim Augenoptiker kann vielfach auf die individuellen Benutzersituationen mit diesen Standarddesigns nicht zufrieden stellend reagiert werden, da bei alle diesen Varianten die Bezugspunkte und Hauptsehbereiche nachträglich nicht mehr verändert werden können.

Die Druckschrift Oranna Guth, "Gradal Individual® FrameFit™ - die neue Gestaltungsfreiheit bei Gleitsichtgläsern", DOZ 6-2006, Seiten 76 bis 80 offenbart ein Verfahren sowie eine entsprechende Vorrichtung zum Herstellen progressiver Brillengläser mit individuell bestimmbaren Progressionslängen. Insbesondere wird zur Bestimmung der variablen Progressionslänge die Position des Nahmesskreises in vertikaler Richtung soweit verändert, bis der Nahbereich für den Brillenträger optimal nutzbar ist. Das "Grunddesign", welches die typischen Charakteristika des Gleitsichtglases (zum Beispiel die Verteilung der astigmatischen Abweichung) beschreibt, ist bei allen Progressionslängen ähnlich.

Die Druckschrift S. Schuldt, "ysis - Natürliches Sehen erleben". DOZ 5-2004, Seiten 38 bis 43 offenbart ein Verfahren zum Berechnen individueller progressiver Brillengläser, wobei je nach Kopfneigung eines Brillenträgers die Progressionslänge des Brillenglases variiert werden kann. Bei der Anpassung der Progressionslänge an die Kopfneigung des Brillenträgers wird außerdem der Einfluß des Hornhautscheitelabstands berücksichtigt.

Die Druckschrift WO 2004/086125 offenbart ein Verfahren zum Berechnen eines individuellen Progressivglases, wobei zunächst ein oder mehrere Grunddesigns von Brillengläsern anhand theoretischer Vorgaben erzeugt werden. In einem weiteren Schritt werden Startdesigns aus diesen Grunddesigns erzeugt und individuelle Progressivgläser, den individuellen Daten von Trageversuchspersonen entsprechend, aus den Startdesigns berechnet. Anhand von Trageversuchen werden die endgültigen Startdesigns für die Produktion erstellt und individuellen Brillengläser aus den Startdesigns nach individuellen Kundendaten berechnet.

Aufgabe der Erfindung ist es, ein schnelles und effizientes Verfahren zum Berechnen eines individuellen Brillenglasdesigns sowie ein Verfahren zum Herstellung eines Brillenglases nach dem individuell berechneten Brillenglasdesign bereitzustellen. Es ist ferner eine Aufgabe der Erfindung eine entsprechende Vorrichtung zum Herstellen eines individuellen Brillenglases sowie entsprechende Computerprogrammerzeugnis und Speichermedium bereitzustellen.

Diese Aufgabe wird durch ein Verfahren zum Berechnen eines individuellen Brillenglasdesigns mit den Merkmalen gemäß Anspruch 1, ein Verfahren zum Berechnen eines individuellen Brillenglasdesigns mit den Merkmalen gemäß Anspruch 28, ein Verfahren zum Herstellen eines individuellen progressiven Brillenglases mit den Merkmalen gemäß Anspruch 31, eine Vorrichtung zum Herstellen eines individuellen Brillenglases mit den Merkmalen gemäß Anspruch 32, ein Computerprogrammerzeugnis mit den Merkmalen gemäß Anspruch 33, ein Speichermedium mit den Merkmalen gemäß Anspruch 34 sowie eine Verwendung eines Brillenglases mit den Merkmalen gemäß Anspruch 35 gelöst. Bevorzugte Ausführungsformen sind Gegenstand der Unteransprüche.

Gemäß der Erfindung wird ein computerimplementiertes Verfahren zum Berechnen eines individuellen Brillenglasdesigns für ein progressives Brillenglas mit einer variabel einstellbaren, individuellen vertikalen Position des Fern- und/oder Nahbezugspunkts bereitgestellt, wobei das Verfahren folgende Schritte umfaßt:

- Vorgeben eines Startdesigns, welches eine vorgegebene vertikale Position des Fern- und/oder des Nahbezugspunkts aufweist;

- Berechnen des individuellen Brillenglasdesigns derart, daß dieses die geforderte, individuelle vertikale Position des Fern- und/oder Nahbezugspunkts aufweist, wobei die Berechnung des individuellen Brillenglasdesigns eine Berechnung einer Sollvorgabe $S_{Soll}(y)$ für die räumliche Verteilung mindestens einer optischen Eigenschaft des individuellen Brillenglases mittels einer Zuordnung $S_{Soll}(y) = S'_{Soll}(y')$ und einer Transformation $Y: y \mapsto y', y \mapsto y'(y) = y - \Delta y(y)$ einer entsprechenden Sollvorgabe $S'_{Soll}(y')$ des Startdesigns umfaßt, wobei $y'$ die vertikale Koordinate der Sollvorgabe des Startdesigns und $y$ die vertikale Koordinate der transformierten Sollvorgabe des individuellen Brillenglasdesigns bezeichnen.

Die vertikale Richtung bezieht sich vorzugsweise auf die vertikale Richtung in Gebrauchsstellung des Brillenglases, wobei das Brillenglas beispielsweise in einer durchschnittlichen (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet.

Das Koordinatensystem ist vorzugsweise ein Koordinatensystem in der objektseitigen Fläche des Brillenglases, wobei der Ursprung des Koordinatensystems beispielsweise mit dem geometrischen Mittelpunkt des (rohrunden) Brillenglases oder mit dem Zentrier- bzw. Anpaßpunkt des Brillenglases zusammenfällt. Die vertikale und horizontale Achse liegen in der tangentialen Ebene zu der objektseitigen Fläche in dem geometrischen Mittelpunkt bzw. dem Zentrier- bzw. Anpaßpunkt. Es ist selbstverständlich möglich, die Transformation in anderen geeigneten Koordinatensystemen zu definieren.

Das Design eines Brillenglases umfaßt die Verteilung der Soll-Werte für eine oder mehreren optische Eigenschaften bzw. Abbildungsfehler, welche in die Optimierung des Brillenglases als Zielwerte eingehen, und gegebenenfalls ein geeignetes Objektmodell. Das Objektmodell kann beispielsweise eine Objektabstandsfunktion, welche als die reziproke Objektentfernung entlang der Hauptlinie des Brillenglases definiert ist, umfassen. Ein Beispiel eines geeigneten Objektmodells ist in DIN 58 208 Teil 2 (vgl. Bild 6) definiert. Ebenfalls ist in DIN 58 208 Teil 2 eine normierte Gebrauchsstellung definiert.

Um Gleitsichtgläser mit unterschiedlichen Designs (d.h. mit unterschiedlichen Sollvorgaben für die Abbildungsfehler, insbesondere für die astigmatische Abweichung) zu erzeugen, müssen die entsprechenden unterschiedlichen Design- bzw. Sollvorgaben erzeugt und damit die Optimierungen durchgeführt werden.

Ein Brillenglasdesign wird insbesondere durch die Verteilung des Refraktionsfehlers (d.h. die Differenz des Brechwerts des Brillenglases von dem Brechwert, welcher mittels Refraktionsbestimmung ermittelt wird) und/oder die Verteilung des Astigmatismusfehlers bzw. der astigmatischen Abweichung (d.h. die Differenz des Astigmatismus des Brillenglases von dem Astigmatismus, welcher mittels Refraktionsbestimmung ermittelt wird) charakterisiert. Ferner kann ein Brillenglasdesign ebenfalls die Verteilung der Soll-Werte für Vergrößerungs-, Verzerrungs- oder anderen Abbildungsfehler umfassen. Dabei kann es sich um Flächenwerte oder vorzugsweise um Gebrauchswerte, d.h. Werte in Gebrauchsstellung des Brillenglases handeln. Berechnen eines individuellen Brillenglasdesigns in diesem Sinne umfaßt die Berechnung der Sollvorgaben bzw. der Sollwerte für die einzelnen optischen Eigenschaften bzw. Abbildungsfehler (z.B. Refraktionsfehler, astigmatische Abweichung, Vergrößerung, Verzerrung, etc.), welche dem individuellen Brillenglasdesign zuzuordnen sind.

Ein progressives Brillenglasdesign umfaßt in der Regel einen Fern-, einen Nah- und einen Zwischen- bzw. Progressionsbereich. Die 0,5-Dpt. Astigmatismuslinie wird in der Regel zur Abgrenzung der einzelnen Sehbereiche gegenüber der Peripherie herangezogen. Es ist jedoch möglich andere Isoastigmatismuslinien, wie z.B. die 0,75 oder 1,0 dpt Isoastigmatismusline, zur Abgrenzung der Sehbereiche heranzuziehen.

Ein Design weist eine vorgegebene räumliche Position des Fern- und/oder Nahbezugspunkts auf, wenn in dem jeweiligen Bezugspunkt die vorgeschriebenen bzw. für den Brillenträger erforderlichen Werte für die Fern- und/oder Nahteilwirkungen (welche z.B. mittels Refraktionsbestimmung ermittelt werden) erreicht werden. Anders ausgedrückt sollen im Fern- und/oder Nahbezugspunkt die dem Design zugeordneten Sollvorgaben für die Abbildungsfehler (insbesondere astigmatische Abweichung und Refraktionsfehler) möglichst klein (vorzugsweise im wesentlichen Null) sein.

Gemäß der Erfindung können die neuen Sollvorgaben bzw. die Sollvorgaben des individuellen Brillenglasdesigns aus bereits hinterlegten älteren Sollvorgaben bzw. Sollvorgaben des Startdesigns transformiert werden, d.h. die neuen Sollvorgaben an der Stelle $y$ gehen aus den alten Sollvorgaben an der Stelle $y'$ hervor, wobei

$$y' = y - \Delta y(y).$$

Die Transformation der Sollvorgaben findet lediglich in vertikaler Richtung (y-Richtung) statt. In horizontaler Richtung findet keine Transformation der Sollvorgaben des Startdesigns statt. In diesem Sinne ist der Ausdruck $S_{Soll}$

(y) als eine verkürzte Schreibweise für $S_{Soll}(x, y)$ und der Ausdruck $S'_{Soll}(y')$ als eine verkürzte Schreibweise für $S'_{soll}(x, y')$ zu verstehen. Alternativ können die Sollvorgaben anstatt im Koordinatensystem {$x, y$} im Koordinatensystem {$u, y$} vorgegeben werden, wobei $u$ den horizontalen Abstand von einer vorgegebenen Hauptlinie bezeichnet. In diesem Koordinatensystem entspricht der Ausdruck $S_{soll}(y)$ dem Ausdruck $S_{Soll}(u, y)$ und der Ausdruck $S'_{Soll}(y')$ dem Ausdruck $S'_{Soll}(u, y')$.

Dementsprechend enthält das Startdesign vorzugsweise Vorgaben für den Verlauf einer Hauptlinie und das Berechnen des individuellen Brillenglasdesigns eine Transformation der Hauptlinie. Die x-Koordinate der transformierten Hauptlinie wird aus der vorgegebenen Hauptlinie des Startdesigns beispielsweise wie folgt berechnet:

$$x_0(y) = x_0(y'),$$

wobei

$$y' = y - \Delta(y),$$

$x_0(y')$ die x-Koordinate der vorgegebenen Hauptlinie des Startdesigns für den y-Wert $y'$ ist; und
$x_0(y)$ die x-Koordinate der transformierten Hauptlinie für den y-Wert $y$ bezeichnen.

Mit dem erfindungsgemäßen Verfahren kann so aus einem bestehenden Gleitsichtglasdesign (Startdesign) direkt ein Gleitsichtglas mit beliebiger vertikaler Lage der Bezugspunkte für die Ferne und die Nähe (Fern- und Nahbezugspunkt) und Hauptsehbereiche unter Beibehaltung der Designcharakteristik abgeleitet und optimiert werden. Hierzu genügt es, lediglich die gewünschte individuelle Lage des Fernbezugspunkts $B_F$ und/oder des Nahbezugspunkts $B_N$ (auch nachfolgend jeweils Bezugspunkte für Ferne $B_F$ und Nähe $B_N$ genannt) vorzugeben. Die vertikale Position und Länge der Progressionszone der Gleitsichtfläche wird automatisch an die individuelle Benutzersituation angepaßt. Dabei kann eine beliebige Position der Bezugspunkte für Ferne $B_F$ und Nähe $B_N$ bei der Optimierung des Brillenglases berücksichtigt werden.

Ein wesentlicher Vorteil der Erfindung ist folglich die Vermeidung des oben beschriebenen Mehraufwands zur Erstellung geeigneter Sollvorgaben, insbesondere für individuelle progressive Brillengläser. Ferner ist es mit dem erfindungsgemäßen Verfahren möglich, durch eine relativ einfache und schnell durchzuführende Berechnung aus nur einem vorgegebenen Startdesign Varianten bzw. Designs längerer und kürzerer Progression zu erzeugen. Darüber hinaus können die Sehbereiche beliebig in vertikaler Richtung positioniert werden, ohne daß die Designcharakteristik und die guten Abbildungseigenschaften des Start- bzw. des Grunddesigns verloren gehen.

Gemäß einem bevorzugten Beispiel gilt für die Transformation $Y$: $\Delta y(y) = y_0$, wobei $y_0$ eine Konstante bezeichnet.

Weicht z.B. nur die Hauptblickrichtung eines Brillenträgers in der Ferne in vertikaler Richtung vom Fernbezugspunkt des Glases ab, dann kann das Brillenglasdesign der Anwendung des Brillenglasträgers näher kommen, wenn die vertikale Positionierung der Sollvorgaben variabel ist, d.h. $\Delta y(y) = y_0$ ist, wobei $y_0$ eine Konstante ist. Ein positiver Wert von $y_0$ bedeutet, dass die neuen Sollvorgaben im Vergleich zu den alten Referenzvorgaben nach oben versetzt erscheinen.

Gemäß einer weiteren bevorzugten Ausführungsform gilt für die Transformation $Y$:

$$\Delta y(y) = \alpha y + y_0,$$

wobei:

$\alpha$ eine Konstante bezeichnet; und
für $\alpha > 0$ die Transformation eine Streckung des Startdesigns;
für $\alpha < 0$ die Transformation eine Stauchung des Startdesigns bewirkt.

Das Brillenglasdesign kann, wie oben beschrieben, der Anwendung des Brillenglasträgers auch dann näher kommen, wenn außer der vertikalen Positionierung die Sollvorgaben vertikal gestreckt oder gestaucht werden können, d.h. $\Delta y(y) = \alpha y + y_0$ ist. Dabei ist $\alpha$ eine Konstante, die positiv ist, falls das Design gestreckt wird, und negativ, wenn es gestaucht wird.

Vorzugsweise gilt für die Transformation $Y$:

$$\Delta y(y) = f(y) + y_0,$$

wobei:

für $f'(y) > 0$ die Transformation eine lokale Streckung und
für $f'(y) < 0$ die Transformation eine lokale Stauchung des Startdesigns bewirkt.

Wird das Strecken oder Stauchen und das Verschieben durch die affine Funktion $\Delta y(y) = \alpha y + y_0$ gesteuert, dann sind alle Bereiche im Fern- und Nahteil sowie in der Progressionszone gleichmäßig von der Änderung betroffen. Oft ist es jedoch bevorzugt, bestimmte Eigenschaften des Fern- oder des Nahteils zu erhalten und nur die Progressionszone in ihrer Länge zu variieren. Vorzugsweise wird dann eine Funktion $\Delta y(y)$ gewählt, welche bestimmten Eigenschaften aufweist, z.B. in der Progressionszone steiler verläuft als im Nah- oder Fernteil, allgemein eine Funktion der Form $\Delta y(y) = f(y) + y_0$. Ein positiver Wert der Ableitung $f'(y)$ steht für eine lokale Streckung, ein negativer Wert für eine lokale Stauchung.

Vorzugsweise ist $f(y)$ monoton und ebenso ist vorzugsweise $|f'(y)|$ in der Progressionszone höher als im Nah- oder Fernteil, so daß diese stärker vom Strecken oder Stauchen betroffen ist.

Vorzugsweise hängt die Transformation $Y$ von der Differenz der vertikalen Position des Fern- und/oder des Nahbezugspunkts des individuellen Brillenglasdesigns und der Differenz der vertikalen Position des Fern- und/oder des Nahbezugspunkts des Startdesigns ab.

Für die Funktion $f(y)$ gibt es verschiedene Möglichkeiten der Parametrisierung. Beispiele geeigneter Funktionen sind:

a) Doppelasymptote mit Transformationskoeffizienten $a, b, c, m, d$ :

$$f(y) = b + \frac{a}{(1 + e^{c(y+d)})^m} \qquad (1)$$

b) Sigmoid

$$f(y) = \frac{a}{1 + e^{c(y+d)}} \text{ (Spezialfall der Doppelasymptote)} \qquad (2)$$

c) Gauß'sche Kumulative mit Transformationskoeffizienten $a,b,c$ :

$$f(y) = \frac{a}{2}\left(1 + erf\left(\frac{y-b}{\sqrt{2}c}\right)\right) \qquad (3)$$

d) Lorentz'sche Kumulative mit Transformationskoeffizienten $a,b,c$ :

$$f(y) = \frac{a}{\pi}\left(\arctan\frac{y-b}{c}\right) + \frac{\pi}{2} \qquad (4)$$

d) Kumulative SDS Funktion mit Transformationskoeffizienten $a,b,c,d$ :

$$f(y) = \frac{a}{2c}\left(2d\ln\left(\exp\left(\frac{2y+c}{2d}\right)+\exp\left(\frac{b}{d}\right)\right)-2d\ln\left(\exp\left(\frac{y}{d}\right)+\exp\left(\frac{2b+c}{2d}\right)\right)+c\right)$$

$$(5)$$

e) Logistische Dosis-Response Funktion mit Transformationskoeffizienten $a, b,$ c

$$f(y) = a/\left(1+\left(\frac{y}{b}\right)^{c}\right)$$

$$(6)$$

f) Log-Normal-Kumulative Funktion mit Transformationskoeffizienten $a, b, c$ :

$$f(y) = \frac{a}{2}\,erfc\left(-\ln\left(\frac{y}{b}\right)\Big/\sqrt{2}c\right)$$

$$(7)$$

Die obigen Funktionen b) bis g) sind beispielsweise in der Sammlung im User's Manual zu "TableCurve2D", Version 4 Documentation, Copyright 1996 AISN Software Inc., näher beschrieben. Ebenfalls sind dort weitere geeignete Funktionen mit den oben beschriebenen Eigenschaften beschrieben.

Die Parameter der Funktion $f(y)$ können beispielsweise gezielt derart ausgewählt werden, daß die Funktion $f$ $(y)$ bestimmte Eigenschaften erfüllt. Alternativ können die Parameterwerte direkt vorgegeben werden.

Vorzugsweise wird gefordert, daß die $y$-Koordinaten $y_F$ und $y_N$ der neuen Fern- und Nahbezugspunkte in Bezug auf die alten $y$-Koordinaten $y'_F$ und $y'_N$ liegen. Dies bedeutet:

$$\Delta y(y_F) = y_F - y'_F, \qquad \Delta y(y_N) = y_N - y'_N$$

$$(8)$$

oder gleichbedeutend:

$$f(y_F) = y_F - y'_F - y_0, \qquad f(y_N) = y_N - y'_N - y_0,$$

$$(9)$$

wobei:

$y_F$     die vertikale Position des Fernbezugspunkts des individuellen Brillenglasde- signs;
$y_{FD}$     die vertikale Position des Fernbezugspunkts des Startdesigns;
$y_N$     die vertikale Position des Nahbezugspunkts des individuellen Brillenglasde- signs;
$y_{ND}$     die vertikale Position des Nahbezugspunkts des Startdesigns

Die Transformationskoeffizienten der Funktion $f(y)$ werden vorzugsweise mittels eines iterativen Verfahrens ausgehend von vorgegebenen Startwerten bestimmt.

Vorzugsweise werden die Transformationskoeffizienten der Funktion $f(y)$ in Abhängigkeit von:

- der Differenz $y_F$ - $y_{FD}$ der vertikalen Position $y_F$ des Fernbezugspunkts des individuellen Brillenglasdesigns und der vertikalen Position $y_{FD}$ des Fernbezugspunkts des Startdesigns; und/oder
- der Differenz $y_N$ - $y_{ND}$ der vertikalen Position $y_N$ des Nahbezugspunkts des individuellen Brillenglasdesigns und der Position $y_{ND}$ des Nahbezugspunkts des Startdesigns

festgelegt.

Beispielsweise können die Transformationskoeffizienten der Doppelasymptote

$$f(y) = b + \frac{a}{(1 + e^{c(y+d)})^m}$$ folgendermaßen berechnet werden:

$$m = 1; \quad d = -\frac{y_F + y_N}{2} \tag{10}$$

$$c = \frac{2\ln\left(\frac{\varepsilon}{2+\varepsilon}\right)}{l} \tag{11}$$

$$f_M = 1 + e^{-\frac{cl}{2}} \quad ; \quad f_P = 1 + e^{\frac{cl}{2}} \tag{12}$$

$$a = \frac{l - l_D}{f_P^{-1} - f_M^{-1}} \tag{13}$$

$$b = \frac{f_M(l - l_D)}{f_P - f_M} \tag{14}$$

$$y_0 = y_F - y_{FD} \tag{15}$$

wobei:

$l_D = y_{FD} - y_{ND}$    die Progressionslänge des Startdesigns;
$l = y_F - y_N$    die Progressionslänge des individuellen Brillenglasdesigns;
$y_F$    die vertikale Position des Fernbezugspunkts des individuellen Brillenglasde- signs;
$y_{FD}$    die vertikale Position des Fernbezugspunkts des Startdesigns;
$y_N$    die vertikale Position des Nahbezugspunkts des individuellen Brillenglasde- signs;
$y_{ND}$    die vertikale Position des Nahbezugspunkts des Nahbezugspunkts des Start- designs;
$1+\varepsilon$    Faktor, welcher bestimmt, um wieviel der Abstand *a* zwischen der Fern- und Nahteilasymptote der Funktion $f(y)$ die Änderung der Progressionslänge überragt, wobei vorzugsweise $\varepsilon = 0.01$

bezeichnen.

Vorzugsweise ist die zumindest eine optische Eigenschaft des Brillenglases der Astigmatismus oder die astigmatische Abweichung.

Die astigmatische Abweichung wird als die Differenz zwischen dem Astigmatismus des Brillenglases (als Flächenwert oder vorzugsweise als Gebrauchswert) und dem zu korrigierenden Astigmatismus des Auges des Brillenträgers definiert.

Ferner kann das individuelle Brillenglasdesign eine individuelle Objektabstandsfunktion entlang der Hauptblicklinie des Brillenglases und das Startdesign eine Startobjektabstandsfunktion entlang der Hauptlinie des Brillenglases umfassen. Die individuelle Objektabstandsfunktion wird vorzugsweise mittels einer zweiten Transformation $Y_2$ der Startobjektabstandsfunktion erhalten. Transformation $Y$ und die zweite Transformation können $Y_2$ gleich sein.

Die Transformation $Y$ und die zweite Transformation $Y_2$ können jedoch auch unterschiedlich sein. Vorzugsweise werden die Transformationskoeffizienten der zweiten Transformation $Y_2$ mittels einer Newtoniteration derart bestimmt, daß der Brechwert des Brillenglases in dem Fern- und/oder dem Nahbezugspunkt des individuellen Brillenglasdesigns mit dem Brechwert des Brillenglases in dem Fern- und/oder dem Nahbezugspunkt des Startdesigns übereinstimmt.

Die Objektabstandsfunktion bzw. die reziproke Objektentfernung $S_1(u_0, y)$ wird vorzugsweise durch eine Doppelasymtotenfunktion:

$$S_1(u_0, y) = b_s + \frac{a_s}{(1 + e^{c_s(y-y_0+d_s)})^{m_s}} \qquad (16)$$

mit Koeffizienten $a_s, b_s, c_s, d_s, m_s$ *beschrieben,* wobei für vorgegebene Koeffizienten $a_s, b_s, m_s$ die Koeffizienten $c_s, d_s$ mittels einer Newtoniteration bestimmt werden.

Ferner kann das individuelle Brillenglasdesign individuelle Sollvorgaben für die entsprechenden räumlichen Verteilungen mehrerer optischer Eigenschaften des Brillenglases umfassen, wobei vorzugsweise alle individuellen Sollvorgaben mittels der Transformation Y der entsprechenden Sollvorgaben des Startdesigns berechnet werden

Ferner bevorzugt werden die Sollvorgabe bzw. die Sollvorgaben des individuellen Brillenglasdesigns mit einem Skalierungsfaktor $l/l_D$, einer Funktion $h = h(S'(y'), l_D/l)$ oder einer Funktion $h = h(l_D/l)$ multipliziert bzw. skaliert werden, wobei $l$ die Progressionslänge des individuellen Brillenglasdesign und $l_D$ die Progressionslänge des Startdesigns bezeichnen.

Vorzugsweise ist $h(l_D/l) = a \cdot (l_D/l) + b$, wobei $a, b$ Konstanten sind.

Ferner wird gemäß der Erfindung ein computerimplementiertes Verfahren zum Berechnen eines individuellen Brillenglasdesigns für ein progressives Brillenglas mit einer variabel einstellbaren, individuellen vertikalen Position des Fern- und/oder Nahbezugspunkts vorgeschlagen, wobei das Verfahren folgende Schritte umfaßt:

- Vorgeben eines Startdesign, welches eine vorgegebene vertikale Position des Fern- und/oder des Nahbezugspunkts aufweist;

- Berechnen des individuellen Brillenglasdesigns derart, daß dieses die geforderte, individuelle vertikale Position des Fern- und/oder Nahbezugspunkts aufweist, wobei die Berechnung des individuellen Brillenglasdesigns eine Berechnung einer individuellen Objektabstandsfunktion $S_1(y)$ entlang der Hauptlinie des Brillenglases mittels einer Zuordnung $S_1(y) = S_1'(y')$ und einer Transformation $Y : y \mapsto y', y \mapsto y'(y) = y - \Delta y(y)$ einer entsprechenden Objektabstandsfunktion $S_1'(y')$ des Startdesigns umfaßt, wobei $y'$ die vertikale Koordinate entlang der Hauptlinie des Brillenglases und $y$ die vertikale Koordinate entlang der Hauptlinie des Brillenglases der transformierten Objektabstandsfunktion des individuellen Brillenglasdesigns bezeichnen.

Erfindungsgemäß wird ferner ein Verfahren zum Herstellen eines individuellen progressiven Brillenglases mit einer variabel einstellbaren vertikalen Position des Fern- und/oder Nahbezugspunkts vorgeschlagen, wobei das Verfahren folgende Schritte umfaßt:

- Berechnen eines individuellen Brillenglasdesigns, welches die geforderte vertikale Position des Fern- und/oder des Nahbezugspunkts aufweist nach einem bevorzugen erfindungsgemäßen Verfahren zum Berechnen eines individuellen Brillenglasdesigns;
- Berechnen bzw. Optimieren des Brillenglases nach dem individuellen Brillenglasdesign.

Um progressive Brillengläser mit unterschiedlichen Designs (d.h. mit unterschiedlichen Sollvorgaben für die Abbildungsfehler, insbesondere für die astigmatische Abweichung) zu erzeugen, müssen die entsprechenden unterschiedlichen Design- bzw. Sollvorgaben erzeugt und damit die Optimierungen durchgeführt werden. Eine designbasierte Optimierung eines progressiven Brillenglases kann durch Minimierung einer Zielfunktion der Form

$$F(\vec{x}) = \sum_{i=1}^{m} \left[ g_{i,S}(S_i - S_{i,Soll})^2 + \ldots \right] \qquad (17)$$

erfolgen, wobei:

$S_{i,Soll}$  die lokale Sollvorgabe für die räumliche Verteilung zumindest einer op- tischen Eigenschaft an der $i$ - ten Bewertungsstelle;

$S_i$  die tatsächliche lokale optische Eigenschaft an der $i$ - ten Bewertungs- stelle;

$g_{i,S}$  die lokale Gewichtung

ist.

Vorzugsweise erfolgt die Optimierung des progressiven Brillenglases durch Minimierung einer Zielfunktion der Form:

$$F(\vec{x}) = \sum_{i=1}^{m} \left[ g_{i,\Delta R}(\Delta R_i - \Delta R_{i,Soll})^2 + g_{i,Ast}(Ast_i - Ast_{i,Soll})^2 + \ldots \right]. \qquad (18)$$

In der obigen Formel bezeichnen

$\Delta R_{i,Soll}$  den Sollwert des lokalen Refraktionsfehlers an der $i$ -ten Bewertungs- stelle;

$\Delta R_i$  den tatsächlichen lokalen Refraktionsfehler an der $i$ -ten Bewertungs- stelle;

$Ast_{i,soll}$  den Sollwert der lokalen astigmatischen Abweichung bzw. des lokalen astigmatischen Fehlers an der $i$ - ten Bewertungsstelle;

$Ast_i$  die tatsächliche lokale astigmatische Abweichung an der $i$ - ten Bewer- tungsstelle;

$g_{i,\Delta R}$  die lokale Gewichtung des Refraktionsfehlers an der $i$ - ten Bewer- tungsstelle;

$g_{i,Ast}$  die lokale Gewichtung der astigmatischen Abweichung an der $i$ - ten Bewertungsstelle.

Vorzugsweise erfolgt die Berechnung bzw. Optimierung des Brillenglases ferner unter Berücksichtigung von individuellen Daten des Brillenträgers.

Ferner umfaßt das Herstellungsverfahren:

- Bereitstellen von Flächendaten des berechneten bzw. optimierten Brillenglases; und
- Fertigen des Brillenglases gemäß den bereitgestellten Flächendaten des Brillenglases.

Die Fertigung bzw. Bearbeitung kann mittels numerisch gesteuerten CNC Maschinen; mittels eines Gießverfahrens, eine Kombination der beiden Verfahren oder nach einem anderen geeigneten Verfahren erfolgen.

Ferner wird gemäß der Erfindung eine Vorrichtung zum Herstellen eines individuellen progressiven Brillenglases mit einer variabel einstellbaren vertikalen Position des Fern- und/oder Nahbezugspunkts vorgeschlagen, umfassend:

- Designberechnungsmittel, welche ausgelegt sind, ein bevorzugtes erfindungsgemäßer Verfahren zum Berechnen eines individuelles Brillenglasdesigns durchzuführen;
- Optimierungs- bzw. Berechnungsmittel, welche ausgelegt sind, ein Berechnen bzw. Optimieren des Brillenglases nach dem individuellen Brillenglasdesign durchzuführen.

Insbesondere umfassen die Designberechnungsmittel:

- Startdesingvorgabemittel zum Vorgeben eines Startdesigns, welches eine (individuelle) vorgegebene vertikale Position des Fern- und/oder des Nahbezugspunkts aufweist;
- Berechnungs- und Optimierungsmittel zum Berechnen des individuellen Brillenglasdesigns derart, daß dieses die geforderte, individuelle vertikale Position des Fern- und/oder Nahbezugspunkts aufweist, wobei die Berechnung des individuellen Brillenglasdesigns eine Berechnung einer Sollvorgabe S(y) für die räumliche Verteilung mindestens einer optischen Eigenschaft des individuellen Brillenglases mittels einer Zuordnung $S_{Soll}(y)=S'_{Soll}(y')$ und einer

Transformation $Y: y \mapsto y', y \mapsto y'(y) = y - \Delta y(y)$ einer entsprechenden Sollvorgabe $S'_{Soll}(y')$ des Startdesigns umfaßt, wobei $y'$ die vertikale Koordinate der Sollvorgabe des Startdesigns und $y$ die vertikale Koordinate der transformierten Sollvorgabe des individuellen Brillenglasdesigns bezeichnen.

Vorzugsweise umfassen die Startdesignvorgabemittel Speichermittel zum Speichern des Startdesigns sowie Mittel zum Auslesen des gespeicherten Startdesigns.

Ferner umfaßt die Vorrichtung zum Herstellen eines individuellen Brillenglases mit einer variabel einstellbaren vertikalen Position des Fern- und/oder Nahbezugspunkts vorzugsweise Bearbeitungsmittel zum Fertigbearbeiten des Brillenglases. Die Bearbeitungsmittel können z.B. CNC-Maschinen zur Direktbearbeitung eines Blanks nach den individuellen Optimierungsvorgaben umfassen.

Vorzugsweise umfaßt die Vorrichtung zum Herstellen eines individuellen progressiven Brillenglases ferner Erfassungsmittel zum Erfassen von individuellen Daten des Brillenträgers, welche insbesondere Daten bezüglich der individuell für den Brillenträger erforderlichen dioptrischen Wirkung des Brillenglases beinhalten.

Vorzugsweise weist das fertig bearbeitete Brillenglas eine einfache sphärische oder rotationssymmetrisch asphärische Fläche und eine individuell nach den erfindungsgemäß berechneten individuellen Designvorgaben sowie individuellen Parametern des Brillenträgers optimierte progressive Fläche auf. Vorzugsweise ist die sphärische oder rotationssymmetrisch asphärische Fläche die Vorderfläche (d.h. die objektseitige Fläche) des Brillenglases. Selbstverständlich ist es jedoch möglich die individuell optimierte Fläche auf der Vorderfläche des Brillenglases anzuordnen. Ebenfalls ist es möglich, daß beide Flächen des Brillenglases progressive Flächen sind.

Gemäß der Erfindung wird ferner ein Computerprogrammerzeugnis sowie ein Speichermedium mit darauf gespeichertem Computerprogramm vorgeschlagen, wobei das Computerprogramm ausgelegt ist, wenn geladen und ausgeführt auf einem Computer, ein Verfahren zum Berechnen und Optimieren eines Brillenglases durchzuführen, wobei das Verfahren folgende Schritte umfaßt:

- Berechnen eines individuellen Brillenglasdesigns, welches die geforderte vertikale Position des Fern- und/oder Nahbezugspunkts aufweist, nach einem bevorzugtem erfindungsgemäßen Verfahren zum Berechnen eines individuellen Brillenglasdesigns;
- Berechnen bzw. Optimieren des Brillenglases nach dem individuellen Brillenglasdesign.

Ferner wird eine Verwendung eines nach einem bevorzugten Herstellungsverfahren hergestellten Brillenglases in einer vorgegebenen durchschnittlichen oder individuellen Gebrauchsstellung des Brillenglases vor den Augen eines bestimmten Brillenträgers zur Korrektur einer Fehlsichtigkeit des Brillenträgers vorgeschlagen.

Vorteile der erfindungsgemäßen Verfahren bzw. Vorrichtungen sind insbesondere, daß

- die Differenz $y_F - y_{FD}$ bzw. $y_N - Y_{ND}$ beliebig vorgegeben werden kann. Dementsprechend kann eine beliebige vertikale Positionierung berücksichtigt werden;
- über die Variable $Y$-Transformation die bestehenden Optimierungsvorgaben bzw. die bestehende Designs beliebig gestreckt und gestaucht und somit an die individuelle Gebrauchssituation angepaßt werden können;
- keine Interpolation des Sollvorgaben von verschiedenen Designs (z.B. verschiedenen Startdesigns, welche unterschiedliche Progressionslänge aufweisen) notwendig ist;
- aus einem vorhandenen Start- bzw. Grunddesign Varianten mit unterschiedlichen (längerer oder kürzerer) Progressionszone bzw. Progressionslänge schnell und effizient erzeugt werden können;
- wenn die Objektabstandfläche automatisch angepaßt wird, es möglich ist, eine automatische Anpassung des Sollbrechwertverlaufs vorzunehmen.

Bevorzugte Ausführungsformen der Erfindung werden nachfolgend unter Bezugnahme auf die Figuren beispielhaft beschreiben.

Es zeigen:

Fig. 1    zwei Funktionen $f(y)$ gemäß einer bevorzugten Ausführungsform, wobei Fig.1a) eine Stauchung und Fig.1b) eine Streckung repräsentiert;
Fig. 2    Beispiel für eine Stauchungstransformation;
Fig. 3    einen beispielhaften Verlauf der Hauptlinie eines progressiven Brillengla- ses;
Fig. 4    ein beispielhaftes Startdesign;
Fig. 5    ein beispielhaftes individuelles Brillenglasdesign;
Fig. 6    eine beispielhafte Eingabe- bzw. Benutzeroberfläche zur Eingabe bzw. Vorgabe von gewünschten Randbedingungen und/oder Transformationen und/oder Positionen von Bezugspunkten;
Fig.7    eine schematische Darstellung eines progressiven Brillenglases in Ge- brauchsstellung;

Fig. 7a eines konventionellen progressiven Brilellenglases;
Fig. 7b eines gemäß einem bevorzugten Verfahren berechneten bzw. optimierten Brillenglases;
Fig. 8a    Brechwertisolinien eines Startdesigns;
Fig. 8b    Brechwertisolinien eines daraus abgeleiteten individuellen Designs;
Fig. 9a    Isoastigmatismuslininien des in Fig. 8a gezeigten Grunddesigns;
Fig. 9b    Isoastigmatismuslininien des in Fig. 8b gezeigten individuellen Designs.

Die vorliegende Erfindung bietet die Möglichkeit zum einen in technologisch einfacher und damit kostengünstiger Weise zum anderen in sehr kurzer Zeit ein individuelles Brillenglasdesign, insbesondere für ein progressives Brillenglas zu bestimmen bzw. bereitzustellen. Insbesondere kann damit ein Design für ein progressives Brillenglas mit variabel einstellbarer, individueller vertikaler Position eines Fern- und/oder Nahbezugspunkts bereitgestellt werden. Dabei werden insbesondere aus nur einem vorgegebenen Brillenglasdesign Varianten längerer und kürzerer Progression erzeugt werden und diese können zudem beliebig in vertikaler Richtung positioniert werden, ohne dass die Designcharakteristik und die guten Abbildungseigenschaften des Grunddesigns verloren gehen.

Nachdem eine optimale, individuelle Position des Fern- und/oder Nahbezugspunkts ermittelt wurde, wird ein individuelles Design ermittelt, welches die individuell ermittelten Fern- und Nahbezugspunkte aufweist. Die Positionen der individuell ermittelten Fern- und/oder Nahbezugspunkte gehen dabei als Designparameter bei der Berechnung und Optimierung des individuellen Brillenglasdesigns ein. Die individuell festlegbaren Fern- und Nahbezugspunkte werden daher auch nachfolgend jeweils als Designpunkt "Ferne" bzw. Designpunkt "Nähe" oder auch als Ferndesignpunkt bzw. Nahdesignpunkt bezeichnet.

Vorzugsweise werden Sollvorgaben für ein Brillenglasdesign aus bereits hinterlegten bzw. vorhandenen Sollvorgaben transformiert, d.h. die neuen Sollvorgaben an der Stelle y gehen aus den alten Sollvorgaben an der Stelle $y'$ hervor, wobei insbesondere $y' = y - \Delta y(y)$ ist.

In einer bevorzugten Ausführungsform wird $\Delta y(y) = y_0$ verwendet. Weicht z.B. nur die Hauptblickrichtung eines Brillenträgers bei seiner Haupttätigkeit in der Ferne in vertikaler Richtung vom Fernbezugspunkt des Glas ab, dann kann das Brillenglasdesign der Anwendung des Brillenglasträgers näher kommen, wenn die vertikale Positionierung der Sollvorgaben variabel ist bzw. angepasst werden kann, d.h. $\Delta y(y) = y_0$ ist, wobei $y_0$ eine Konstante ist. Ein positiver Wert von $y_0$ bedeutet vorzugsweise, dass die neuen Sollvorgaben im Vergleich zu den alten Referenzvorgaben nach oben versetzt erscheinen.

In einer weiteren bevorzugten Ausführungsform wird $\Delta y(y) = \alpha y + y_0$ verwendet. Dies ist besonders dann vorteilhaft, wenn außer der vertikalen Positionierung die Sollvorgaben vertikal gestreckt oder gestaucht werden sollen. Insbesondere kann mit einer Konstante $\alpha > 0$ das Design gestreckt und mit $\alpha < 0$ gestaucht werden.

In einer weiteren bevorzugten Ausführungsform wird $\Delta y(y) = f(y) + y_0$ verwendet. Insbesondere steht dabei ein positiver Wert der Ableitung f'(y) für ein lokale Strekkung, ein negativer Wert für eine lokale Stauchung. Vorzugsweise ist $f(y)$ monoton, und ebenso ist vorzugsweise $|f'(y)|$ in der Progressionszone höher als im Nah- oder Fernteil bzw. Nah- oder Fernbereich, damit diese stärker vom Strecken oder Stauchen betroffen ist.

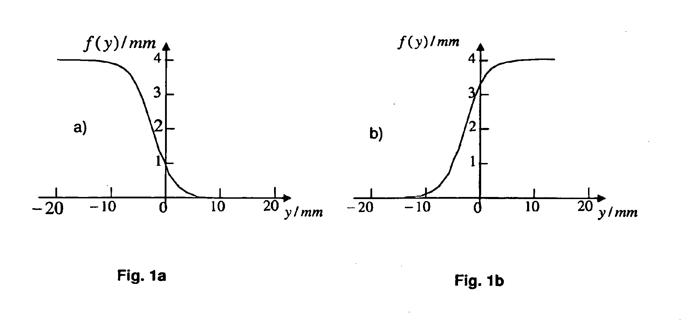

**Fig. 1** zeigt zwei Funktionen $f(y)$ gemäß einer bevorzugten Ausführungsform, wobei Fig.1a) eine Stauchung und Fig.1b) eine Streckung repräsentiert.

Im folgenden wird ein nicht beschränkendes, beispielhaftes Verfahren in bevorzugten Ausführungsformen der Erfindung beschrieben.

Dabei wird in einer ersten bevorzugten Ausführungsform des beispielhaften Verfahrens die Lage von Fern- und Nahdesignpunkt oder deren Abweichungen zu den Bezugspunkten des Grunddesigns im Brillenglas erfasst bzw. vorgegeben. Ferner umfaßt das Verfahren in dieser ersten Ausführungsform ein Bestimmen bzw. Ermitteln bzw. Berechnen einer einfachen und flexiblen Transformation für das Strecken bzw. Stauchen aus den Differenzen der Bezugspunkte bzw. Bezugspunktpositionen. Unter einem Fern- bzw. Nahdesignpunkt wird im Sinne der Beschreibung insbesondere der Fern- bzw. Nahbezugspunkt des Brillenglases bzw. Brillenglasdesigns verstanden.

In einer zweiten bevorzugten Ausführungsform umfaßt das beispielhafte Verfahren alternativ oder zusätzlich ein Vorgeben der Transformation für das Strecken bzw. Stauchen. Damit werden dann vorzugsweise die Lage der Bezugspunkte und der Übergang explizit vorgegeben. Vorzugsweise wird dabei eine Iteration durchgeführt, um die Bezugspunkte an die gewünschten Hauptdurchblickstellen anzupassen.

Vorzugsweise umfaßt das beispielhafte Verfahren ein Anwenden der Transformation auf die Objektabstandsfunktion bei der Gebrauchstellungsberechnung. Die Koeffizienten der Objektabstandsfunktion bleiben dadurch vorzugsweise erhalten. Alternativ oder zusätzlich umfaßt das Verfahren ein vorzugsweise automatisches Anpassen (Strecken und/oder Stauchen) des reziproken Objektabstandes entlang der Hauptblicklinie $S_{1HBL}(y)$ z.B. mittels einer zweidimensionalen Newtoniteration.

Vorzugsweise umfaßt das beispielhafte Verfahren ein Bestimmen bzw. Ermitteln bzw. Berechnen bzw. Transformieren aller Optimierungsvorgaben durch die Y-Transformation der Bewertungsstellen. Die Sollwertfunktionen (für Sollastigmatismus, Sollbrechwert, Gewichtung usw.) bleiben dabei vorzugsweise original erhalten. Vorzugsweise wird der Sollastigmatismus in geeigneter Weise, insbesondere nach dem Verhältnis $l/l_D$ skaliert, wobei $l_D$ die Progressionslänge des Startdesigns und $l$ die Progressionslänge des individuellen Glases darstellt. Damit wird in besonders vorteilhafter Weise dem Satz von Minkwitz Rechnung getragen, gemäß dem sich bei einer Änderung der Progressionszonenlänge auch der Anstieg des Astigmatismus in horizontaler Richtung ändert. In einer bevorzugten Ausführungsform werden die Werte des Sollastigmatismus direkt umskaliert. In einer anderen bevorzugten Ausführungsform werden die Koeffizienten der astigmatismusbeschreibenden Funktionen angeglichen.

Eine Optimierung des Brillenglases auf Basis des ermittelten Brillenglasdesigns kann dann mit verschiedenen, auch bereits bekannten und bewährten Softwaretool erfolgen.

Im folgenden werden weitere bevorzugte Aspekte in Bezug auf die Transformation bzw. Transformationsfunktion gemäß bevorzugter Ausführungsformen der vorliegenden Erfindung dargestellt. Vorzugsweise wird als Funktion f (y) eine Doppelasymptote nach

$$f(y) = b + \frac{a}{(1 + e^{c(y+d)})^m} \qquad (19)$$

verwendet. Dabei ergibt sich für eine bevorzugte Transformationsfunktion:

$$y' = y - \Delta y(y) = y - (y_0 + (b + \frac{a}{(1 + e^{c(y+d)})^m})) = y - y_0 - f(y) \qquad (20)$$

Dabei ist $y$ die Koordinate im neuen Brillenglasdesign, der ein bestimmter Wert der Sollvorgaben zugeordnet werden soll, und $y'$ ist dann das Argument, für das die unveränderte Sollvorgabenfunktion auszuwerten ist. Je größer der Betrag des Koeffizienten c, desto schneller der Übergang von der Nahteilasymptote zur Fernteilasymptote. Für $m=1$ ist die Funktion punktsymmetrisch zu $y=-d$, d.h. es gilt die Symmetrieeigenschaft $f(-d- y)-f(-d)=-(f(-d+y)-f(-d))$.

Wählt man c negativ, dann bedeutet:

$b$ = Wert für kleine $y$ (Nahteilasymptote)
$b + a$ = Wert für große $y$ (Fernteilasymptote)

Im oberen Teil des Brillenglases erhält man also eine konstante $y$ -Verschiebung von $a + b$ und im unteren Bereich ebenfalls eine konstante $y$ -Verschiebung aber vom Wert $b$. Den gleichmäßigen weichen Übergang steuern die weiteren Koeffizienten $c,d$ und $m$. Durch die geeignete Wahl des Koeffizienten $m$ kann der Übergang von der Fernteil-Asymptote zur Nahteil-Asymptote vorgegeben werden. Zur Erhaltung der Designcharakteristik, speziell bei Universalgläsern, ist hier ein Wert von $m \approx 1$ vorteilhaft.

Berechnung der Koeffizienten aus den Vorgaben.

| | |
|---|---|
| $y_F$ | Designpunkt Ferne des individuellen Brillenglases |
| $y_N$ | Designpunkt Nähe des individuellen Brillenglases |
| $y_{FD}$ | Bezugspunkt Ferne des Startdesigns |
| $Y_{ND}$ | Bezugspunkt Nähe des Startdesigns |
| $l_D = y_{FD} - y_{ND}$ | Progressionslänge des Startdesigns |
| $l = y_F - y_N$ | Progressionslänge des individuellen Brillenglases |

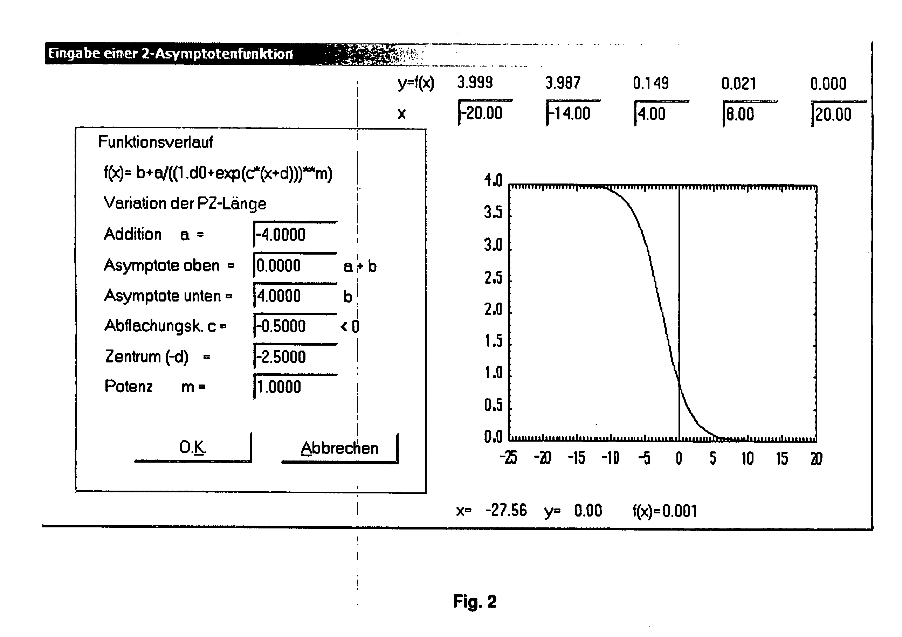

Ein Beispiel für eine Streckungstransformation mit gegebenen Koeffizienten ist in **Fig. 2** dargestellt. Die Form der Streckungstransformation sowie deren Koeffizienten sind direkt der **Fig. 2** zu entnehmen.

Der Koeffizient m steuert die Symmetrie, in Fig. 2 ist $m=1$.

Für den Fall, dass eine direkte Vorgabe der Transformation erfolgt, werden die Koeffizienten $a,b,c,d,m$ der Transformation einfach vorgegeben, und dann gemäß einer der Transformationen gemäß einer der Gleichungen (1) bis (7), insbesondere Gleichung (1) die Bezugspunkte daraus ermittelt.

Für den Fall des Vorgebens der Lage von Fern- und Nahdesignpunkt oder deren Abweichung zu den Bezugspunkten des Grunddesigns können zur Bestimmung der Transformationskoeffizienten unterschiedliche Möglichkeiten genutzt werden. Zwei bevorzugte Variante werden im folgenden kurz dargestellt:

a) $m = 1$, $d = -\dfrac{y_F - y_N}{2}$ ; Transformation symmetrisch

In diesem Fall wird vorzugsweise ein Wert $\varepsilon$ vorgegeben, der einen Faktor $1+\varepsilon$ bestimmt, um wieviel der Abstand a zwischen der Fern- und Nahteilasymptote die Änderung der Progressionslänge überragt (typischer Wert ist z.B. $\varepsilon = 0{,}01$). Dann werden die verbleibenden Koeffizienten vorzugsweise nach

$$c = \frac{2\ln\left(\dfrac{\varepsilon}{2+\varepsilon}\right)}{l}$$

$$f_M = 1 + e^{-\frac{cl}{2}} \quad ; \quad f_P = 1 + e^{\frac{cl}{2}}$$

$$a = \frac{l - l_D}{f_P^{-1} - f_M^{-1}} \tag{21}$$

$$b = \frac{f_M(l - l_D)}{f_P - f_M}$$

$$y_0 = y_F - y_{FD}$$

ermittelt.
b) $m$ und $d$ beliebig vorgegeben.

In diesem Fall kann $c$ auch vorgegeben werden, und $a$ und $b$ werden vorzugsweise numerisch über eine Newton-Iteration so zu bestimmen, dass mit $y_0 = y_F - y_{FD}$ eine der Transformationen gemäß der Gleichung:

$$y' = y - \Delta y(y) = y - y_0 - f(y) \tag{22},$$

wobei $f(y)$ eine Funktion gemäß einer der Gleichungen (1) bis (7), insbesondere Gleichung (1), für Nah- und Fernbezugspunkt erfüllt ist, also:

$$y_{FD} = y_F - \Delta y(y_F) \qquad \text{und} \qquad y_{ND} = y_N - \Delta y(y_N) \tag{23}$$

Im folgenden wird das vorzugsweise automatisches Anpassen (Strecken und/oder Stauchen) des reziproken Objektabstandes entlang der Hauptblicklinie $S_{1HBL}(y) = S_1(x = x_0(y), y)$ gemäß bevorzugter Ausführungsformen der Erfindung näher erläutert. Insbesondere gilt hierbei vorzugsweise $S_1(x=x_0(y),y)=S_1(u_0,y)$, wobei $x_0(y)$ die horizontale Koordinate eines Punktes auf der Hauptlinie bezeichnet.
Grundlage bilden vorzugsweise folgende Gauss'sche Abbildungsgleichungen:

$$\frac{1}{s'} = \frac{1}{s} + \frac{1}{f'}$$

$$S_1' = S_1 + F \tag{24}$$

$$F = S_1' - S_1$$

Beim Blick vom Fernteil des Brillenglas entlang der Hauptblicklinie in den Nahteil gilt dann näherungsweise für jeden Punkt:

$$F(u_0, y) = S_1'(u_0, y) - S_1(u_0, y) \tag{25}$$

mit

$F$ Brechwert des Brillenglases
$S_1$ reziproke Objektentfernung
$S'_1$ reziproke bildseitige Schnittweite, ist im Normalfall = 0 bzw. - *Akk*(*y*) (Akkommodation des Auges).

Damit nun auch der Brechwertverlauf im Brillenglas entsprechend der oben beschriebenen Steckung oder Stauchung vorzugsweise automatisch während der Glasoptimierung an die neue Lage der Bezugspunkte im Brillenglas angepasst wird, wird vorzugsweise zusätzlich noch die Funktion $S_1(u_0, y)$ entsprechend abgeändert.

Vorzugsweise wird $S_1(u_0, y)$ nicht frei vorgegeben, sondern mittels einer geeigneten Funktion, um die Designcharakteristik beizubehalten. Es ist vorteilhaft, die reziproke Objektentfernung beim Ausgangsglas (Designvorgabe) ebenfalls als Doppelasymptotenfunktion der Form:

$$S_1(u_0, y) = b_s + \frac{a_s}{(1 + e^{c_s(y - y_0 + d_s)})^{m_s}} \tag{26}$$

zu beschreiben und nur die Koeffizienten $c_s$ und $d_s$ über eine einfache Newtoniteration (z.B. nach dem Lehrbuch "Numerical Recipes", ISBN 052138330) so zu bestimmen, dass mit den geänderten Koeffizienten in den neuen Bezugspunkten die Werte von $S_1$ exakt mit denen der alten Koeffizienten in den ursprünglichen Bezugspunkten übereinstimmen.

Dieses Vorgehen hat gegenüber der Anwendung der Transformation auf die Objektabstandsfunktion bei der Gebrauchstellungsberechnung (mit beibehaltenen Koeffizienten der Objektabstandsfunktion) den Vorteil, dass mit der abgeänderten Objektabstandsfunktion alle außerhalb des Optimierungsprogramms schon bestehenden Berechnungs- und Auswertungsprogramme, die auf die Objektabstandsfunktion zugreifen, unverändert weiter verwendet werden können (z.B. Sollwerteberechnung für die Fertigung, Soll-Ist-Vergleiche u.s.w).

Weitere Merkmale und Vorteile bevorzugter Ausführungsform der vorliegenden Erfindung können den weiteren beigefügten Zeichnungen entnommen werden.

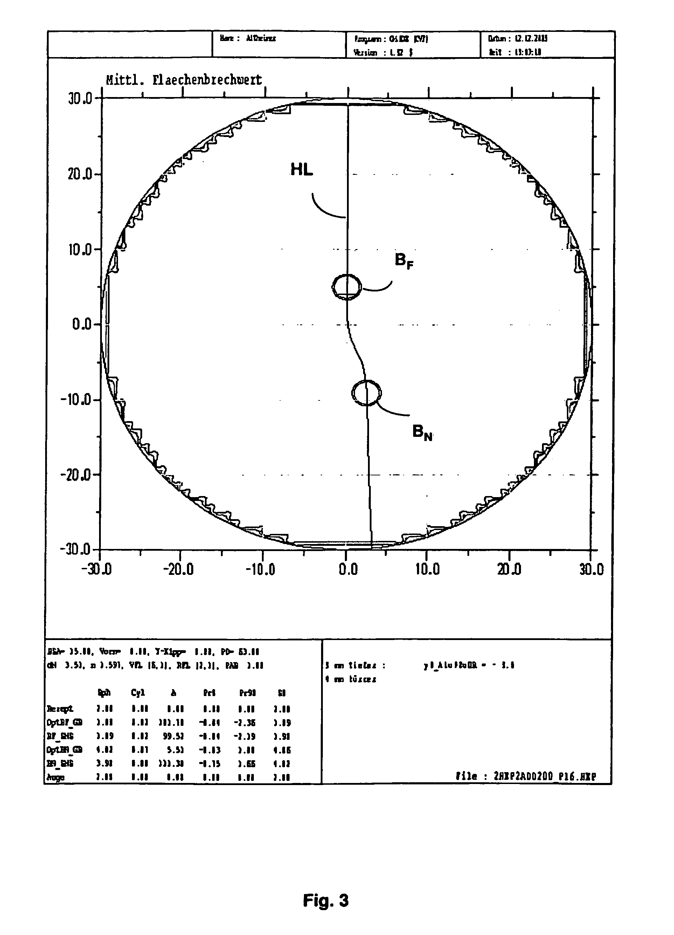

Dabei zeigt **Fig. 3** einen Verlauf der Hauptlinie HL für ein beispielhaftes Brillenglas. Dabei sind außerdem der Fern- und der Nahbezugspunkt jeweils mit einem Kreis markiert. Das Zeichen $B_F$ bezeichnet den Fernbezugspunkt, das Zeichen $B_F$ bezeichnet den Nahbezugspunkt.

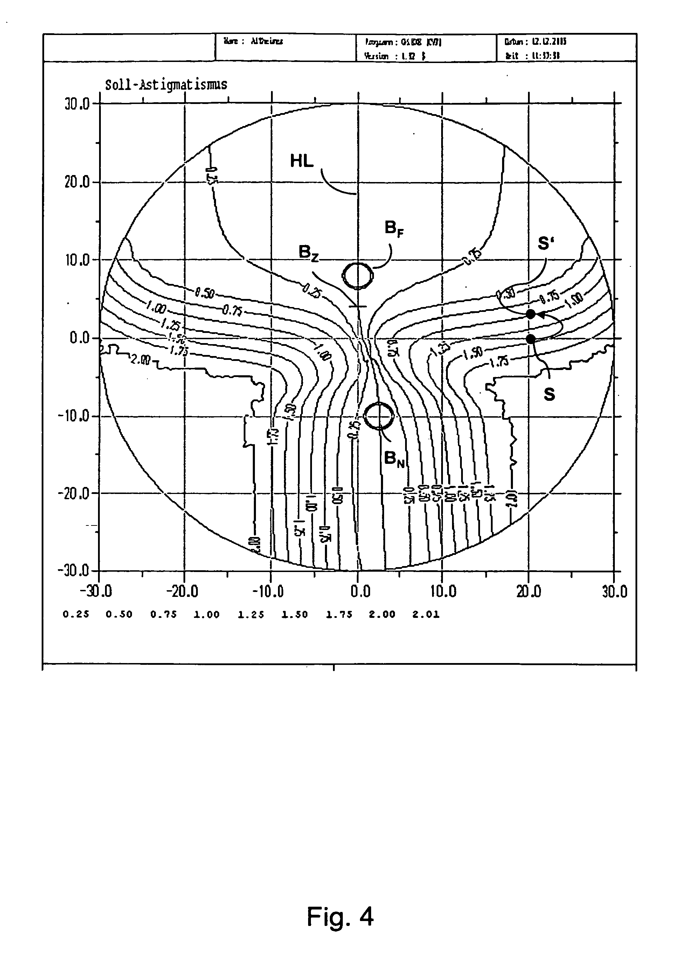

**Fig. 4** zeigt ein beispielhaftes Startdesign (auch Grunddesign bzw. Ausgangsdesign genannt) für ein Brillenglas mit Wirkungen:sphärisch (Sph) = 0,0 dpt,
astigmatisch (Cyl) = 0,0 dpt;
Achse (A) = 0°;

prismatisch (Pr) = 0 cm/m;

Basis Prisma = 0°;

Addition (Add) = 2,0 dpt.

Dabei sind Isoastigmatismus-Werte für den Soll-Astigmatismus gemäß dem vorgegebenen Startdesign gezeigt.

Der Fern- ($B_F$) und der Nahbezugspunkt ($B_N$) für dieses Design sind jeweils mit einem Kreis gekennzeichnet. Das Zeichen $B_z$ kennzeichnet den Anpaß- bzw. Zentrierpunkt.

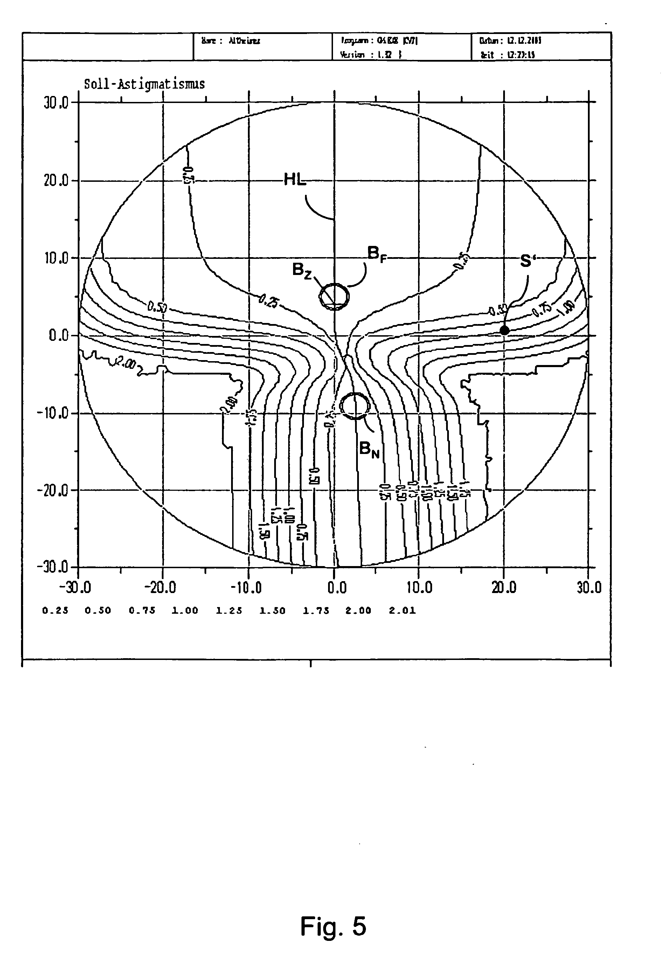

In **Fig. 5** ist analog zu Fig. 4 ein beispielhaftes Brillenglasdesign gezeigt, das nach einem Verfahren gemäß einer bevorzugten Ausführungsform der vorliegenden Erfindung aus dem Startdesign von Fig. 4 ermittelt wurde. Die Transformation wurde dabei insbesondere gemäß der Transformation

$$y' = y - \Delta y(y) = y - (y_0 + (b + \frac{a}{(1 + e^{c(y+d)})^m})), \qquad (27)$$

welche beispielhaft in Fig. 2 dargestellt ist, durchgeführt. Diese Transformation umfaßt dabei zumindest teilweise eine Stauchung derart, dass die Progressionslänge bzw. Kanallänge verkürzt wurde.

In Fig. 4 und 5 kennzeichnet der Punkt S einen Punkt des Startdesigns. Der Punkt S wird - wie oben beschrieben - in dem Punkt S' des abgeleiteten Designs transformiert.

Vorzugsweise ist die Progressionszonenlänge zumindest in einem Bereich von **14** bis **18** mm variierbar.

Vorzugsweise wird ferner ein Optimierungstool zur Bestimmung bzw. Bereitstellung der Sollwerte und Modelle bereitgestellt, welche ein Überprüfungsmodul zur Prüfung der Plausibilität der Bestellparameter umfaßt.

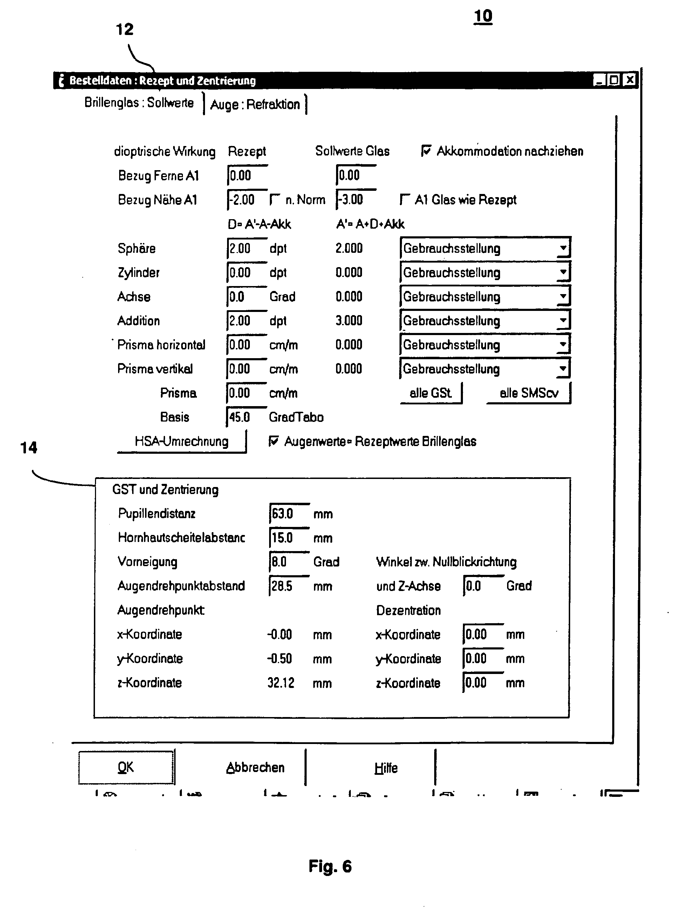

**Fig. 6** zeigt eine beispielhafte Eingabe- bzw. Benutzeroberfläche **10** zur Eingabe bzw. Vorgabe von gewünschten Randbedingungen und/oder Transformationen und/oder Positionen von Bezugspunkten.

Die Eingabe- bzw. Benutzeroberfläche **10** weist einen ersten Abschnitt **12** zur Eingabe von Sollwerte der sphärischen, astigmatischen und prismatischen Wirkung des Brillenglases (Sphäre, Zylinder, Achse, Addition, Prisma horizontal, Prisma vertikal, Prisma und Basis) auf, welche z.B. mittels Refraktionsbestimmung ermittelt werden. Alle Daten beziehen sind vorzugsweise auf Daten in Gebrauchsstellung des Brillenglases.

Ferner umfaßt die Eingabe- bzw. Benutzeroberfläche **10** einen Abschnitt **14** zur Eingabe von Fassungs- und Zentriervorgaben (Pupillendistanz, Hornhautscheitelabstand, Augendrehpunktabstand, Augendrehpunkt (x-, y- und z-Koordinaten), Winkel zwischen der Nullblickrichtung und der Z-Achse, Dezentration ((x-, y- und z-Koordinaten), etc.).

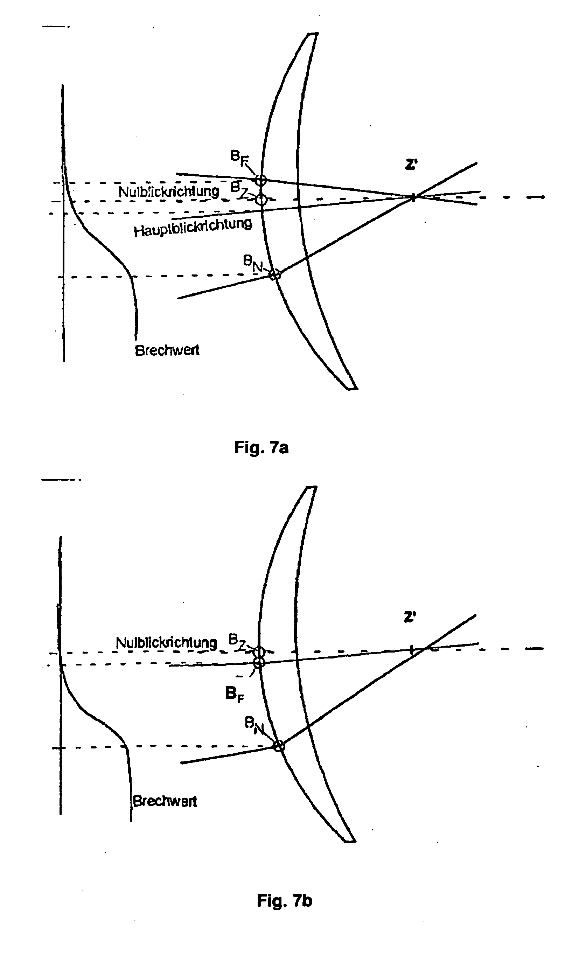

**Figuren 7a und 7b** zeigt einen beispielhaften Querschnitt eines Brillenglases in Gebrauchsstellung, wobei der Zentrierpunkt in Nullblickrichtung des Brillenträgers vor der Pupillenmitte angeordnet ist. Das Brillenglas hat eine sphärische Wirkung von 0,00 dpt und eine Addition von 2,00 dpt. Ebenfalls ist in Fig. 7a und 7b der jeweilige Brechwertverlauf entlang der Hauptlinie des Brillenglases gezeigt.

Fig. 7a zeigt ein Brillenglas gemäß dem Stand der Technik, Fig. 7b ein Brillenglas mit individuellen Position des Fern- und des Nahbezugspunkts. Der Fernbezugspunkt $B_F$ des in Fig. 7b gezeigten Brillenglases befindet sich 5 mm tiefer als der Fernbezugspunkt $B_F$ des in Fig. 7a gezeigten Brillenglases. Mit Z' wird der Augendrehpunkt bezeichnet.

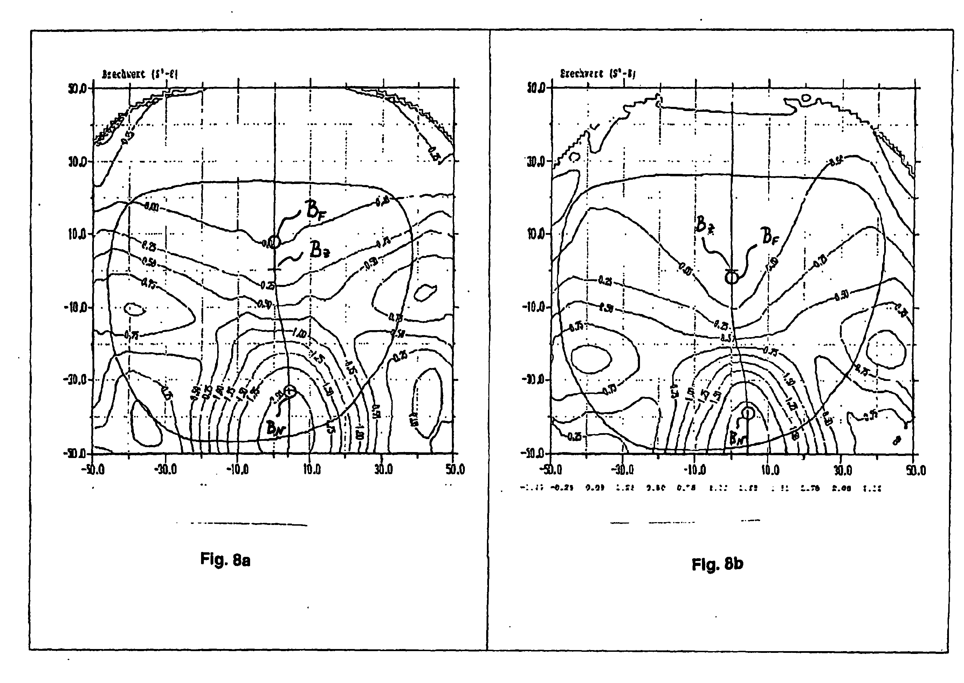

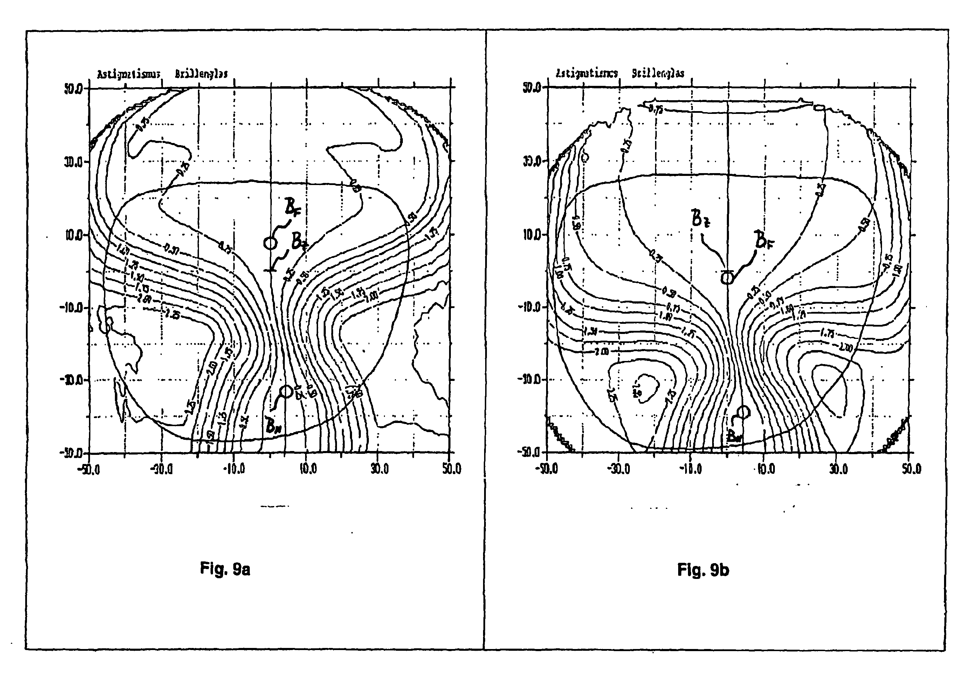

Analog zu den Figuren 4 und 5 sind in **Fig. 8** und **Fig. 9** weitere Ausführungsbeispiele für Transformationen gemäß bevorzugter Ausführungsformen der vorliegenden Erfindung anhand von Isoastigmatismusdarstellungen (Fig. 9) bzw. Isolinien des Brechwerts (Fig. 8) eines Grunddesigns (Fig. 8a, 9a) und eines daraus abgeleiteten individuellen Designs (Fig. 8b, 9b) gezeigt.

Das Koordinatensystem in Figuren 3 bis 5 und 8 und 9 ist das oben definierte Koordinatensystem, wobei der Koordinatenmittelpunkt mit dem geometrischen Mittelpunkt des rohrunden Brillenglases zusammenfällt.

Weitere Ausführungsbeispiele, Vorteile und Eigenschaften der Erfindung ergeben sich aus den beigefügten exemplarischen und nicht beschränkenden Beschreibungsseiten.

Nachfolgend werden die individuell festlegbaren Fern- und Nahbezugspunkte jeweils als Designpunkt "Ferne" bzw. Designpunkt "Nähe" bezeichnet. Insbesondere entspricht der individuell ermittelte Fernbezugspunkt bzw. Designpunkt "Ferne" dem Punkt, durch den der Brillenglasträger beim Blick in die Ferne optimal korrigiert ist und welcher seinen persönlichen Sehgewohnheiten entspricht. Der individuell ermittelte Nahbezugpunkt bzw. Designpunkt "Nähe" entspricht dem Punkt, durch den der Brillenglasträger bei Nahsehaufgaben optimal korrigiert ist und die für ihn angenehme Blicksenkung einnehmen kann.

Es zeigen:

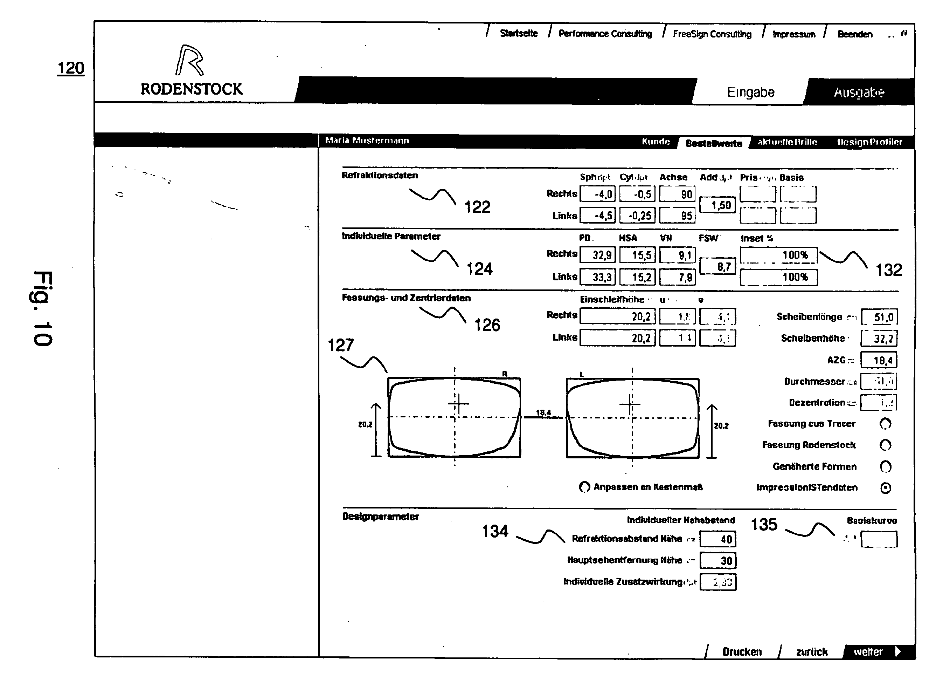

Fig. 10          Beispiel einer Maske bzw. graphischen Benutzerschnittstelle zur Eingabe von individuellen Kundenparametern;

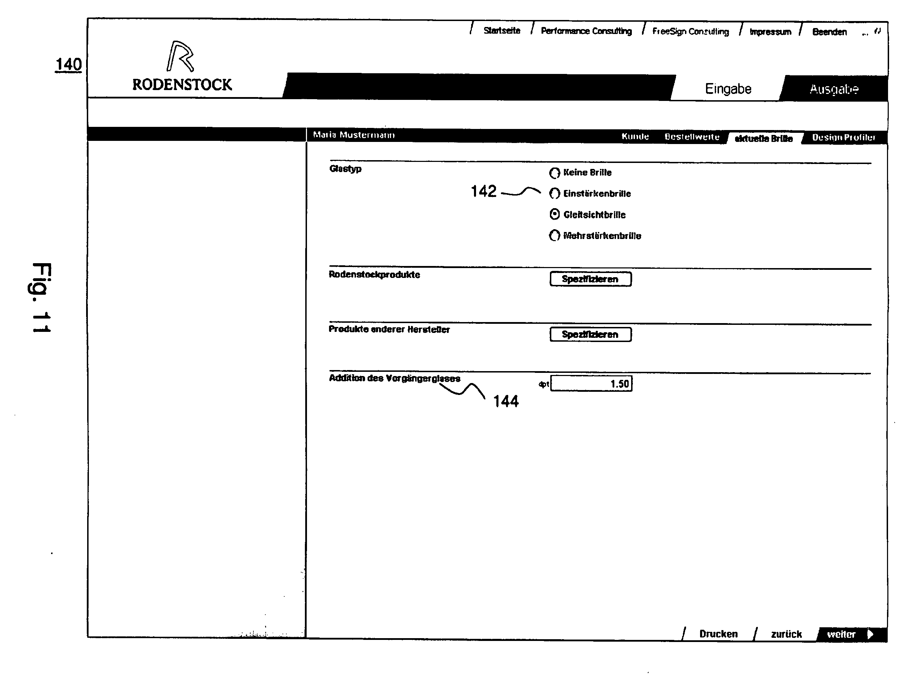

Fig. 11    Beispiel einer Maske bzw. graphischen Benutzerschnittstelle zur Eingabe von Daten bezüglich der aktuellen Brille;

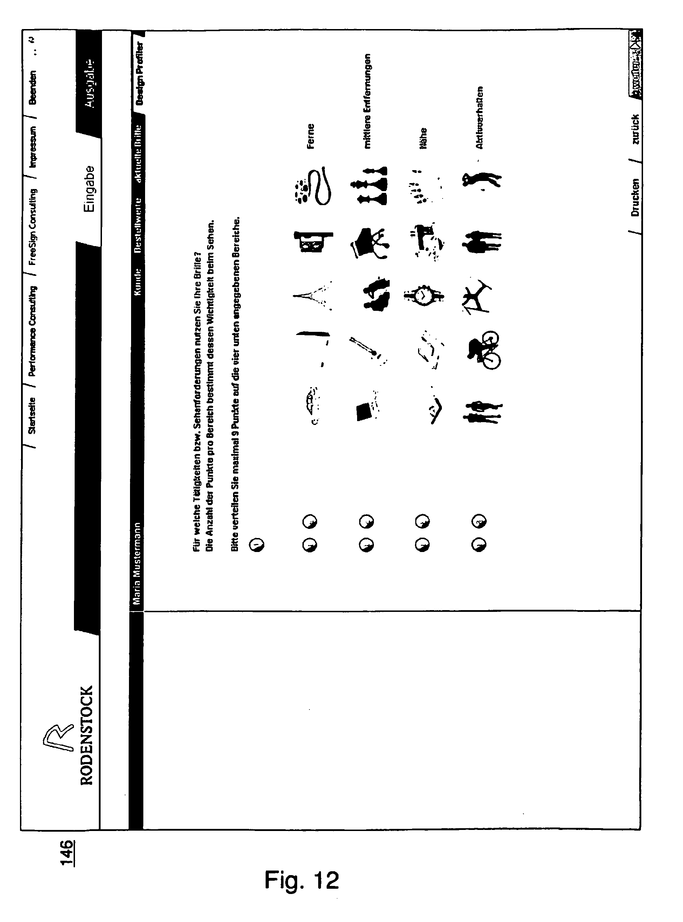

Fig. 12    Beispiel einer Maske bzw. graphischen Benutzerschnittstelle zur Eingabe von Daten bezüglich der individuellen Präferenzen bzw. Gewichtungen der Sehbereiche;

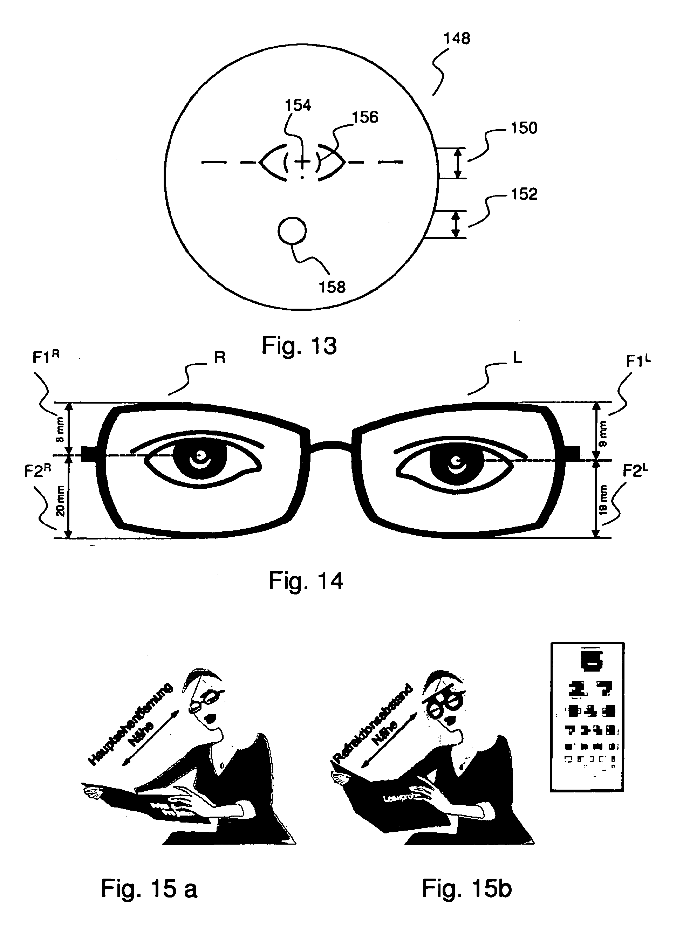

Fig. 13    Eine schematische Darstellung der Lage der Fern- und Nahbezugspunkte eines individuellen Brillenglasdesigns;

Fig. 14    Ein Beispiel unterschiedlicher Durchblickshöhen der beiden Augen;

Fig. 15    Eine schematische Darstellung der Hauptsehentfernung Nähe (Fig. 15a) und Refraktionsabstand Nähe (Fig. 15b);

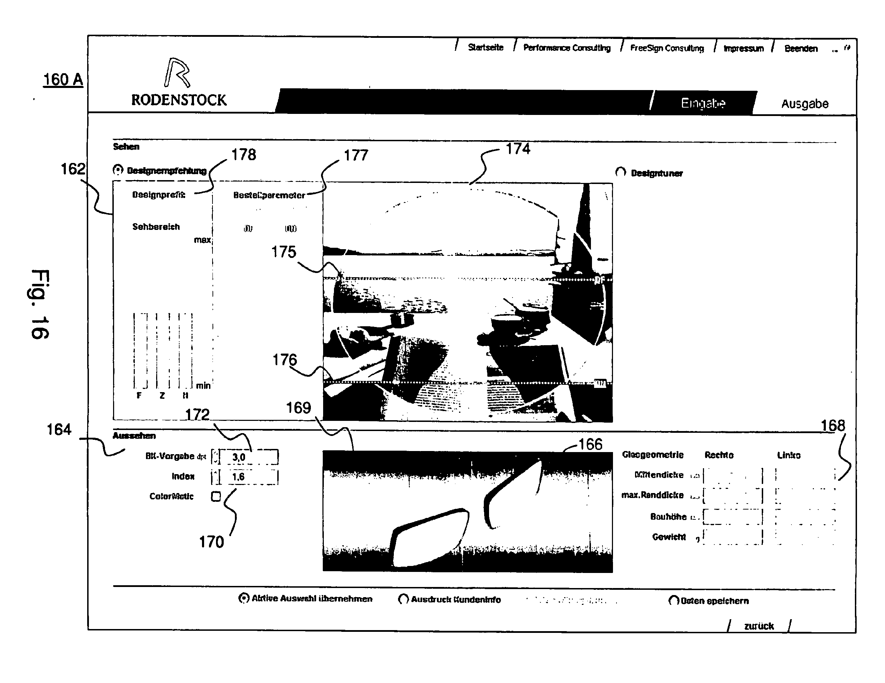

Fig. 16    Ein Beispiel einer graphischen Benutzerschnittstelle zur Ergebnisdarstel- lung;

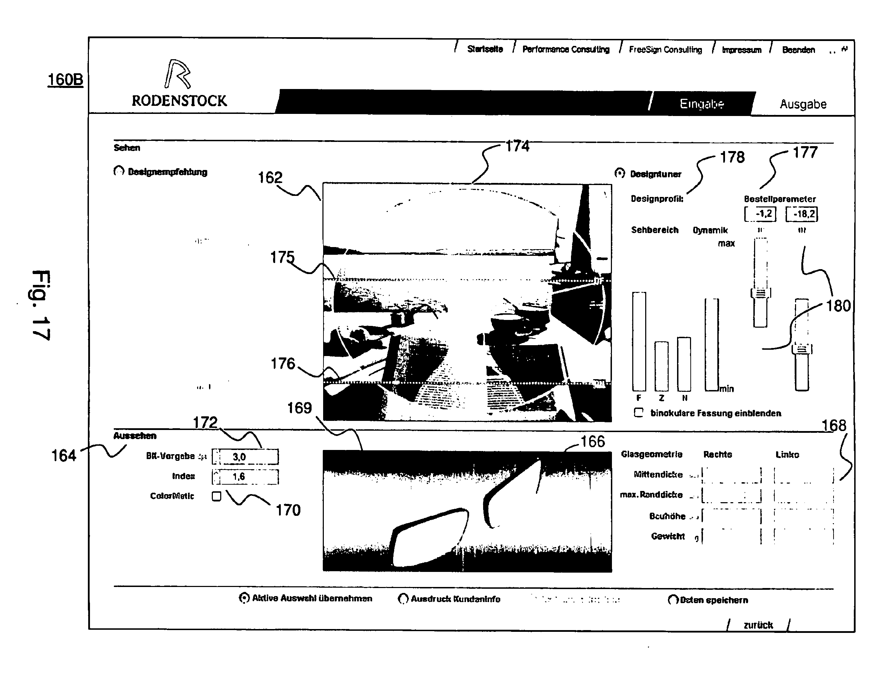

Fig. 17    Ein Beispiel einer graphischen Benutzerschnittstelle zur Ergebnisdarstel- lung und Designänderung bzw. -tuning;

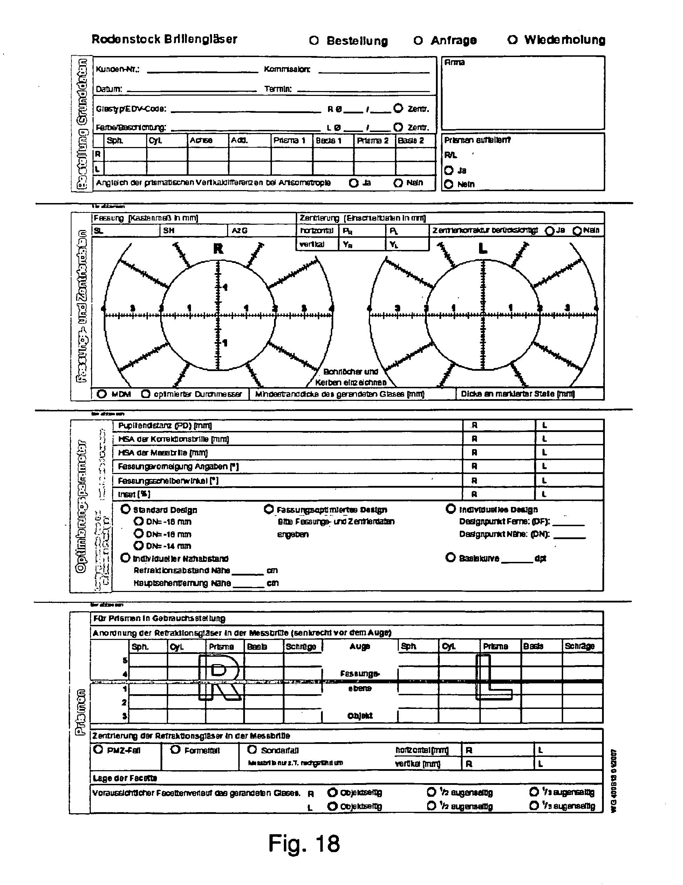

Fig. 18    Ein Beispiel eines Bestellformulars;

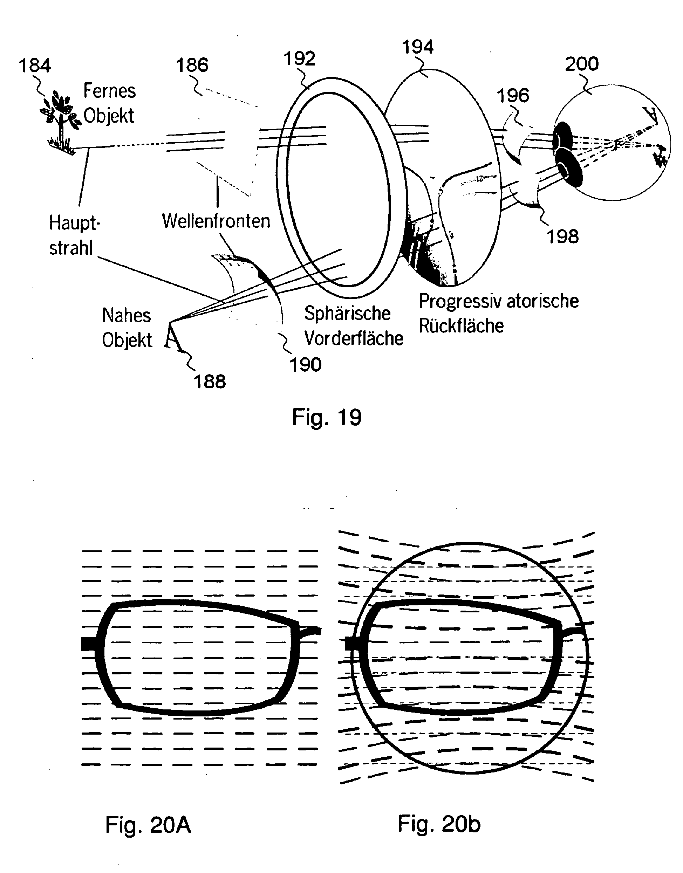

Fig. 19    Eine schematische Darstellung des physiologischen und physikalischen Modells eines Brillenglases in einer vorgegebenen Gebrauchsstellung;

Fig. 20 a, b    Schematische Darstellungen der Achslagen in einem Brillenglas ohne Berücksichtigung der Listing'schen Regel (Fig. 20a) und mit Berücksichti- gung der Listing'schen Regel (Fig. 20b) ;

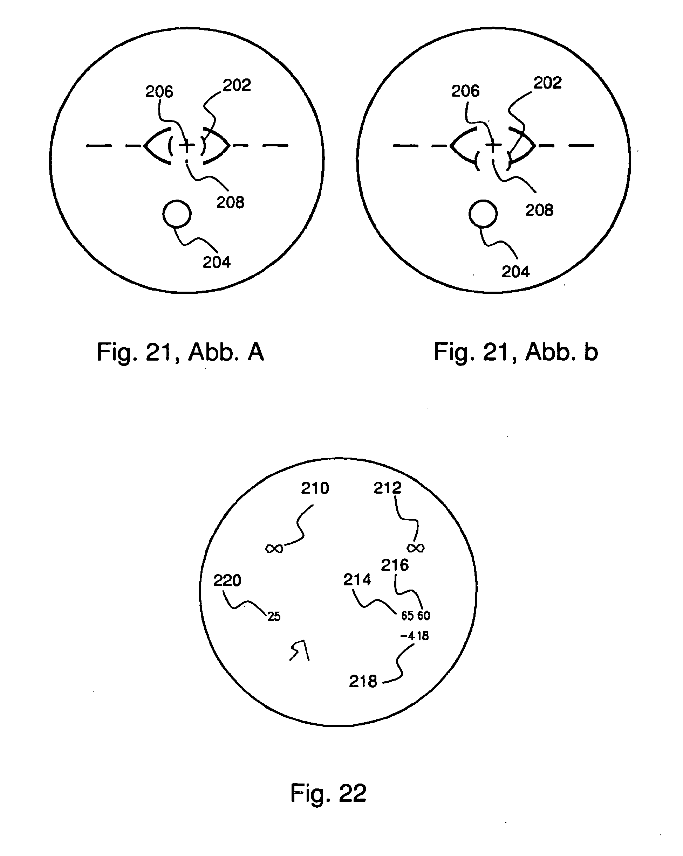

Fig. 21 a,b    Zwei Beispiele nicht permanenter Stempelungen individuell berechneten progressiven Brillengläsern;

Fig. 22.    Ein Beispiel der permanenten Gravur eines linken individuell optimierten progressiven Brillenglases;

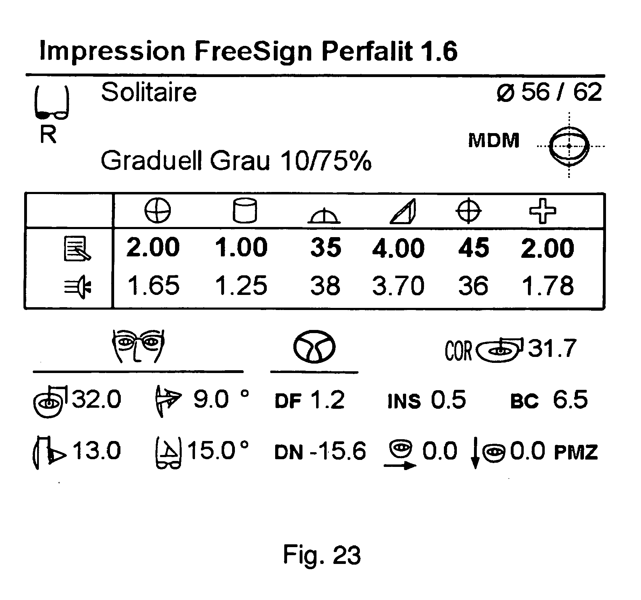

Fig. 23    Ein Beispiel einer Glastüte für ein individuell optimiertes Brillenglases;

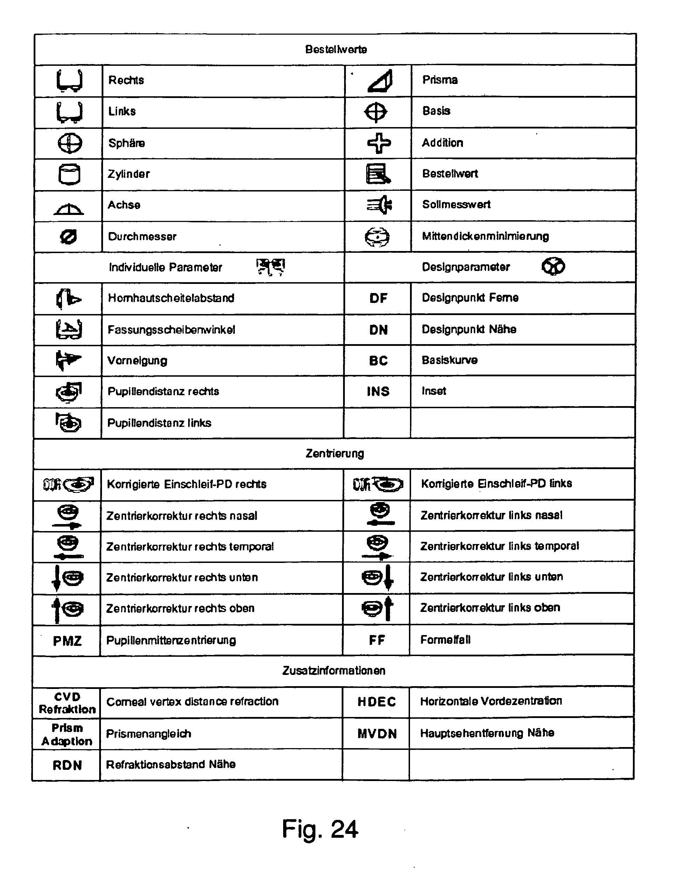

Fig. 24    Legende der auf der Glastüte verwendeten Piktogramme;

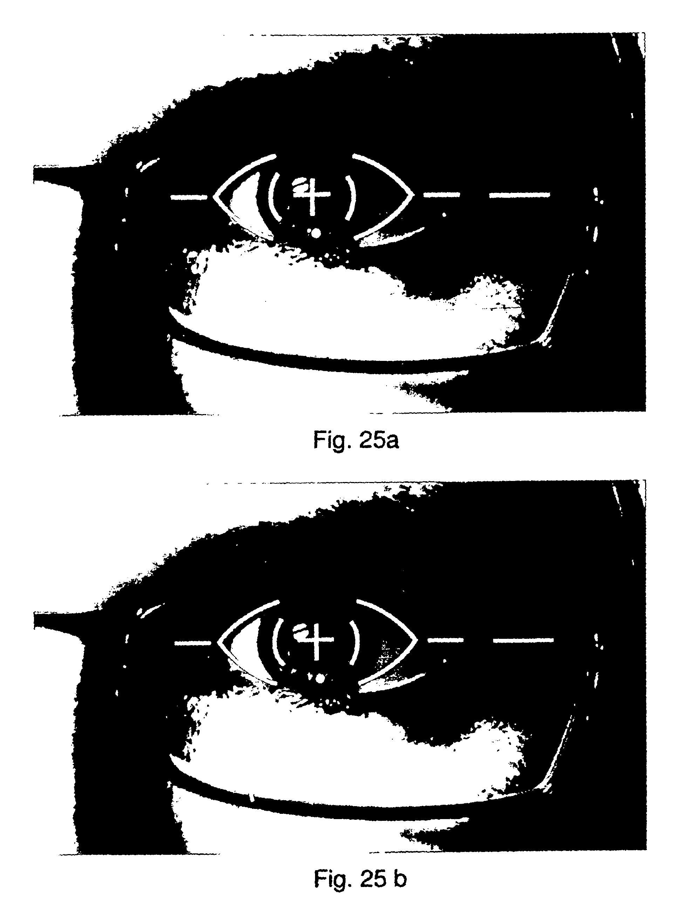

Fig. 25 a,b    Beispiele der Zentrierung eines individuellen Brillenglases (Fig. 25a) oder eines Standardbrillenglases (Fig. 25b) vor den Augen des Brillenträ- gers;

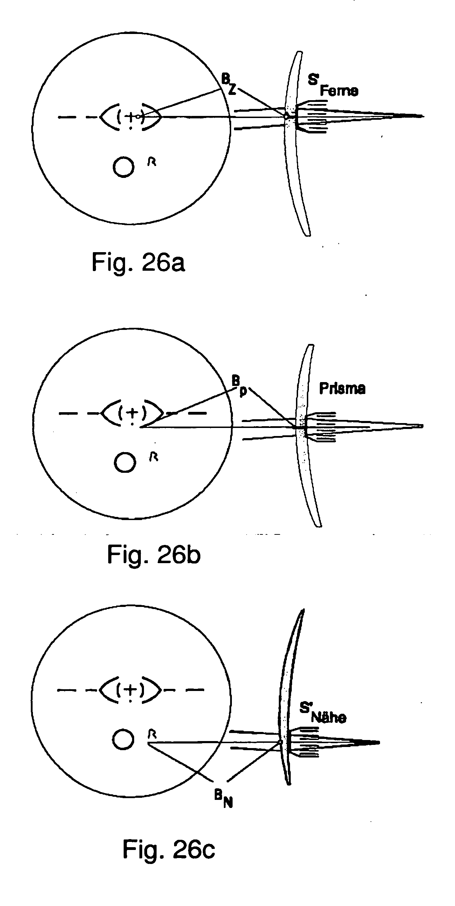

Fig. 26 a-c    Eine schematische Darstellung der Messung der Wirkungen eines indi- viduellen Brillenglases;

Konventionelle progressive Brillengläser (Gleitsichtgläser) besitzen in der Regel eine progressive Vorderfläche, während die Rezeptfläche augenseitig nach Bestelleingang gefertigt wird. Bei der Fertigung nach dem Basiskurvensystem wird auf eine begrenzte Anzahl (z.B. 72) auf Fehlsichtigkeit angepasste, vorgefertigte und damit standardisierte Gleitsichtflächen zurückgegriffen. Diese gelten allerdings nicht für jede Wirkung separat, sondern für ein bestimmtes Spektrum des Wirkungsbereichs. Die Optimierung der Gleitsichtflächen erfolgt jeweils nur für die mittlere Wirkung pro Basiskurve bzw. Wirkungsbereich. Weichen die Refraktionsdaten von den optimierten Wirkungen ab, hat dies Einschränkungen der nutzbaren Blickfelder zur Folge.

Bereits bei kleinen Abweichungen der bestellten Wirkung in Sphäre, Zylinder, Achse oder auch Prisma und Basis von der dem Blank zugrunde liegenden Berechnung treten bei konventionellen Gleitsichtgläsern Einschränkungen in der Designtreue auf, die zu Unverträglichkeiten beim Brillenträger führen können. Hinzu kommt, dass der Optimierung konventioneller Gleitsichtgläser nur Standardwerte zugrunde liegen, die oft der Individualität der Glas-, Fassungs- und Kundendaten des Brillenträgers nicht gerecht werden.

Bei den wirkungsoptimierten Gleitsichtgläsern werden die Nachteile der konventionellen Gleitsichtgläser durch eine für jede Wirkungskombination einzeln online optimierte asphärische oder atorische Rezeptfläche beseitigt. Mit der Freiformtechnologie ist es möglich, wirkungsoptimierte Gleitsichtgläser zu fertigen. Je nach Berechnungs- und Fertigungs-Know-how können mit der Freiformtechnologie auch individuelle Gleitsichtgläser gefertigt werden.

Es sind ebenfalls individuelle Gleitsichtgläser bekannt, welche unter Berücksichtigung der individuellen Verordnung (Sph, Zyl, Achse, Add, Prisma, Basis) und der individuellen Lage der Gläser vor dem Auge (HSA, FSW, Vorneigung, Pupillendistanz) optimiert und berechnet werden.

Eine zweite Gruppe individueller Gleitsichtgläser sind Gleitsichtgläser, welche auf eine andere Art und Weise personalisiert sind, z.B. durch persönliche Verhaltensweisen des Brillenträgers oder seiner Präferenzen. Diese Gleitsichtgläser berücksichtigen jedoch nicht oder nur teilweise die individuellen Parameter. Diesen Gleitsichtgläsern liegt ein physionomisches Standardmodell zugrunde, welches mit den tatsächlichen Gegebenheiten meist nicht übereinstimmt und so optische Abweichungen und/oder Leistungsverluste nach sich zieht.

In allen Fällen war jedoch das Design eines progressiven Brillenglases bisher fest definiert. Mit einem bevorzugten erfindungsgemäßen Verfahren ist es möglich, das Design des Brillenglases individuell auf die Kundenbedürfnisse anzupassen, wobei individuelle Kundenparameter (z.B. Pupillendistanz (PD), Hornhautscheitelabstand (HSA), Fassungsform, Vorneigung (VN), Fassungsscheibenwinkel (FSW), individuelle Position des Fern- und/oder Nahbezugspunkte, individueller Nahabstand, etc.) berücksichtigt werden.

Vorzugsweise fließen die Seherfahrung und die Bedürfnisse bzw. Sehanforderungen des Kunden in einem bevorzugten erfindungsgemäßen Verfahren zum Berechnen eines individuellen Designs und zum Herstellen eines Brillenglases ein. Somit ist es möglich, unter Benutzung des fachlichen Know-how z.B. eines Augenoptikers und unter Mitwirkung des Kunden (Brillenträgers), ein individuelles progressives Brillenglas zu gestalten. Vorzugsweise werden dabei Vor- und Nachteile des Vorgängerglases berücksichtigt.

Die individuellen Parameter (z.B. Pupillendistanz PD, Hornhautscheitelabstand HSA, Vorneigung VN, Fassungsscheibenwinkel FSW, etc.), welche beispielsweise automatisch mittels einer geeigneten 3-D Meßvorrichtung, wie z.B. mittels der 3-D Videozentriervorrichtung ImpressionIST der Firma Rodenstock GmbH oder alternativ mittels herkömmlichen Meßtools ermittelt werden, werden bei der Berechnung bzw. Optimierung der räumlichen Lagen, insbesondere der vertikalen und/oder horizontalen Position des Fern- und/oder Nahbezugspunkts berücksichtigt.

Die individuellen Parameter können beispielsweise in folgenden Grenzen variieren:

Pupillendistanz (PD) von 30 bis 80 mm
Hornhautscheitelabstand (HSA) von 3 bis 50 mm
Vorneigung (VN) von -10 bis +20 Grad
Fassungsscheibenwinkel (FSW) von -10 bis +35 Grad.

Ferner können neben den individuellen Parametern auch die speziellen Sehgewohnheiten des Brillenträgers berücksichtigt werden.

**Figuren 10 bis 12** zeigen graphische Benutzerschnittstellen zur Eingabe von individuellen Kundenparametern.

So können z.B. in einer ersten Maske bzw. graphischen Benutzerschnittstelle (nicht gezeigt) Informationen zu dem Kunden (z.B. Name, Kontaktadresse, Fassungswahl, etc.) eingegeben oder z.B. aus einer Datenbank übernommen werden. Die ausgewählte Fassung, welche z.B. mit Hilfe eines geeigneten Tracers (wie z.B. ImpressionIST der Firma Rodenstock) direkt vermessen oder aus einer Datenbank abgerufen werden kann, kann ebenfalls angezeigt werden.

**In Fig. 10** ist ein Beispiel einer Maske bzw. einer graphischen Benutzerschnittstelle 120 zur Eingabe von individuellen Daten (Bestellwerten) des Brillenträgers gezeigt. Die individuellen Daten können direkt in den entsprechenden Eingabefeldern bzw. -abschnitten der Maske bzw. der graphischen Benutzerschnittstelle eingegeben oder z.B. aus einer Datenbank abgerufen werden. Die grau hinterlegten Felder werden automatisch vom dem Programm berechnet bzw. mit Daten belegt.

Die in **Fig. 10** gezeigte graphische Benutzerschnittstellen **120** enthält:

- einen Abschnitt "Refraktionsdaten" (Abschnitt **122**) umfassend Eingabefelder zur Eingabe von individuellen Refraktionsdaten wie Sphäre "Sph", Zylinder "Cyl", Achse, Prisma, Basis);
- einen Abschnitt "Individuelle Parameter" (Abschnitt **124**) umfassend Eingabefelder zur Eingabe von individuellen Parametern der Augen des Brillenträgers und/oder der individuellen Gebrauchsstellung (Pupillendistanz "PD", Hornhautscheitelabstand "HSA", Vorneigung "VN", Fassungsscheibenwinkel "FSW");
- einen Abschnitt "Fassungs- und Zentrierdaten" (Abschnitt **126**) umfassend Eingabefelder zur Eingabe von Fassungs- und Zentrierdaten (Einschleifhöhe, Scheibenlänge, Scheibenhöhe, Abstand zwischen den Gläsern "AzG" bzw. "AZG") sowie gegebenenfalls einen Anzeigeabschnitt (Abschnitt 127) zur Anzeige der Zentrierung der Brille angepasst an dem Kastenmaß.

Die Fassungsdaten können in entsprechenden Eingabefeldern eingegeben werden. Diese Werte können automatisch eingetragen werden, wenn die Fassung z.B. mittels eines Tracers oder aus einer Liste von Fassungen ausgewählt wird. Die Zentrierdaten können gegebenenfalls direkt von einem 3-D Videozentriersystem (z.B. 3-D Videozentriersystem der Firma Rodenstock GmbG) übernommen werden. Mit einer Funktion "Anpassen an Kastenmaß" kann die Fassung den gegebenenfalls geänderten Fassungsdaten anpasst werden.

Im Abschnitt **126** "Fassungs- und Zentrierdaten" kann eine Fassung aus einer Datenbank ausgewählt werden, z.B. falls vorher mittels eines Tracers keine Fassung aufgenommen bzw. vermessen worden ist. Insbesondere kann die Fassung aus einer Liste in einem sich öffnenden Pop-up-Fenster ausgewählt werden. Form- und Fassungsdaten werden vorzugsweise ebenfalls angezeigt. Die Auswahl kann durch Bestätigen übernommen werden. Ebenfalls kann eine genäherte Fassung aus einer Anzahl verschiedener Fassungsformen ("genäherte Formen") ausgewählt werden. Hierbei kann sich z.B. ein anderes Pop-up-Fenster öffnen, in dem die Fassung aus einer Auswahl gängiger Formen ausgewählt werden kann.

Die in **Fig. 10** gezeigte graphische Benutzerschnittstelle **120** enthält ferner einen Abschnitt bzw. Eingabefeld "Inset" (Abschnitt **132**). Sollte der Brillenglasträger ein vom Standardfall abweichendes Konvergenzverhalten beim Blick in die Nähe zeigen, so kann der im Eingabefeld "Inset" vorbelegte Wert geeignet geändert werden. Der Inset-Wert wird vorzugsweise unter Berücksichtigung der individuellen Kundenparameter berechnet.

Ebenfalls weist die graphische Benutzerschnittstelle **120** einen Abschnitt **134 "Designparameter"** mit entsprechenden Eingabefelder zur Eingabe von:

- den individuellen Nahabstand bei der Refraktionsbestimmung (Refraktionsabstand Nähe);
- der Hauptsehentfernung Nähe; und

- der individuellen Zusatzwirkung

auf.

Wenn keine Daten bezüglich des individuellen Nahabstands eingegeben werden, wird angenommen, daß bis zur einen Addition von 2,5 dpt der individuelle Nahabstand bei der Refraktionsbestimmung 40 cm beträgt. In anderen Worten wird angenommen, daß die bestellte Addition in 40 cm bestimmt wurde und auch die Hauptsehentfernung des Brillenglasträgers in dieser Entfernung liegt. Bei höheren Additionen entspricht der Kehrwert der Addition dem maximalen Nahabstand. Wenn nur eines der beiden Eingabefelder "Refraktionsabstand Nähe" oder "Hauptsehentfernung Nähe" ausgefüllt wird, wird angenommen, daß der Wert auch für die jeweils andere Entfernung gilt. Der Inset und der Astigmatismus werden auf die Hauptsehentfernung "Nähe" berechnet.

Wenn für den Refraktionsabstand "Nähe" und für die Hauptsehentfernung "Nähe" jeweils unterschiedliche Werte in dem entsprechenden Eingabefeld eingetragen werden, wird automatisch auch die individuelle Zusatzwirkung für die Hauptsehentfernung berechnet. Die individuelle Zusatzwirkung wird angezeigt, wenn sie außerhalb des Lieferbereichs liegt (0,75 dpt bis 3,50 dpt) oder mehr als 0,5 dpt von der Bestelladdition abweicht.

**Beispiel**:

Bestellte Addition (Refraktion) = 2.00 dpt, Hauptsehentfernung Nähe = 30 cm, Refraktionsabstand in der Nähe = 40 cm. Die bestellte Addition von 2.00 dpt wird für 30 cm optimiert und es erfolgt eine Anpassung der Addition. Neben dem Inset wird auch der Astigmatismus schiefer Bündel für die gewünschte Hauptsehentfernung korrigiert.

Wenn nur ein Abstand (Hauptsehentfernung oder Refraktionsabstand) angegeben wird, wird davon ausgegangen, daß sich die bestellte Addition auf den angegebenen Abstand bezieht. Hier erfolgt keine Anpassung der Addition, und das Brillenglasdesign bzw. das Brillenglas wird für die bestellte Addition im angegebenen Nahabstand berechnet bzw. optimiert. Wird kein Nahabstand (Hauptsehentfernung und/oder Refraktionsabstand) angegeben, wird davon ausgegangen, daß in 40 cm refraktioniert worden ist und dieser Refraktionsabstand der Hauptsehentfernung in der Nähe entspricht. Hier erfolgt keine Anpassung der Addition und das individuelle Brillenglasdesign bzw. das individuelle Brillenglas wird für die bestellte Addition für 40 cm berechnet bzw. optimiert. In der Regel liegen die von Herstellern lieferbaren Additionen in einem Bereich zwischen 0,75 dpt bis 3,50 dpt. Anhand der folgenden einfachen Rechnung kann der Optiker bzw. Optometrist überprüfen, ob das Brillenglas lieferbar ist:

$$IZ(dpt) = Add(dpt) - \left( \frac{1}{RDN(m)} \right) + \left( \frac{1}{MVDN(m)} \right),$$

wobei:

IZ      die individuelle Zusatzwirkung in dpt;
Add    die Addition in dpt;
RDN   den Betrag des Refraktionsabstands Nähe in Meter; und
MVDN  den Betrag der Hauptsehentfernung Nähe

bezeichnen.

**Beispiele:**

*Möglich:*

Addition Refraktion = 1,75 dpt;
Refraktionsabstand Nähe = 40 cm;
Hauptsehentfernung Nähe = 30 cm;
IZ = 1,75 dpt - 2,50 dpt + 3,33 dpt = 2,58 dpt.

*Nicht möglich:*

Addition Refraktion = 2,00 dpt;
Refraktionsabstand Nähe = 40 cm;
Hauptsehentfernung Nähe = 20 cm;
*IZ* = 2.00 dpt - 2.50 dpt + 5.00 dpt = 4,50 dpt

In der Rechnung wird davon ausgegangen, daß sich keine Änderung des Akkommodationserfolgs aufgrund der Veränderung des Nahabstands ergibt. Dies stellt jedoch lediglich eine Näherung dar.

Die in **Fig. 10** gezeigte graphische Benutzerschnittstelle **120** weist ferner einen Abschnitt bzw. ein Eingabefeld "Basiskurve" (Abschnitt 135) auf, in welches die für die ausgewählte Fassung am besten passende Basiskurve eingetragen werden kann. Insbesondere ist es möglich, eine abweichende Basiskurve in Abhängigkeit von der Durchbiegung der Brillenfassung einzugeben und in der Optimierung des Brillenglases zu berücksichtigen. Das Programm berechnet automatisch die am besten geeignete Durchbiegung bzw. Basiskurve für die jeweiligen Refraktionsdaten und den jeweiligen Basiskurvenwunsch. Die von dem Programm berechnete Basiskurve kann sich von der im Eingabefeld "Basiskurve" eingegebenen Basiskurve unterscheiden. Vorzugsweise wird die eingegebene bzw. bestellte Basiskurve dahingehend automatisch überprüft, daß keine Plan- und Konvexflächen auf der Rückfläche oder zu stark gekrümmte Rückflächen entstehen, die insbesondere zu hohe Randdicken verursachen können.

**Fig. 11** zeigt eine Maske bzw. eine graphische Benutzerschnittstelle **140** zur Eingabe von individuellen Daten bezüglich der aktuellen bzw. bisher getragenen Brille.

In diese Maske können Angaben zum Vorgängerglas gemacht werden, falls dieses bekannt ist. So kann aus einer Liste **142** ("Glastyp") ausgewählt werden, ob der Kunde zuvor ein Einstärken-, Mehrstärken- oder Gleitsichtglas getragen hat oder ob es sich um die erste Brille des Kunden handelt (keine Vorgängerbrille). Wurde ein Gleitsichtglas getragen, können zum Beispiel nähere Angaben zum Material, zum Brechungsindex und/oder zur Progressionslänge z.B. in einem Pop-up-Menü gemacht werden. Die Progressionslänge des Vorgängerglases kann ferner automatisch anhand der Wahl des Vorgängerprodukts oder manuell eingegeben werden. Insbesondere kann die Progressionslänge des Vorgängerglases grob z.B. als eine "Standard" bzw. lange Progression oder als eine kurze ("XS") Progressionslänge eingestuft werden.

Wenn die Addition des Vorgängerglases bekannt ist, kann diese in einem dafür vorgesehenen Eingabefeld **144** "Addition des Vorgängerglases" eintragen werden. So kann die Addition des Vorgängerglases mit der neuen Addition verglichen werden. Bei einer Additionserhöhung von mehr als 0,5 dpt kann ein Hinweisfeld (z.B. als Pop-up-Fenster) erscheinen, das auf die Besonderheiten der Additionserhöhung hinweist.

**Fig. 12** zeigt ein Beispiel einer Maske bzw. eine graphische Benutzerschnittstelle 146 ("Designprofiler") zur Eingabe von Daten bezüglich der individuellen Präferenzen bzw. Gewichtungen der Sehbereiche.

Jeweils fünf verschiedene Piktogramme für die Ferne, die mittlere Entfernung und die Nähe sowie für das Aktivverhalten des Brillenträgers symbolisieren die Bereiche, die der Brillenträger bei der Wahl seines Designprofils gegeneinander abwägen soll. Die Piktogramme dienen als Beispiele für den jeweiligen Entfernungsbereich und stellen nur eine kleine Auswahl aller möglichen Tätigkeiten für diese Entfernung dar. Mit den zu vergebenden Punkten können die Bereiche gewichtet werden.

In einem konkreten Beispiel können insgesamt 9 Punkte auf die vier verschiedenen Bereiche (Ferne, mittlere Entfernung, Nähe und Aktivverhalten) verteilt werden. Je wichtiger dem Kunden der jeweilige Entfernungsbereich ist bzw. je mehr seiner Tätigkeiten in einen Bereich fallen, desto mehr Punkte für diesen Bereich werden vergeben. Die Anzahl der Punkte pro Bereich sowie die Gesamtpunktzahl können beschränkt werden. So können z.B. pro Bereich maximal 5 Punkte vergeben werden, insgesamt jedoch nicht mehr als 9 Punkte.

Die vergebenen Punkte bestimmen das individuelle Designprofil des Brillenträgers. Vereinfacht gilt: Je mehr Punkte für die Ferne in Relation zur gegebenen Gesamtpunktzahl vergeben werden, desto tiefer liegt der individuelle Fernbezugspunkt und je mehr Punkte für die Nähe in Relation zur gegebenen Gesamtpunktzahl vergeben werden, desto höher liegt der individuelle Nahbezugspunkt. Die Punkte für das Aktivverhalten und das Sehen in mittleren Entfernungen wirken sich in erster Linie auf die Länge der Progressionszone aus und bestimmen somit auch wie verzeichnungsfrei das Brillenglas ist. Bei der Vergabe der Punkte entspricht eine gleich große Punktzahl in jedem Bereich einem ausgewogenen, universellen Design.

**Fig. 13** zeigt die Lage der Fern- und Nahbezugspunkte eines individuellen Brillenglasdesigns **148.** Grau hinterlegt sind die Bereiche (**150** und **152**), in welchen sich der Fernbezugspunkt (Bereich 150) und der Nahbezugspunkt (Bereich **152**) vorzugsweise befinden können. Die Position des Zentrier- bzw. Anpaßpunkts wird mittels eines Kreuzes **154** (Zentrierkreuz) gekennzeichnet. Der Fernbezugspunkt befindet sich in der Mitte von zwei runden Klammern **156**. Der Nahbezugspunkt befindet sich in der Mitte des Nahmeßkreises **158**.

Die vertikale Höhe des Fernbezugspunkts kann vorzugsweise in einem Bereich von +4 bis -4 mm gegenüber dem für dieses Brillenglas vom Hersteller festgelegten Zentrier- bzw. Anpaßpunkt in Abhängigkeit von den individuellen Daten des Brillenträgers flexibel bestimmt werden. Der Nahbezugspunkt kann vorzugsweise flexibel zwischen 13 und 20 mm vertikal unterhalb des Zentrier- bzw. Anpaßpunkts festgelegt werden. Daraus ergibt sich eine flexibel wählbare Progressionslänge, welche vorzugsweise minimal 13 mm und maximal 24 mm betragen kann. Vorzugsweise können der Fern- und Nahbezugspunkt in Stufen von 0,1 mm innerhalb eines zulässigen Bereichs frei festgelegt werden. Wird z.B. der Fernbezugspunkt bzw. auf -4 mm vertikale Höhe verschoben, so muss der Nahbezugspunkt mindestens auf einer vertikalen Höhe von -17 mm liegen. Wird der Fernbezugspunkt +4 mm verschoben, so ergibt sich eine Mindestprogressionslänge von 17 mm, da der Nahbezugspunkt vorzugsweise nicht weiter als -13 mm verschoben wird.

Dabei beträgt vorzugsweise der minimale vertikale Abstand vom unteren Fassungsrand zum Nahbezugspunkt 2 mm. Der Fernbezugspunkt weist vorzugsweise minimal einen vertikalen Abstand von 6 mm, vorzugsweise 8 mm von dem oberen Fassungsrand auf. Mit den minimal zulässigen Abständen des Fern- und Nahbezugspunkts von dem oberen bzw. dem unteren Fassungsrand läßt sich die maximal zulässige Progressionslänge berechnen. Die Progressionslänge wird hierbei als der vertikale Abstand zwischen dem Fern- und dem Nahbezugspunkt definiert.

Aus der folgenden Tabelle kann entnommen werden, was durch Verschieben der Designpunkte im Gleitsichtglas beispielsweise erreicht werden kann:

Tabelle:

| Individuelle Sehanforderung des Brillenträgers | Umsetzung beim Festlegen der Position der Designpunkte |
|---|---|
| Besonders großer Fernbereich, z. B. Autofahrer | Der Designpunkt "Ferne" sollte unter das Zentrierkreuz verschoben werden. Die Progressionszone beginnt dann erst (deutlich) unterhalb des Zentrierkreuzes |
| Besonders großer Nahbereich, z.B. Lektor | Der Designpunkt "Nähe" sollte im Vergleich zum bisherigen Gleitsichtglas nach oben verschoben werden. Dies ermöglicht entspanntes Sehen in der Nähe bei bequemer Blicksenkung |
| Besonders breite Progressionszone, z.B. Architekt | Verschiebung des Designpunkts "Ferne" nach oben und des Designpunkts "Nähe" nach unten. Je länger die Progressionszone, desto breiter wird der Progressionskanal und umso weniger Schaukelbewegungen nimmt der Kunde wahr. |

Die Positionen der Fern- und Nahbezugspunkte sind vorzugsweise gleich für das rechte und das linke Brillenglas. Bei unterschiedlicher Durchblickshöhe können sich dadurch jedoch Nachteile in den Sehbereichen für eines der beiden Augen ergeben. Damit die Sehbereiche für beide Augen voll genutzt werden können, ist es vorteilhaft den jeweils kleineren vertikalen Abstand des Nahbezugspunktes vom Zentrierpunkt auszuwählen bzw. festzulegen.

**Fig. 14** verdeutlicht diesen Zusammenhang. In **Fig. 14** bezeichnet:

$F1^{L,R}$     den vertikalen Abstand "Zentrierpunkt- oberer Fassungsrand" des linken (L) bzw. des rechten (R) Brillenglases; und

$F2^{L,R}$     den vertikalen Abstand "unterer Zentrierpunkt - unterer Fassungsrand" des linken (L) bzw. des rechten (R) Brillenglases.

In **Fig. 14** fallen der Zentrierpunkt und der Fernbezugspunkt zusammen. Wenn sich die Auswahl der geeigneten vertikalen Position des Nahbezugspunkts an dem unteren Fassungsrand orientiert, würde sich für das rechte Auge ein vertikaler Abstand des Nahbezugspunkts vom Zentrierpunkt vom -18 mm ergeben und für das linke Auge würde dieser Abstand -17 mm betragen. In diesem Fall ist es bevorzugt, den kleineren Abstand auszuwählen bzw. festzulegen.

Die Angaben zu den Objektentfernungen "Ferne" und "Nähe" bei der Refraktionsbestimmung werden bei der Berechnung und Optimierung berücksichtigt. Somit kann der Strahlengang, welcher der tatsächlichen Gebrauchssituation entspricht, genauer simuliert werden und folglich die Abbildungsqualität verbessert werden.

Insbesondere ist es so möglich, die Hauptsehentfernung beim Blick in die Nähe in der tatsächlichen Gebrauchsstellung des Brillenglases bei der Glasberechnung zu berücksichtigen. **Fig. 15a** illustriert die Hauptsehentfernung beim Blick in die Nähe in der tatsächlichen Gebrauchsstellung des Brillenglases und **Fig. 15b** den Refraktionsabstand Nähe bzw. den Nahabstand bei der Refraktionsbestimmung.

Generell wird davon ausgegangen, daß die Addition in einem Refraktionsabstand in der Nähe von 40 cm bestimmt wurde (gilt bis Addition 2,50 dpt, für höhere Additionen gilt 1/Addition) und diese einer Hauptsehentfernung in der Nähe von 40 cm entspricht. Weicht die Hauptsehentfernung in der Nähe vom Refraktionsabstand in der Nähe ab, kann das individuelle Brillenglasdesign auf diese Hauptsehentfernung optimiert werden.

Wenn die optimale individuelle Position des Fern- und/oder Nahbezugspunkts anhand von individuellen Daten des Brillenträgers ermittelt wird, wird ein entsprechendes Brillenglasdesign mit den so ermittelten Positionen des Fern- und Nahbezugspunkts und gegebenenfalls unter Berücksichtigung weiterer individueller Parameter des Brillenträgers automatisch berechnet.

Der Designvorschlag kann mittels einer geeigneten graphischen Benutzerschnittstellen **160A** zur Ergebnisdarstellung (Designempfehlung) - wie in **Fig. 16** gezeigt - visualisiert werden. Je nach Auswahl in den Einstellungen, kann zusätzlich eine graphische Benutzerschnittstelle **160B** (Designtuner) gezeigt werden (vgl. **Fig. 17**) mit deren Hilfe, neben einer Ergebnisdarstellung, dem Benutzer die Möglichkeit gegeben wird, durch eine Veränderung der individuellen Position des Fern- und/oder des Nahbezugspunkts und/oder eine Veränderung der individuellen Daten des Brillenträgers (insbesondere der Präferenzen, der Fassungsdaten, etc.) das Design aktiv zu verändern. Zusätzlich können die entsprechenden geometrischen Daten des Brillenglases (Mittendicke, Randdicke, Basiskurve, Gewicht) berechnet und ebenfalls mittels einer geeigneten graphischen Benutzerschnittstelle (vorzugsweise in Form eines dreidimensionalen Models) visualisiert werden.

Die graphischen Benutzerschnittstellen **160A** und **160B** sind in zwei Bereiche aufgeteilt: im oberen Bereich **162** werden Informationen zum Thema "Sehen" und/oder "Performance" mit dem vorgeschlagenen Design für ein individuelles Brillenglas; im unteren Bereich **164** Informationen zum Thema "Aussehen" bzw. "Geometrie" des individuellen Brillenglases bzw. Brille dargestellt.

Im Bereich "Aussehen" **164** können insbesondere kosmetische Eigenschaften bzw. Daten bezüglich der Ästhetik des Brillenglases (z.B. Gewicht, geometrische Daten wie Bauhöhe, maximale Randdicke, Mittendicke, Basiskurve, etc.) des gerandeten Brillenglases bzw. der gerandeten Brillengläser visualisiert bzw. graphisch dargestellt werden. Die Visualisierung der kosmetischen Eigenschaften des Brillenglases kann beispielsweise mittels einer dreidimensionalen graphischen Darstellung eines Models des Brillenglases **166** mit den ermittelten geometrischen Daten erfolgen, wie z.B. in **Figuren 16 und 17** gezeigt. Die Darstellung der kosmetischen Eigenschaften des Brillenglases kann z.B. durch eine Auswahl der Basiskurve und des Brechungsindexes beeinflußt werden. Die Auswahl kann wirkungsabhängig sein.

Der Bereich "Aussehen" **164** kann ferner einen Subbereich **168** umfassen, in welchem numerische Werte bezüglich der geometrischen Eigenschaften des Brillenglases, wie z.B. Bauhöhe, maximale Randdicke, Mittendicke, Gewicht, Basiskurve des gerandeten Glases, etc. gezeigt werden. Diese Werte können Näherungswerte sein, welche gegebenenfalls von den tatsächlichen Glasgeometriedaten abweichen. Zusätzlich können neben den Gravuren auch die individuell ermittelten Fern- und Nahbezugspunkte als Stempelpunkte gezeigt werden.

Mittels geeigneter Buttons können Ansichten **169** der gerandeten Brillengläser aus verschiedenen statischen Perspektiven gezeigt werden (Fassung von oben, Fassung von vorn, von der Seite, von schräg oben). Ebenfalls können z.B. mittels Betätigung eines Animationsbutton die gerandeten Brillengläser in der gewählten Ansicht dynamisch rotierend dargestellt werden. Zur besseren Detailansicht kann das Bild z.B. über einen entsprechenden Button vergrößert dargestellt werden.

Der Bereich "Aussehen" **164** umfaßt ferner einen Abschnitt **170** zur Anzeige von numerischen Werten bezüglich des Brechungsindexes und einen Abschnitt zur Anzeige der Basiskurve (Abschnitt **172**). Die angezeigten Werte für die Basiskurve und den Brechungsindex setzen sich aus dem Wirkungsbereich, dem notwendigen Durchmesser, den Basiskurvenwunsch und den Refraktionsdaten zusammen. Daher sind Abweichungen zu dem der Maske "Bestellwerte" eingegebenen Basiskurvenwunsch möglich. Über entsprechende Auswahlfelder können die technisch realisierbaren Werte für Basiskurve und Brechungsindex des Glases verändert werden. Falls Änderungen der Basiskurven-Vorgabe, der Brechungsindex, etc. vorgenommen werden, können z.B. durch Betätigen eines Buttons "Aktualisieren" die Grafik und die Geometriedaten entsprechend den geänderten Werten neu berechnet werden.

Neben der Visualisierung der kosmetischen Eigenschaften des Brillenglases erfolgt ferner eine Visualisierung der optischen Eigenschaften des Brillenglases (Sehbereiche, insbesondere räumliche Lage und Größe der einzelnen Sehbereiche). Die Darstellung der Sehbereichsgrößen kann lediglich relativ zu den Verordnungsdaten erfolgen, ohne daß eine eventuelle Materialabhängigkeit berücksichtigt wird. Selbstverständlich kann jedoch eine Berücksichtigung einer Materialabhängigkeit vorgesehen werden. Neben einer Visualisierung des "Aussehens" erfolgt eine Visualisierung des "Sehens" durch das Brillenglas. Insbesondere kann eine Visualisierung des Sehkomforts (z.B. Blicksenkung, Schaukeln, peripheres Sehen, Verzerrungen, etc.) vorgesehen werden.

Zusätzlich kann eine geeignete Darstellung von Performancewerten bezüglich der Sehbereiche, des Sehkomforts und/oder der kosmetischen Eigenschaften bzw. der Ästhetik des individuellen Brillenglases vorgesehen werden. Ebenfalls können Performancewerte alternativer Designvorschläge dargestellt werden.

Der Bereich "Sehen" 162 der graphischen Benutzerschnittstellen **160A** und **160B** ist daher grundsätzlich in mehrere Unter- bzw. Subbereiche gegliedert.

In dem Subbereich **174** "Binokulare Sehbereichsdarstellung" des Bereichs **162** wird z.B. das für den Kunden und die angegebene Fassung ideale Design anhand einer Ellipse schematisch gezeigt. Graue Bereiche sind dabei mit Abbildungsfehlern (z.B. Astigmatismus in Gebrauchsstellung größer als 0,5 dpt) behaftete Bereiche. Zusätzlich kann gegebenenfalls der Verlauf der 0,5 dpt Isoastigmatismuslinie gezeigt werden. Die vertikalen Höhen der Fern- und Nahbezugspunkte können jeweils durch (gegebenenfalls unterschiedlich gefärbte) Linien **175, 176** gekennzeichnet werden. Im Subbereich **177** des Bereichs **162** werden numerische Werte für die räumliche Lage (insbesondere für die vertikale Höhe im Bezug auf den Zentrierpunkt) des Fern- und des Nahbezugspunkts gezeigt.

Im Subbereich **178** "Designprofil" des Bereichs **162** wird ein qualitativer Vergleich der Sehbereichsgrößen zueinander, z.B. in Form von unterschiedlich längen Balken dargestellt, wobei F den Fernbereich, Z den Zwischenbereich und N den Nahbereich bezeichnet. Die Länge des jeweiligen Balkens bzw. Schiebers korreliert mit der jeweiligen Schwerpunktsetzung, die einem entsprechenden Entfernungsbereich zugeordnet ist. Da sich die Länge im Designprofil aus den Angaben aller vorheriger Masken ergibt, können sie gegebenenfalls von den zuvor ermittelten Präferenzen bzw. Gewichtungen des Kunden abweichen. Darüber hinaus kann eine qualitative Bewertung des dynamischen Seheindrucks durch das individuelle Brillenglas dargestellt werden. Je höher der Balken, welcher den dynamischen Seheindruck (Balken "Dynamik") darstellt, desto länger wird die Progressionszonenlänge und desto einstärkenähnlicher wird das Brillenglas bzw. desto weniger Schaukeleffekt weist das Brillenglas auf.

Zusätzlich kann dem Augenoptiker/Optometristen und/oder dem Brillenträger die Möglichkeit gegeben werden das so berechnete individuelle Brillenglasdesign aktiv zu verändern. Die Veränderung erfolgt beispielsweise in dem die räumliche Position, insbesondere die vertikale Höhe des Fern- und/oder Nahbezugspunkts, aktiv verändert wird. Alternativ können die Gewichtungen der Sehbereiche verändert werden.

Die Änderung bzw. die Anpassung der Position des Fern- und/oder Nahbezugspunkts und/oder der Präferenzen bezüglich der Sehbereiche kann beispielsweise mittels einer geeigneten graphischen Benutzerschnittstelle erfolgen. Ein Beispiel einer geeigneten graphischen Benutzerschnittstelle in Form von Schieberegler **180** ist in **Fig. 17** gezeigt. Mit den in **Fig. 17** gezeigten Schieberegler **180** ist eine direkte Anpassung der Position des Fern- und/oder Nahbezugspunkts möglich.

Das neue Brillenglasdesign mit der geänderten Position des Fern- und/oder Nahbezugspunkts wird vorzugsweise in Echtzeit berechnet und visualisiert. Vorzugsweise wird ebenfalls die Differenz bzw. die Veränderung der optischen Eigenschaften des neuen gegenüber dem alten Brillenglasdesign visualisiert.

So kann z.B. in dem Designtuner über die in der Designempfehlung (**Fig. 16**) beschriebenen Möglichkeiten hinaus eine Ellipse eingeblendet werden, welche in den Kastenmaßen und der vorgegebenen Zentrierung der genäherten binokularen Kundenfassung entspricht. Des Weiteren kann hier das vorgeschlagene, individuelle Design verändert werden, indem z.B. Schieberegler für den Fern- und den Nahbezugpunkt nach oben bzw. nach unten verschoben werden. Bei den Bestellparametern in den Anzeigefeldern für den Fern- und den Nahbezugspunkt verändern sich entsprechend die Zahlenwerte für die Lage der Bezugspunkte. Ferner verschieben sich in der binokularen Sehbereichsdarstellung die Linien für den Fern- und den Nahbezugspunkt.

Zusätzlich zu den flächig grau dargestellten Sehbereichen aus der Designempfehlung können vorzugsweise farbliche (z.B. gelbe) Sehbereichslinien (z.B. 0,5 dpt Isoastigmatismuslinie) erscheinen, welche das abgeänderte, individuelle Design zeigen. Ebenfalls ändern sich im Subbereich Designprofil (**178**) das Verhältnis der Größe der Sehbereiche zueinander sowie die Länge des Balkens "Dynamik". Die vergebenen Punkte im Abschnitt "Designprofiler" werden vorzugsweise durch die Veränderungen im Abschnitt "Designtuner" nicht beeinflusst.

Die nachfolgend aufgeführten Beispiele zeigen individuelle progressive Designs mit individuell, in Abhängigkeit von den erfaßten individuellen Daten des Brillenträgers ermittelten Fern- und Nahbezugspunkte.

**Beispiel 1: Brillenglasträger Architekt:**

Der Brillenglasträger legt großen Wert auf einen breiten Zwischenbereich und wünscht sich ein "eher ruhiges" Brillenglas mit wenigen Schaukelbewegungen, da er aus beruflichen Gründen den überwiegenden Teil des Tages im Zwischenbereich (mittlere Entfernungen) sehen muss. In seiner jetzigen Brille trägt er ein Gleitsichtglas mit einer Progressionszonenlänge von 18 mm.

Für diesen Brillenglasträger empfiehlt das Programm für die ausgewählte Fassung und entsprechende Zentrierung den Fernbezugspunkt auf +2,4 mm über das Zentrier- bzw. Anpaßpunkt zu setzen. Der Nahbezugspunkt würde optimal bei -19 mm unterhalb des Zentrier- bzw. Anpaßpunkt liegen. Mit diesem progressiven Brillenglas hat der Architekt einen guten Kompromiß aus entspannter Kopfhaltung, einem breitem Zwischenbereich und geringen Schaukelbewegungen für seine Sehgewohnheiten.

**Beispiel 2: Brillenglasträgerin Lektorin:**

Sie legt großen Wert auf einen großen Nahbereich und wünscht sich eine geringere Blicksenkung als bei ihrem jetzigen Gleitsichtglas, da sie aus beruflichen Gründen den überwiegenden Teil des Tages mit Arbeiten in der Nähe verbringt. In der jetzigen Brille trägt sie ein Gleitsichtglas mit einer Progressionszonenlänge von 18 mm. Für diese Kundin empfiehlt das Programm für die ausgewählte Fassung und entsprechende Zentrierung den Fernbezugspunkt auf 1,5 mm über das Zentrier- bzw. Anpaßpunkt zu verlegen. Der Nahbezugspunkt würde optimal bei -15,5 mm unterhalb des Zentrier- bzw. Anpaßpunkts liegen. Damit hat die Lektorin einen guten Kompromiss aus breiterem Nahbereich und entspannter Kopfhaltung.

Wenn der Brillenglasträger großen Wert auf einen breiten Zwischen- und Nahbereich und geringe Schaukelbewegungen im Brillenglas legt, wird von dem Programm empfohlen in Abhängigkeit von den anderen Eingabeparametern den Fernbezugspunkt nach oben zu verschieben. Der Fernbezugspunkt würde sich dann oberhalb vom Zentrier- bzw. Anpaßpunkt befinden. Je nach Refraktionsdaten und individuellen Parametern kann sich in diesen Fällen eine "Nebelung" im Zentrier- bzw. Anpaßpunkt von bis zu +0,25 dpt ergeben. Neben dieser geringfügigen Nebelung im Zentrierpunkt können sich auch seitliche Einschränkungen im Fernbereich ergeben, da der Brillenglasträger - bei einer Verschiebung des Fernbezugspunkts nach oben - in Nullblickrichtung durch die bereits früher beginnende Progression im Brillenglas sieht. Durch die veränderte Lage der Progressionszone im Brillenglas können die Sehbereiche auf Höhe des Zentrierpunktes dementsprechend kleiner ausfallen, weil die peripheren Abbildungsfehler "nach oben" verschoben werden. Der Brillenglasträger erhält jedoch bei der Wahl dieser Positionierung des Fernbezugspunkts ein nach seinen individuellen Sehgewohnheiten gestaltetes bzw. optimiertes Brillenglasdesign bzw. Brillenglas.

### Beispiel 3: Brillenglasträger arbeitet im Außendienst

Der Brillenglasträger legt besonderen Wert auf einen großen Fernbereich, da er aus beruflichen Gründen den überwiegenden Teil des Tages mit Sehen in die Ferne verbringt. In seiner jetzigen Brille trägt er ein Gleitsichtglas mit Progressionszonenlänge 18 mm. Das Programm berechnet automatisch und empfiehlt bei diesem Kunden für die ausgewählte Fassung und entsprechende Zentrierung den Fernbezugspunkt auf -2,5 mm unterhalb des Zentrier- bzw. Anpaßpunkts zu setzen. Der Nahbezugspunkt würde optimal bei -18,4 mm unterhalb des Zentrier- bzw. Anpaßpunkts liegen. Mit diesem Brillenglas hat der Brillenglasträger einen großen Fernbereich und einen guten Kompromiß aus geringen Schaukelbewegungen sowie gut ausnutzbarem Zwischen- und Nahbereich.

### Beispiel 4:

Auf die Frage, für welche Tätigkeiten bzw. Sehanforderungen die Brillenglasträgerin ihre Brille benutzt, ergibt sich z. B. folgendes Profil:

- Sie fährt regelmäßig Auto und sieht fern;
- Sie spielt ein Instrument und geht 2x die Woche zur Orchesterprobe;
- Abends liest Sie zur Entspannung gerne die abonnierte Tageszeitung;
- Mindestens 1 x die Woche treibt sie Sport wie z. B. Joggen oder spielt Handball in ihrem Verein.

In der aktuellen Brille trägt die Brillenglasträgerin Gleitsichtgläser mit normaler Progressionszonenlänge. Da keinerlei Präferenzen festzustellen sind und die Tätigkeiten dieser Kundin gleich auf die Bereiche Ferne, mittlere Entfernung und Nähe verteilt sind, werden jeweils gleich viele Punkte für alle Entfernungen und auch für das Aktivverhalten bzw. Dynamik vergeben. In anderen Worten werden alle Sehbereiche und das dynamische Verhalten bzw. die dynamischen Eigenschaften gleich gewichtet. In dem konkreten Beispiel werden für alle Bereiche des in **Fig. 12** gezeigten "Designprofilers" jeweils 2 Punkte vergeben. In der graphischen Benutzerschnittstelle "Designempfehlung" wird das Ergebnis der Berechnungen unter Berücksichtigung der individuellen Eingaben in die vorherigen Masken dargestellt. Das Programm berechnet automatisch und empfiehlt für diese Kundin den Fernbezugspunkt auf 0 mm und den Nahbezugspunkt auf -18 mm zu positionieren. Dieses Brillenglas würde einem ausgewogenen, universellen progressiven Brillenglas mit einer Progressionszonenlänge von 18 mm entsprechen (z.B. einem Brillenglas bisherigen "Impression ILT®" der Firma Rodenstock GmbH), da bei der Designauslegung davon ausgegangen wird, daß kein Tätigkeitsschwerpunkt in einem der Entfernungsbereiche erkennbar ist.

### Beispiel 5

Auf die Frage, für welche Tätigkeiten bzw. Sehanforderungen der Brillenglasträger seine Brille benutzt, ergibt sich folgendes Profil:

- Er legt besonderen Wert auf ungestörtes Sehen in der Ferne, da er aus beruflichen Gründen den überwiegenden Teil des Tages im Auto verbringt;

- In die mittlere Entfernung schaut er nur, um das Armaturenbrett klar erkennen zu können;

- Die Nähe nutzt der Brillenglasträger nur für kurzzeitige Schreibtischtätigkeiten, wie z.B. Vertragsabschlüsse und Ähnliches;

- In seiner Freizeit spielt er gerne Tennis und Squash, dabei legt er Wert auf wenig Schaukelbewegungen im Brillenglas.

In der aktuellen Brille trägt der Brillenglasträger Gleitsichtgläser mit normaler Progressionszonenlänge (PZL). Die Präferenz des Brillenglasträgers liegt hier eindeutig in der Ferne, die mittlere Entfernung und die Nähe spielen eine untergeordnete Rolle. Daher wurden für dieses Beispiel für die Ferne 4 Punkte, für mittlere Entfernungen und Nähe jeweils 1 Punkt vergeben (vgl. **Fig. 12**). Aufgrund der Anforderungen der dynamischen Sportarten, wie Verzeichnungsfreiheit und gute Raumwahrnehmung, wurde das Aktivverhalten bzw. Dynamik bei dem in **Fig. 12** gezeigten "Designprofiler" mit 3 Punkten gewichtet. In der graphischen Benutzerschnittstelle "Designempfehlung" wird das Ergebnis der Berechnungen unter Berücksichtigung der individuellen Eingaben in die vorherigen Masken dargestellt. Das Programm berechnet automatisch und empfiehlt für diesen Kunden den Fernbezugspunkt auf -1,1 mm und den Nahbezugspunkt auf -18,5 mm zu positionieren. Somit wird ein für die individuellen Anforderungen des Kunden größtmöglicher Fernbereich realisiert. Aufgrund der Lage des Nahbezugspunktes und der damit verbundenen relativ langen Progressionszonenlänge bietet das Brillenglas einstärkenähnliches Sehen und ist nahezu verzeichnungsfrei. Dies wirkt sich positiv z.B. bei den sportlichen Freizeitaktivitäten des Brillenglasträgers aus.

## Beispiel 6

Auf die Frage, für welche Tätigkeiten bzw. Sehanforderungen der Brillenglasträger seine Brille benutzt, ergibt sich folgendes Profil:

- Die Ferne spielt für Ihn eine untergeordnete Rolle, da er z. B. beim Autofahren die Brille meist abnimmt;
- Das Sehen in den mittleren Entfernungen ist ihm besonders wichtig;
- Der Brillenträger reagiert auf ungewohnte Verzeichnungen sehr sensibel, z. B. bei gekrümmten Linien in seinen zeichnerischen Skizzen;
- Nach getaner Arbeit liest er gern Kriminalromane;
- Aufgrund seines stressigen Jobs kommt er nicht dazu, Sport zu treiben oder sich zu bewegen.

Die wichtigste Entfernung für diesen Brillenglasträger ist also die mittlere Entfernung, auch die Nähe ist für ihn wichtig, die Ferne und das Aktivverhalten spielen eine untergeordnete Rolle. Daher werden in dem in **Fig. 12** gezeigten "Designprofiler" für die Ferne und für das Aktivverhalten jeweils 1 Punkt, 3 Punkte für mittlere Entfernungen sowie 2 Punkte für die Nähe vergeben. In der graphischen Benutzerschnittstelle "Designempfehlung" wird das Ergebnis der Berechnungen unter Berücksichtigung der Eingaben in die vorherigen Masken dargestellt. Das Programm berechnet automatisch und empfiehlt, für diesen Kunden den Fernbezugspunkt +0,7 mm und den Nahbezugspunkt auf -18,1 mm zu positionieren. Somit wird ein größtmöglicher Zwischenbereich realisiert. Aufgrund der Lage des Nahbezugspunkts und der damit verbundenen relativ langen Progressionszonenlänge bietet das Brillenglas einstärkenähnliches Sehen und ist nahezu verzeichnungsfrei. Dies kommt dem Brillenglasträger bei der Arbeit mit zeichnerischen Skizzen zugute.

## Beispiel 7

Auf die Frage, für welche Tätigkeiten bzw. Sehanforderungen die Brillenglasträgerin ihre Brille benutzt, ergibt sich folgendes Profil:

- Sie benutzt die Brille kaum für Tätigkeiten in der Ferne, daher spielt diese eine untergeordnete Rolle;
- Für ihren Beruf ist das Lesen von Schriftstücken besonders wichtig;
- Sie legt großen Wert auf eine angenehme Blicksenkung für Nahsehaufgaben;
- Aufgrund der eher statischen Haltung am Arbeitsplatz spielen Schaukelbewegungen eine untergeordnete Rolle;
- In die mittlere Entfernung schaut die Kundin vor allem bei gelegentlicher Bildschirmarbeit.

Die wichtigste Entfernung für diese Brillenglasträgerin ist also die Nähe. Auch die mittlere Entfernung ist wichtig, die Ferne sowie auch das Aktivverhalten spielen eine untergeordnete Rolle. Daher werden in dem in **Fig. 12** gezeigten "Designprofiler" für die Nähe 4 Punkte, für die mittlere Entfernung 2 Punkte und jeweils 1 Punkt für die Ferne und das Aktivverhalten vergeben. In der graphischen Benutzerschnittstelle "Designempfehlung" wird das Ergebnis der Berechnungen unter Berücksichtigung der Eingaben in die vorherigen Masken dargestellt. Das Programm berechnet automatisch und empfiehlt, den Fernbezugspunkt auf +0,8 mm und den Nahbezugspunkt auf -17,0 mm zu positionieren. Somit wird ein für die individuellen Anforderungen der Brillenglasträgerin größtmöglicher Zwischen- und Nahbereich realisiert. Aufgrund der Lage des Nahbezugspunkts wird der Wunsch der Brillenglasträgerin nach einer angenehmen Blicksenkung für Nahsehaufgaben in ihrem individuellen Gleitsichtglas umgesetzt.

Mit einem Button "Aktive Auswahl übernehmen" kann festgelegt werden, welche Daten für die Bestellung übernommen werden sollen. Es werden z.B. stets die Daten des Bereichs übernommen der gerade aktiv (nicht im Hintergrund) ist. Nach Betätigen des Buttons "Aktive Auswahl übernehmen" kann ferner ein mit dem Ergebnis gefülltes Bestellformular ausgedruckt werden. Das Bestellformular kann ferner z.B. mit weiteren Details, wie z.B. Farbe, Beschichtung, ColorMatic Farbe, Messbrille usw. ergänzt werden. Die individuellen Daten können ebenfalls gespeichert werden und/oder online an einem Brillenglashersteller übermittelt werden.

Die individuellen Daten des Brillenträgers können ebenfalls mittels geeigneter Bestellformulare erfaßt und dem Brillenglashersteller weiter übermittelt werden. **Fig. 18** zeigt ein beispielhaftes Bestellformular. In dem Bestellformular werden die erfaßten individuellen Refraktionsdaten (Sphäre, Zylinder, Achse, Prisma, Basis), Fassungs- und Zentrierdaten, individuelle Parameter der Augen des Brillenträgers und der individuellen Gebrauchsstellung (Pupillendistanz, Fassungsscheibenwinkel, Vorneigung, Hornhautscheitelabstand, etc.) und gegebenenfalls weitere individuelle Daten angegeben. Mit dem Bestellformular ist es möglich, die Positionen der Fern- und/oder Nahbezugspunkte so zu wählen, daß diese den Positionen eines universellen Gleitsichtglasdesigns entsprechen (z.B. Impression® oder Impression XS® der Firma Rodenstock GmbH). Ebenfalls ist es möglich eine mittlere Progressionszonenlänge von 16 mm festzulegen. Alternativ können die Positionen der Fern- und/oder Nahbezugspunkte in Abhängigkeit von den individuellen Fassungsdaten festgelegt werden (fassungsoptimiertes Design). So kann z.B. der Fernbezugspunkt auf dem Zentrierpunkt (d.h. bei 0 mm) und der Nahbezugspunkt auf 2 mm oberhalb vom unteren Fassungsrand festgelegt werden. Die Position der Fern- und Nahbezugspunkte kann ferner unter Berücksichtigung von weiteren individuellen Daten (z.B. Tätigkeitsschwerpunkte und Präferenzen bezüglich der Sehbereiche), wie oben in Detail beschrieben, individuell festgelegt werden.

Anschließend wird ein individuelles Brillenglas optimiert bzw. berechnet, wobei die Optimierung unter Berücksichtigung zumindest eines Teils der ermittelten individuellen Daten, insbesondere Daten bezüglich der individuellen Parameter des Brillenträgers und der individuellen Gebrauchsstellung (Fassungsscheibenwinkel, Vorneigung, Pupillendistanz, Hornhautscheitelabstand, etc,) erfolgt.

Um die Abbildungseigenschaften von Brillengläsern in der Tragesituation zu beschreiben und/oder zu berechnen, sind in der geometrischen Optik zwei Berechnungsverfahren bekannt:

- Berechnung mit Lichtstrahlen (Ray Tracing); und
- Berechnung mit Wellenfronten (Wave Tracing).

Der Begriff "Ray Tracing" setzt sich aus Ray = Strahl und Tracing = Verfolgung zusammen. In der geometrischen Optik wird das Ray Tracing Verfahren eingesetzt, um optische Abbildungen zu beschreiben. Die Berechnung eines Brillenglases mit Ray Tracing ist jedoch sehr zeitaufwändig, da für jeden Punkt im Brillenglas außer dem eigentlichen Lichtstrahl bzw. Hauptstrahl auch noch ein "begleitendes" Bündel an Nachbarstrahlen durch das Brillenglas simuliert werden muss.

Vorzugsweise wird das individuelle Brillenglas mittels eines Wavefront-Tracing-Verfahrens, insbesondere mittels einer lokalen Wellenfrontoptimierung berechnet. Der Begriff "Wave Tracing" setzt sich aus Wave = Welle und Tracing = Verfolgung zusammen. Wellenfronten können genauso wie Lichtstrahlen eingesetzt werden, um optische Abbildungen zu beschreiben oder zu berechnen. Eine Wellenfront ist die Fläche gleicher Phase einer sich ausbreitenden Welle. Eine jede solche Wellenfront fasst sämtliche Eigenschaften eines Bündels aus Nachbarstrahlen in einem einzigen Objekt zusammen. Dadurch kann die Berechnungszeit deutlich reduziert werden, so daß eine individuelle Optimierung jedes einzelnen Brillenglases ermöglicht wird. Insbesondere ist es durch die freie Wahl der Designpunkte Ferne und/oder Nähe möglich, die Verteilung der Abbildungseigenschaften auf dem Brillenglas wunschgerecht an die individuellen Sehgewohnheiten des Brillenträgers anzupassen.

**Fig. 19** zeigt eine schematische Darstellung des physiologischen und physikalischen Modells eines Brillenglases in einer vorgegebenen Gebrauchsstellung, welches der individuellen Brillenglasberechnung bzw. Optimierung zugrunde liegt. In **Fig. 19** ist zu erkennen, daß die Strahlen von einem unendlich entfernten Objekt **184** alle parallel verlaufen, was sich in einer ebenen Wellenfront **186** widerspiegelt. Im Gegensatz dazu divergieren die Strahlen, die von einem nahen Objekt **188** ausgehen. Entsprechend ist die Wellenfront **190** gewölbt. Das Brillenglas, welches eine vorzugsweise sphärische Vorderfläche **192** und eine individuelle berechnete progressive-atorische Rückfläche **194** aufweist, muss nun dafür sorgen, daß jede Wellenfront **196**, **198** auf der Augenseite vorzugsweise so gekrümmt ist, daß das entsprechende Objekt **184**, **188** scharf auf der Netzhaut des Auges **200** abgebildet wird. Idealerweise müssen diese Wellenfronten augenseitig für alle Blickrichtungen gleich stark gekrümmt sein.

Zur Berechnung des Brillenglases wird vorzugsweise eine flexible Flächengestaltung der individuell zu berechnenden progressiven Fläche mit einer Mehrzahl an Bewertungsstellen (vorzugsweise über 7000 Bewertungsstellen) eingesetzt, wobei jeder dieser Bewertungsstellen eine eigene lokale Wellenfrontdurchrechnung zugeordnet wird. Die individuelle progressive Fläche wird vorzugsweise mittels Minimierung einer Zielfunktion, welche an den Bewertungsstellen ausgewertet wird, und unter Berücksichtigung des physiologischen Sehmodells optimiert. Auf diese Weise ist es möglich, durch individuelle Wellenfrontdurchrechnungen sehr schnell und damit online nach dem Bestelleingang die Optimierung eines Brillenglases nach der variablen Zielfunktion durchzuführen.

Die Berechnung des Brillenglases umfaßt vorzugsweise eine Optimierung mit mehr als 2000 Optimierungsparametern in einem hochdimensionalen Raum. Für die so vorgenommene Echtzeit-Online-Optimierung können Multiprozessor-Großrechner eingesetzt werden.

Vorzugsweise werden bei der individuellen Optimierung des Brillenglases nicht nur Abbildungsfehler niedriger Ordnung (Sphäre, Zylinder, Prisma), sondern auch Abbildungsfehler höherer Ordnung (z.B. Koma und sphärische Abberation) minimiert. Diesbezüglich wird z.B. auf US 7,063,421 B1 verwiesen. Die Fertigung des individuell berechneten Brillenglases erfolgt z.B. mittels Präzisionsmaschinen, vorzugsweise CNC-Schleif- und Poliermaschinen, welche die berechneten Flächendaten mit einer Genauigkeit in $\mu$m-Bereich umsetzten können.

Vorzugsweise wird bei der Optimierung der individuellen Brillengläser insbesondere die Listing'sche Regel berücksichtigt.

**Figuren 20 a** und **b** stellen jeweils schematische Darstellungen der Achslagen in einem Brillenglas ohne Berücksichtigung der Listing'schen Regel (Fig. 20a) und mit Berücksichtigung der Listing'schen Regel (Fig. 20b).

Da das Auge bei peripheren Blickauslenkungen eine leichte Rollbewegung ausführt, darf es keine feste Zylinderachse über das gesamte Brillenglas geben, sondern diese muss sich im Übergang von der Horizontalen zur Vertikalen leicht ändern (Fig. 20b). Wenn der im Auge vorhandene (durch die Refraktion bekannte) Zylinder durch das Brillenglas gut korrigiert werden soll, muss die Achslage des Zylinders im Brillenglas gut zu der Achslage passen, die das Auge aufgrund seiner Rollbewegung tatsächlich einnimmt. Passen die Achslagen von Auge und Brillenglas nicht zusammen, so ergeben sich optisch zwei schief gekreuzte Zylinder. Der Brillenglasträger hätte bei schiefen, seitlichen Blickbewegungen somit einen Astigmatismus, welcher nicht ausgeglichen wird. Das hat einen Visusabfall in diesem Bereich zur Folge. Vorzugsweise wird daher die Torsionseinstellung bei der Berechnung des individuellen Brillenglases berücksichtigt. Die Berücksichtigung der Listing'schen Regel wird umso relevanter:

- je größer der Refraktionszylinder des Kunden ist, und/oder
- je stärker die Blickauslenkung von der horizontalen und vertikalen Auslenkung abweicht, und/oder
- je stärker bzw. größer die Blickauslenkung absolut ist.

In einem konventionellen progressiven Brillenglas mit einer progressiven Vorderfläche und einer sphärische/torischen Rezeptfläche kann die Listing'sche Regel - im Gegensatz zu Brillengläsern mit einer progressiven, individuellen, augenseitigen Freiformfläche - nicht umgesetzt werden.

Ferner bevorzugt wird bei der Optimierung und Berechnung des individuellen progressiven Brillenglases eine individuelle Vordezentration berücksichtig. Somit werden die ausnutzbaren Durchmesser vergrößert. Die optimale Vordezentration kann anhand von Daten bezüglich der Fassungs- bzw. Brillenglasform sowie Daten bezüglich der Zentrierung automatisch berechnet werden. Alternativ kann eine individuelle Vordezentration vom Augenoptiker/Optometrist selbst festgelegt werden. In diesem Fall kann der anhand einer speziellen Zentrierkarte ermittelte gewünschte Durchmesser ebenfalls berücksichtigt werden. Insbesondere kann eine Vordezentration von bis zu 5 mm berücksichtigt werden.

Das individuell berechnete Brillenglas weist vorzugsweise eine sphärische oder rotationssymmetrische asphärische objektseitige Vorderfläche und eine individuelle in Abhängigkeit von den individuell festgelegten Bezugs- bzw. Designpunkte Ferne und Nähe, den individuellen Refraktionsdaten, den individuellen Parameter des Brillenträgers und der Gebrauchssituation (z.B. Pupillendistanz, Vorneigung, Fassungsscheibenwinkel, Hornhautscheitelabstand, etc.) optimierte progressive, augenseitige Freiformfläche auf.

Die Position der individuellen Fern- und Nahbezugspunkte wird vorzugsweise mittels einer individuellen Stempelung mittels nicht permanenten Markierungen aufgezeichnet. Vorzugsweise kann die Position der individuellen Fern- und Nahbezugspunkte ferner anhand von permanenten Markierungen bzw. Mikrogravuren des Brillenglases und einer Rekonstruktionsvorschrift (Schablone, Zentrierkarte) eindeutig rekonstruiert werden.

**Fig. 21 a,b** zeigen Beispiele von nicht permanenter Stempelung zweier individuellen progressiven Brillengläsern.

Die nicht permanente Markierung bzw. der Stempel eines individuell nach einem bevorzugten erfindungsgemäßen Verfahren optimierten Brillenglases besteht aus "beweglichen" und "fixen" Bestandteilen. Zu den beweglichen Teilen gehören zwei runde Klammern **202**, welche die Lage des Fernbezugspunkts bzw. des Designpunkts Ferne kennzeichnen, sowie der Nahmeßkreis **204**, welcher die Lage des Nahbezugspunkts bzw. des Designpunkts "Nähe" markiert. Der Fernbezugspunkt befindet sich in der Mitte der runden Klammern **202** und der Nahbezugspunkt in der Mitte des Nahmeßkreises **204**. Abhängig von der Lage der Fern- und Nahbezugspunkte kann der Stempel eines individuellen Brillenglases daher unterschiedlich aussehen. Mittels eines Kreuzes **206** (Zentrierkreuz) wird die Position des Zentrier- bzw. Anpaßpunkts gekennzeichnet.

Der Prismenbezugspunkt **208** befindet sich im Normalfall 4 mm unter dem Zentrierpunkt. Bei höherer Anisometropie und Kundenwunsch bezüglich einer bestimmten Gewichtung (z. B. wenn im Nahbereich die prismatischen Vertikaldifferenzen angeglichen werden sollen) kann ein Prismenangleichspunkt in die gewünschte Richtung verschoben werden.

Bei dem in **Fig. 21a** gezeigten Beispiel befindet sich der Fernbezugspunkt auf der Höhe des Zentrierpunkts. Der Nahbezugspunkt befindet sich auf einer vertikalen Höhe von -18 mm unterhalb des Zentrierpunkts. In **Fig. 21b** ist ein weiteres Beispiel einer individuellen Stempelung bzw. eines individuellen Stempelbildes eines individuellen Brillenglases dargestellt. Das Brillenglas wird für einen Brillenträger, welcher" viel Wert auf einen großen Fernbereich legt, individuell berechnet bzw. optimiert. Der Fernbezugspunkt liegt auf einer vertikalen Höhe von -4 mm unterhalb des Zentrier- bzw. Anpaßpunkts und der Nahbezugspunkt liegt auf einer vertikalen Höhe von -18 mm unterhalb des Zentrier- bzw. Anpaßpunkts.

Vorzugsweise sind die Werte für die Lage der Fern- und Nahbezugspunkte (insbesondere für die vertikale Höhe im Bezug auf den Zentrier- bzw. Anpaßpunkt) ebenfalls permanent im Brillenglas eingraviert.

In Ausnahmefällen kann die Stempelung von der oben beschriebenen abweichen. Ferner kann eine explizite nicht permanente Kennzeichnung der Positionen der Fern- und Nahbezugspunkte und/oder des Zentrier- bzw. Anpaßpunkts fehlen. Die Bezugspunkte können jedoch mit Hilfe einer Rekonstruktionsvorschrift, umfassend eine Zentrierkarte, aufgestempelte Skalen in 1 mm-Schritten und eine Glastüte eindeutig, ermittelt werden. Zur Rekonstruktion der Bezugspunkte wird die Brillenfassung mit gekennzeichnetem Zentrierpunkt auf das Zentrierkreuz der Zentrierkarte gelegt und die Position der Fern- und Nahbezugspunkte auf das Brillenglas gezeichnet. Die Position der Fern- und Nahbezugspunkte kann ebenfalls mit Hilfe der permanent eingravierten Werte unterhalb der nasalen Basiskurven- und Indexgravur ermittelt werden.

Neben einer Rekonstruktion der Position der Bezugspunkte ist es mit einer entsprechenden Zentrierkarte möglich einen optimalen Durchmesser des rohrunden Brillenglases zu ermitteln.

Die Ermittlung eines optimalen Durchmessers mittels Zentrierkarte kann folgendermaßen erfolgen:

1) Bestimmen des für die ausgesuchte Fassung entsprechenden Mindestdurchmessers, der - unabhängig von der seitlichen Zentrierung - dem kleinsten umschreibenden Durchmesserkreis der Zentrierkarte entspricht. Dieser Wert entspricht dem ersten Wert in einer Durchmesserbestellung, z. B. 50/60.

2) Positionieren des in der Anpassung ermittelten Durchblickspunkts so auf der Zentrierkarte, daß er mit dem Zentrierkreuz der Zentrierkarte zur Deckung kommt.

3) Ablesen des größten notwendigen Durchmessers. Dies ist bei einer Dezentration Richtung nasal, wie sie in den meisten Fällen auftritt (Pupillendistanz PD kleiner als der Mittenabstand der Fassung), der Durchmesserkreis, welcher die Fassung temporal umschreibt. Dieser Wert entspricht dem zweiten Wert der Durchmesserbestellung, z.B. 50/**60**. Vorzugsweise ist die Differenz zwischen nutzbarem und Mindestdurchmesser nicht größer als 10 mm.

4) Sind die Durchmesser nasal und temporal gleich, so empfiehlt sich die Bestellung in zentrischer Ausführung.

Zusätzlich zu der nicht permanenten Markierungen bzw. Stempelungen weist das individuelle Brillenglas ebenfalls permanente (Mikro-)Gravuren auf.

**Fig. 22** zeigt die permanente Gravur eines individuell optimierten linken Brillenglases, das von hinten betrachtet wird (d.h. von der augenseitigen Seite). Die Funktionsgravur bzw. die permanente Markierung zur Ausrichtung des Brillenglases ist das Unendlichzeichen. Die beiden Funktionsgravuren **210**, **212** befinden sich in einem Abstand von 34 mm zueinander auf Höhe des Zentrierpunkts bzw. Zentrierkreuzes. Unterhalb des nasalen Unendlichzeichens **212** befinden sich die jeweils zweistellige Basiskurvengravur **214** und Indexgravur **216**. Darunter befindet sich die Gravur **218** für die Lage von Fern- und Nahbezugspunkt. Die erste Zahl gibt dabei den vertikalen Abstand des Fernbezugspunkts relativ zum Zentrier- bzw. Anpaßpunkt an. Die zweite Zahl gibt den vertikalen Abstand des Nahbezugspunkts relativ zum Zentrier- bzw. Anpaßpunkt an.

Der Fernbezugspunkt kann vorzugsweise in einem Bereich zwischen -4 und +4 mm unterhalb bzw. oberhalb des Zentrierpunkts befinden. Der Nahbezugspunkt kann sich vorzugsweise in einem Bereich zwischen -13 und -20 mm unter dem Zentrier- bzw. Anpaßpunkt befinden.

Temporal unter der Funktionsgravur **210** befindet sich die zweistellige Additionsgravur **220**.

Zusammengefaßt bezeichnen in **Fig. 22**:

∞    die Funktionsgravur;

25    die Addition;

65    die Basiskurve;

60    die Brechzahl;

-4    den individuellen vertikalen Abstand des Fernbezugspunkts vom Zen- trier- bzw. Anpaßpunkt;

18      den individuellen vertikalen Abstand des Nahbezugspunkts vom Zen- trier- bzw. Anpaßpunkt.

Das fertigbearbeitete und gestempelte Brillenglas wird in einer Glastüte verpackt und dem Augenoptiker/Kunden geliefert. Ein Beispiel einer Glastüte ist in **Fig. 23** gezeigt. **Fig. 24** zeigt eine Liste der auf der Glastüte verwendeten Piktogramme bzw. Symbole.

Die individuellen Daten des Brillenträgers sind auf jeder Glastüte aufgedruckt. Insbesondere sind auf jeder Glastüte folgende Daten aufgedruckt:

- Glastyp, Material, Farbe, Beschichtung, Durchmesser
- Bestellwert: Sphäre, Zylinder, Achse, Prisma (resultierend), Basis (resultierend), Addition;
- Soll-Messwerte für das Scheitelbrechwertmessgerät im Messpunkt für Ferne und Addition in konkaver Scheitelmessstellung inkl. des messbaren Prismas im Prismenbezugspunkt (zusammengesetzt aus DRP und bestellten Prismen);

- Bei prismatischen Refraktionsdaten: Angaben zur Art der Refraktion: Pupillenmittenzentrierung (PMZ) oder Formelfall (FF) und Größe und Richtung der notwendigen Zentrierkorrektur;
- Allgemeine Auftragsdaten, ergänzende Informationen und Kommission auf der Rückseite der Glastüte;
- Angaben zu den individuellen Parametern: monokulare PD, HSA, VN, FSW;
- Angaben zu den Designpunkten: Lage von Fern- und Nahbezugspunkt bezogen auf den Zentrier- bzw. Anpaßpunkt;
- Basiskurve, Vordezentration und Inset des Glases; Angabe der korrigierten PD zum Einschleifen (COR PD), wenn die Scheibenform und die Zentrierdaten bekannt sind.

Auf der Glastüte finden sich insbesondere die relevanten Daten für ein korrektes Einschleifen in der Brillenfassung, insbesondere Daten bezüglich der Fassungs- bzw. Scheibenform.

Insbesondere wird bei einer Bestellung mit Angabe der Scheibenform und der Zentrierdaten (wie bei den Sportgläsern), die korrigierte Pupillendistanz PD zum Einschleifen (COR PD) berechnet. Diese ist notwendig, um die richtige Kunden-PD in der fertig verglasten Brille zu erhalten. Auch bei Brillengläsern mit Korrektionsprisma ist die COR PD anstatt der Kunden PD zum Einschleifen zu verwenden, wenn die Form angegeben wurde. Die notwendige Zentrierkorrektur für Prismen mit horizontaler und vertikaler Basislage ist bereits bei der Berechnung der Brillengläser berücksichtigt worden. Der Wert für die Zentrierkorrektur auf der Glastüte ist deshalb stets null.

Bei einer Bestellung ohne Formangabe kann die COR PD nicht berechnet werden, da die zu deren Berechnung notwendigen Parameter (Fassungs- und Zentrierdaten) nicht übermittelt werden. Bei einem individuell nach einem bevorzugten Optimierungsverfahren optimierten progressiven Brillenglas mit Korrektionsprismen wird die Zentrierkorrektur für Prismen mit horizontaler und vertikaler Basislage vorzugsweise bereits bei der Berechnung der Gläser berücksichtigt. Der Wert für die Zentrierkorrektur auf der Glastüte bleibt null. Dieser Wert bezieht sich bei einer Bestellung ohne Formangabe auf die PD.

**Figuren 25 a** und **b** illustrieren die Zentrierung eines progressiven Brillenglases vor den Augen des Brillenträgers sowie die entsprechende Lage der Bezugspunkte. Das in **Fig. 25a** gezeigte Brillenglas ist ein individuelles Brillenglas mit individuell nach einem bevorzugten erfindungsgemäßen Verfahren ermittelten Positionen der Fern- und Nahbezugspunkte. Insbesondere sind die Positionen des in **Fig. 25a** gezeigten Brillenglases individuell in Abhängigkeit von den Fassungsdaten festgelegt. Das in **Fig. 25b** gezeigte Brillenglas ist ein Standardbrillenglas.

Die individuell berechneten progressiven Brillengläser werden nach Bezugspunktforderung angepasst. Das bedeutet, daß der Zentrier- bzw. Anpaßpunkt (bzw. das Zentrierkreuz) bei Nullblickrichtung in habitueller Kopf- und Körperhaltung auf Pupillenmitte liegen soll. Die Mindesteinschleifhöhe hängt von der Lage des Nahbezugspunkts ab. Vorzugsweise bleiben mindestens noch 2 mm unterhalb des Nahbezugspunkts in der Fassung erhalten. Die minimale Einschleifhöhe liegt somit vorzugsweise bei 15 mm unter dem Zentrierpunkt. Werden Gleitsichtgläser abweichend von der Zentrierempfehlung angepasst, kann es zu Einschränkungen in den Abbildungseigenschaften kommen.

Bei einer fehlerhaften Zentrierung des Brillenglases, insbesondere bei einer zu tiefen Zentrierung, ergeben sich bereits im Fernbereich geringfügige Einschränkungen durch die tiefe Zentrierung. Die Unterschiede kommen insbesondere dadurch zustande, daß das Brillenglas nicht in der bei der Optimierung zugrunde gelegten Gebrauchssituation getragen wird.

Im Nahbereich hingegen zeigen sich, im Gegensatz zum Fernbereich, deutliche Einschränkungen in einem tiefer zentrierten Brillenglas. Zum einen resultieren diese Einschränkungen aus der einfachen Tatsache, daß der Nahbereich je nach Fassungsgröße nicht mehr in der Fassung vorhanden ist und der Brillenträger beim Blick in die Nähe durch den Progressionsbereich sieht, der deutlich schmäler ist als der Nahbereich. Zum anderen entstehen zusätzliche Fehler dadurch, daß das Brillenglas nicht in der bei der Optimierung zugrunde gelegten Gebrauchssituation getragen wird. Zusätzlich wird bei gleicher Blicksenkung die Nahwirkung nicht erreicht und der Kunde hat einen zusätzlichen Akkommodationsaufwand.

Eine Betonung der Sehbereiche kann daher richtigerweise wie oben beschrieben durch eine Verschiebung des Fern- und/oder Nahbezugspunkts erzeugt werden. Zusätzlich können bei einer abweichenden Hauptblickrichtung, z.B. bei besonders großen oder kleinen Menschen, die Hauptsehbereiche so individuell angeordnet werden, daß diese mit der jeweiligen Hauptblickrichtung zusammenfallen.

In den Bezugspunkten werden auch die so genannten Soll-Messwerte gemessen, wobei die Soll-Messwerte neben den Bestellwerten auf der Glastüte des individuellen Brillenglases angegeben werden. Die Soll-Messwerte beziehen sich vorzugsweise auf die konkave Scheitelmessstellung. Toleranzbetrachtungen beziehen sich dabei auf die Soll-Messwerte, nicht auf die Bestellwerte.

**Fernwirkung**

Die Sollmesswerte für Sphäre, Zylinder und Achse werden im Fernbezugspunkt überprüft. Dieser Fernbezugspunkt befindet sich individuell unterschiedlich, vorzugsweise innerhalb eines Bereichs von +4 bis -4 mm, um den Zentrierpunkt. Die genaue Lage des Fernbezugspunkts kann der Zusatzgravur unterhalb der Basiskurven- und Indexgravur entnommen werden. Die Messung der Fernteilwirkung ist in Fig. 26a schematisch dargestellt.

**Prismatische Wirkung**

Im Prismenbezugspunkt wird eine kombinierte Wirkung aus Dickenreduktionsprisma (Basislage immer 270°) und Korrektionsprismen gemessen. Die Messung der prismatischen Wirkung ist in **Fig. 26b** schematisch dargestellt.

**Nahwirkung**

Der Nahbezugspunkt befindet sich individuell unterschiedlich innerhalb eines Bereichs von -13 bis -20 mm unterhalb des Zentrierpunkts. Die genaue Lage des Nahbezugspunkts kann der Zusatzgravur unterhalb der Basiskurven- und Indexgravur entnommen werden. Die Messung der Nahwirkung ist in Fig. 26c gezeigt.

**Addition**

Der Sollmesswert der Addition entspricht der Differenz der mittleren Wirkung (sphärisches Äquivalent) zwischen Fern- und Nahbezugspunkt. In vielen Fällen ist es jedoch einfacher und im Allgemeinen ausreichend die Übereinstimmung von bestellter und gravierter Addition zu überprüfen.

Das nach dem oben beschriebenen Verfahren bzw. flexible Brillenglasdesign zeichnet sich insbesondere durch folgende vorteilhafte Eigenschaften aus:

- optimale Korrektur der Fehlsichtigkeit durch Berücksichtigung aller Refraktionsdaten (Wirkungsoptimierung), der Fassungs- und Zentrierdaten sowie von PD, HSA, VN und FSW;
- Sehbereiche sind immer optimal groß und ideal überlappend angeordnet, da alle individuellen Parameter und Refraktionsdaten bei der Optimierung berücksichtigt werden;
- Optimierung

    - in Gebrauchsstellung;
    - für alle Refraktionsdaten;
    - Wellenfrontenoptimierung unter Berücksichtigung der Abbildungsfehler höherer Ordnung, wie Koma und sphärische Aberration;
    - Berücksichtigung der Listing'schen Regel;
    - in Freiformtechnologie;

- Höchste Spontanverträglichkeit;
- Punktgenauer Inset, auch abweichend von 100% Konvergenzvermögen bestellbar (z. B. für Einäugige);
- Identische Sehbereiche rechts/links, auch bei Anisometropien;
- Bestellung der Refraktionsdaten für die Ferne auch in 0,12-dpt-Schritten;
- Bestellung von Prismen/MDM inklusive;
- Perfekte Ästhetik.

Vorzugsweise weist das individuell in Abhängigkeit von den Kundenbedürfnissen und Parametern ermittelte bzw. berechnete Brillenglasdesign charakteristische Eigenschaften eines ausgewogenen, universellen Brillenglasdesigns, d.h. maximal große Sehbereiche für alle Entfernungen bei harmonischen Übergängen zwischen den zentralen und peripheren Sehbereichen auf. Ein solches Design bzw. ein solches Brillenglas bietet somit einen optimalen Sehkomfort für ein breites Spektrum von Situationen im täglichen Leben (Autofahren, Freizeitaktivitäten, Lesen, etc.).

**Patentansprüche**

1. Computerimplementiertes Verfahren zum Berechnen eines individuellen Brillenglasdesigns für ein progressives Brillenglas mit einer variabel einstellbaren, individuellen vertikalen Position des Fern- und/oder Nahbezugspunkts umfassend folgende Schritte:

   - Vorgeben eines Startdesigns, welches eine vorgegebene vertikale Position des Fern- und/oder des Nahbezugspunkts aufweist und wobei das Startdesign eine Sollvorgabe $S'_{Soll}(y')$ für die räumliche Verteilung mindestens einer optischen Eigenschaft des individuellen Brillenglases umfaßt;
   - Berechnen des individuellen Brillenglasdesigns derart, daß dieses die geforderte, individuelle vertikale Position des Fern- und/oder Nahbezugspunkts aufweist, wobei die Berechnung des individuellen Brillenglasdesigns eine Berechnung einer Sollvorgabe $S_{Soll}(y)$ für die räumliche Verteilung mindestens einer optischen Eigenschaft des individuellen Brillenglases mittels einer Zuordnung $S_{Soll}(y) = S'_{Soll}(y')$ und einer Transformation $Y: y \mapsto y'$, $y \mapsto y'(y) = y - \Delta y(y)$ der entsprechenden Sollvorgabe $S'_{Soll}(y')$ des Startdesigns umfaßt, wobei $y'$ die vertikale Koordinate der Sollvorgabe des Startdesigns und $y$ die vertikale Koordinate der transformierten Sollvorgabe des individuellen Brillenglasdesigns bezeichnen.

2. Verfahren gemäß Anspruch 1, wobei für die Transformation $Y$ gilt:

$$\Delta y(y) = f(y) + y_0,$$

   und wobei wobei:

   für $f'(y) > 0$ die Transformation eine lokale Streckung und
   für $f'(y) < 0$ die Transformation eine lokale Stauchung des Startdesigns bewirkt.

3. Verfahren gemäß Anspruch 2, wobei die Funktion $f(y)$ eine monotone Funktion ist; und/oder wobei $|f(y)|$ in der Progressionszone größere Werte als im Nah- oder Fernzone annimmt.

4. Verfahren gemäß einem der Ansprüche 2 oder 3, wobei die Transformation $Y$ von der Differenz der vertikalen Position des Fern- und/oder des Nahbezugspunkts des individuellen Brillenglasdesigns und der Differenz der vertikalen Position des Fern- und/oder des Nahbezugspunkts des Startdesigns abhängt.

5. Verfahren gemäß einem der Ansprüche 2 bis 4, wobei die Funktion $f(y)$

   eine Doppelasymptote $f(y) = b + \dfrac{a}{\left(1 + e^{c(y+d)}\right)^m}$ mit Transformationskoeffizienten $a, b, c, m, d$ ist; oder

   eine Gauß'sche Kumulative $f(y) = \dfrac{a}{2}\left(1 + erf\left(\dfrac{y-b}{\sqrt{2}c}\right)\right)$ mit Transformationskoeffizienten $a, b, c$ ist; oder

   eine Lorentz'sche Kumulative $f(y) = \dfrac{a}{\pi}\left(\arctan\dfrac{y-b}{c}\right) + \dfrac{\pi}{2}$ mit Transformationskoeffizienten $a, b, c$ ist; oder

eine Kumulative SDS Funktion

$$f(y) = \frac{a}{2c}\left(2d\ln\left(\exp\left(\frac{2y+c}{2d}\right) + \exp\left(\frac{b}{d}\right)\right) - 2d\ln\left(\exp\left(\frac{y}{d}\right) + \exp\left(\frac{2b+c}{2d}\right)\right)\right) + c$$

mit Transformationskoeffizienten $a$, $b$, $c$, $d$ ist; oder

eine Logistische Dosis-Response Funktion $f(y) = a\left/\left(1 + \left(\frac{y}{b}\right)^c\right)\right.$ mit Transformationskoeffizienten

$a$, $b$, $c$ ist; oder.

eine Log-Normal-Kumulative Funktion $f(y) = \frac{a}{2}erfc\left(-\ln\left(\frac{y}{b}\right)\middle/\sqrt{2}c\right)$ mit Transformationskoeffizienten $a$, $b$, $c$ ist.

6. Verfahren gemäß Anspruch 5, wobei die Transformationskoeffizienten der Funktion $f(y)$ mittels eines iterativen Verfahrens ausgehend von vorgegebenen Startwerten bestimmt werden.

7. Verfahren gemäß Anspruch 5 oder 6, wobei die Transformationskoeffizienten der Funktion $f(y)$ in Abhängigkeit von:

- der Differenz $y_F$ - $y_{FD}$ der vertikalen Position $y_F$ des Fernbezugspunkts des individuellen Brillenglasdesigns und der vertikalen Position $y_{FD}$ des Fernbezugspunkts des Startdesigns; und/oder
- der Differenz $y_N$ - $y_{ND}$ der vertikalen Position $y_N$ des Nahbezugspunkts des individuellen Brillenglasdesigns und der Position $y_{ND}$ des Nahbezugspunkts des Startdesigns

festgelegt werden.

8. Verfahren gemäß einem der Ansprüche 5 bis 7, wobei die Transformationskoeffizienten $a$ und $b$ numerisch mittels eines Newton-Iterationsverfahrens so bestimmt werden, daß wenn $y_0 = y_F - y_{FD}$ folgende Bedingungen erfüllt werden:

$$y_{FD} = y_F - \Delta y(y_F) \quad \text{und} \quad y_{ND} = y_N - \Delta y(y_N),$$

wobei:

$y_F$ die vertikale Position des Fernbezugspunkts des individuellen Brillenglasdesigns;
$y_{FD}$ die vertikale Position des Fernbezugspunkts des Startdesigns;
$y_N$ die vertikale Position des Nahbezugspunkts des individuellen Brillenglasdesigns;
$y_{ND}$ die vertikale Position des Nahbezugspunkts des Startdesigns

bezeichnen.

9. Verfahren gemäß einem der vorangegangenen Ansprüche, wobei die zumindest eine optische Eigenschaft des Brillenglases der Astigmatismus oder die astigmatische Abweichung ist.

10. Verfahren gemäß einem der vorangegangenen Ansprüche, wobei

- das individuelle Brillenglasdesign ferner eine individuelle Objektabstandsfunktion entlang der Hauptblicklinie des Brillenglases umfaßt;
- das Startdesign ferner eine Startobjektabstandsfunktion entlang der Hauptlinie des Brillenglases umfaßt; und

wobei die individuelle Objektabstandsfunktion mittels einer zweiten Transformation $Y_2$ der Startobjektabstandsfunk-

tion erhalten wird.

11. Verfahren gemäß Anspruch 10, wobei die Transformationskoeffizienten der zweiten Transformation $Y_2$ mittels einer Newtoniteration derart bestimmt werden, daß der Brechwert des Brillenglases in dem Fern- und/oder dem Nahbezugspunkt des individuellen Brillenglasdesigns mit dem Brechwert des Brillenglases in dem Fern- und/oder dem Nahbezugspunkt des Startdesigns übereinstimmt.

12. Verfahren gemäß Anspruch 10 oder 11, wobei die reziproke Objektentfernung $S_1 (u_0, y)$ durch eine Doppelasymtotenfunktion:

$$S_1(u_0, y) = b_s + \frac{a_s}{(1 + e^{c_s(y - y_0 + d_s)})^{m_s}}$$

mit Koeffizienten $a_s, b_s, c_s, d_s, m_s$ beschrieben wird und wobei für vorgegebene Koeffizienten $a_s, b_s, m_s$ die Koeffizienten $c_s, d_s$ mittels einer Newtoniteration bestimmt werden.

13. Verfahren gemäß einem der vorangegangenen Ansprüche, wobei die Sollvorgabe bzw. die Sollvorgaben des individuellen Brillenglasdesigns
mit einem Skalierungsfaktor $l/l_D$ multipliziert werden, oder
mit einer Funktion $h = h(S'(y'), l_D/l)$ skaliert werden, so daß $S(y) = S(y') \cdot h(S'(y'), l_D/l)$, oder
die Sollvorgabe bzw. die Sollvorgaben des individuellen Brillenglasdesigns mit einer Funktion $h = h(l_D/l)$ skaliert werden, so daß $S(y) = S(y') \cdot h(l_D/l)$,
wobei

$l$ die Progressionslänge des individuellen Brillenglasdesign; und
$l_D$ die Progressionslänge des Startdesigns

bezeichnen.

14. Computerimplementiertes Verfahren zum Berechnen eines individuellen Brillenglasdesigns für ein progressives Brillenglas mit einer variabel einstellbaren, individuellen vertikalen Position des Fern- und/oder Nahbezugspunkts, umfassend folgende Schritte:

- Vorgeben eines Startdesign, welches eine vorgegebene vertikale Position des Fern- und/oder des Nahbezugspunkts aufweist, und wobei das Startdesign eine Objektabstandsfunktion $S_1'(y')$ entlang der Hauptlinie des Brillenglases umfaßt;
- Berechnen des individuellen Brillenglasdesigns derart, daß dieses die geforderte, individuelle vertikale Position des Fern- und/oder Nahbezugspunkts aufweist, wobei die Berechnung des individuellen Brillenglasdesigns eine Berechnung einer individuellen Objektabstandsfunktion $S_1(y)$ entlang der Hauptlinie des Brillenglases mittels einer Zuordnung $S_1(y) = S_1'(y')$ und einer Transformation $Y : y \mapsto y', y \mapsto y'(y) = y - \Delta y(y)$ der entsprechenden Objektabstandsfunktion $S_1'(y')$ des Startdesigns umfaßt, wobei $y'$ die vertikale Koordinate entlang der Hauptlinie des Brillenglases und $y$ die vertikale Koordinate entlang der Hauptlinie des Brillenglases der transformierten Objektabstandsfunktion des individuellen Brillenglasdesigns bezeichnen.

15. Verfahren gemäß Anspruch 14, wobei die Transformationskoeffizienten der Transformation $Y$ mittels einer Newtoniteration, vorzugsweise einer zweidimensionalen Newtoniteration, derart bestimmt werden, daß der Brechwert des Brillenglases in dem Fern- und/oder dem Nahbezugspunkt des individuellen Brillenglasdesigns mit dem Brechwert des Brillenglases in dem Fern- und/oder dem Nahbezugspunkt des Startdesigns übereinstimmt.

16. Verfahren gemäß Anspruch 14 oder 15, wobei die reziproke Objektentfernung $S_1(u_0, y)$ durch eine Doppelasymtotenfunktion:

$$S_1(u_0, y) = b_s + \frac{a_s}{(1 + e^{c_s(y-y_0+d_s)})^{m_s}}$$

mit Koeffizienten $a_s$, $b_s$, $c_s$, $d_s$, $m_s$ beschrieben wird und wobei für vorgegebene Koeffizienten $a_s$, $b_s$, $m_s$ die Koeffizienten $c_s$, $d_s$ mittels einer Newtoniteration bestimmt werden.

**17.** Verfahren zum Herstellen eines individuellen progressiven Brillenglases mit einer variabel einstellbaren vertikalen Position des Fern- und/oder Nahbezugspunkts umfassend folgende Schritte:

- Berechnen eines individuellen Brillenglasdesigns, welches die geforderte vertikale Position des Fern- und/oder des Nahbezugspunkts aufweist, nach dem Verfahren zum Berechnen eines individuellen Brillenglasdesigns gemäß einem der Ansprüche 1 bis 16;
- Berechnen bzw. Optimieren des Brillenglases nach dem individuellen Brillenglasdesign.

**18.** Vorrichtung zum Herstellen eines individuellen progressiven Brillenglases mit einer variabel einstellbaren vertikalen Position des Fern- und/oder Nahbezugspunkts umfassend:

- Designberechnungsmittel, welche ausgelegt sind, ein Berechnungsverfahren eines individuelles Brillenglasdesigns gemäß einem der Ansprüche 1 bis 16 durchzuführen;
- Optimierungs- bzw. Berechnungsmittel, welche ausgelegt sind, ein Berechnen bzw. Optimieren des Brillenglases nach dem individuellen Brillenglasdesign durchzuführen.

**19.** Computerprogrammerzeugnis, welches ausgelegt ist, wenn geladen und ausgeführt auf einem Computer, ein Verfahren zum Berechnen und Optimieren eines Brillenglases durchzuführen, wobei das Verfahren folgende Schritte umfaßt:

- Berechnen eines individuellen Brillenglasdesigns, welches die geforderte vertikale Position des Fern- und/oder Nahbezugspunkts aufweist nach dem Verfahren zum Berechnen eines individuellen Brillenglasdesigns gemäß einem der Ansprüche 1 bis 16;
- Berechnen bzw. Optimieren des Brillenglases nach dem individuellen Brillenglasdesign.

**Claims**

1. Computer-implemented method for computing an individual spectacle lens design for a progressive spectacle lens with a variably adjustable individual vertical position of the far and/or the near reference point comprising the following steps:

   • defining an initial design, which has a preset vertical position of the far and/or near reference point and wherein the initial design comprises a preset target value $S'_{soll}(y')$ for the spatial distribution of at least one optical property of the individual spectacle lens;
   • computing the individual spectacle lens design in such a manner that this has the required individual vertical position of the far and/or near reference point, wherein the computation of the individual spectacle lens design comprises a computation of a preset target value $S_{soll}(y)$ for the spatial distribution of at least one optical property of the individual spectacle lens by means of a correspondence $S_{soll}(y) = S'_{soll}(y')$ and a transformation $Y : y \mapsto y'$, $y \mapsto y'(y) = y - \Delta y(y)$ of the corresponding preset target value $S'_{soll}(y')$ of the initial design, wherein $y'$ denotes the vertical coordinate of the preset target value of the initial design and $y$ denotes the vertical coordinate of the transformed preset target value of the individual spectacle lens design.

2. Method according to claim 1, wherein the following applies for the transformation $Y$: $\Delta y(y) = f(y) + y_0$, and wherein the transformation effects a local elongation for $f'(y) > 0$ and the transformation effects a local elongation of the initial design for $f'(y) < 0$.

3. Method according to claim 2, wherein the function $f(y)$ is a monotonic function; and/or wherein $|f'(y)|$ assumes higher values in the progression zone than in the near or far zone.

4. Method according to one of claims 2 or 3, wherein the transformation $Y$ is dependent on the difference of the vertical position of the far and/or the near reference point of the individual spectacle lens design and the difference of the vertical position of the far and/or the near reference point of the initial design.

5. Method according to one of claims 2 to 4, wherein the function $f(y)$ is

a double asymptote $f(y) = b + \frac{a}{(1+e^{c(y+d)})^m}$ with transformation coefficients $a, b, c, m, d$; or

a Gaussian cumulative function $f(y) = \frac{a}{2}\left(1 + erf\left(\frac{y-b}{\sqrt{2}c}\right)\right)$ with transformation

coefficients $a, b, c$; or

a Lorentz cumulative function $f(y) = \frac{a}{\pi}\left(arctan\frac{y-b}{c}\right) + \frac{\pi}{2}$ with transformation coefficients $a, b, c$; or

a cumulative SDS function

$$f(y) = \frac{a}{2c}\left(2d\,In\left(exp\left(\frac{2y+c}{2d}\right) + exp\left(\frac{b}{d}\right)\right) - 2d\,In\left(exp\left(\frac{y}{d}\right) + exp\left(\frac{2b+c}{2d}\right)\right) + c\right)$$ with transformation coefficients $a, b, c, d$; or

a logistic dose response function $f(y) = a / \left(1 + \left(\frac{y}{b}\right)^c\right)$ with transformation coefficients $a, b, c$; or

a log normal cumulative function $f(y) = \frac{a}{2} erfc\left(-In\left(\frac{y}{b}\right) / \sqrt{2}c\right)$ with transformation coefficients $a, b, c$.

6. Method according to claim 5, wherein the transformation coefficients of the function $f(y)$ are determined by means of an iterative method working from preset initial values.

7. Method according to claim 5 or 6, wherein the transformation coefficients of the function $f(y)$ are defined in dependence on:

    • the difference $y_F$ - $y_{FD}$ of the vertical position $y_F$ of the far reference point of the individual spectacle lens design and the vertical position $y_{FD}$ of the far reference point of the initial design; and/or
    • the difference $y_N$ - $y_{ND}$ of the vertical position $y_N$ of the near reference point of the individual spectacle lens design and the position $y_{ND}$ of the near reference point of the initial design.

8. Method according to one of claims 5 to 7, wherein the transformation coefficients $a$ and $b$ are determined numerically by means of a Newton's iteration method so that when $y_0 = y_F$ - $y_{FD}$ the following conditions are met:

$$y_{FD} = y_F - \Delta y(y_F) \text{ and } y_{ND} = y_N - \Delta y(y_N),$$

wherein

    $y_F$ denotes the vertical position of the far reference point of the individual spectacle lens design;
    $y_{FD}$ denotes the vertical position of the far reference point of the initial design;
    $y_N$ denotes the vertical position of the near reference point of the individual spectacle lens design;
    $y_{ND}$ denotes the vertical position of the near reference point of the initial design.

9. Method according to one of the preceding claims, wherein the at least one optical property of the spectacle lens is the astigmatism or the astigmatic aberration.

10. Method according to one of the preceding claims, wherein

> • the individual spectacle lens design additionally comprises an individual object distance function along the main viewing line of the spectacle lens;
> • the initial design additionally comprises an initial object distance function along the main line of the spectacle lens; and

wherein the individual object distance function is obtained by means of a second transformation $Y_2$ of the initial object distance function.

11. Method according to claim 10, wherein the transformation coefficients of the second transformation $Y_2$ are determined by means of a Newton's iteration in such a manner that the power of the spectacle lens in the far and/or the near reference point of the individual spectacle lens design is the same as the power of the spectacle lens in the far and/or the near reference point of the initial design.

12. Method according to claim 10 or 11, wherein the reciprocal object distance $S_1(u_0, y)$ is described by a double asymptote function:

$$S_1(u_0, y) = b_s + \frac{a_s}{(1 + e^{c_s(y - y_0 + d_s)})^{m_s}}$$

with coefficients $a_s$, $b_s$, $c_s$, $d_s$, $m_s$ and wherein for preset coefficients $a_s$, $b_s$, $m_s$ the coefficients $c_s$, $d_s$ are determined by means of a Newton's iteration.

13. Method according to one of the preceding claims, wherein the preset target value or the preset target values of the individual spectacle lens design are multiplied by a scaling factor $l/l_D$ or
are scaled with a function $h = h(S'(y'), l_D/l)$, so that $S(y) = S(y') \cdot h(S'(y'), l_D/l)$, or the preset target value or the preset target values of the individual spectacle lens design are scaled with a function $h = h(l_D/l)$ so that $S(y) = S(y') \cdot h(l_D/l)$, wherein

> $l$ denotes the progression length of the individual spectacle lens design; and
> $l_D$ denotes the progression length of the initial design.

14. Computer-implemented method for computing an individual spectacle lens design for a progressive spectacle lens with a variably adjustable individual vertical position of the far and/or the near reference point comprising the following steps:

> • defining an initial design, which has a preset vertical position of the far and/or near reference point and wherein the initial design comprises an object distanced function $S_1'(y')$ along the main line of the spectacle lens;
> • computing the individual spectacle lens design in such a manner that this has the required individual vertical position of the far and/or near reference point, wherein the computation of the individual spectacle lens design comprises a computation of an individual object distance function $S_1(y)$ along the main line of the spectacle lens by means of a correspondence $S_1(y) = S_1'(y')$ and a transformation $Y : y \mapsto y', y \mapsto y'(y) = y - \Delta y(y)$ of the corresponding object distance function $S_1'(y')$ of the initial design, wherein $y'$ denotes the vertical coordinate along the main line of the spectacle lens and $y$ denotes the vertical coordinate along the main line of the spectacle lens of the transformed object distance function of the individual spectacle lens design.

15. Method according to claim 14, wherein the transformation coefficients of the transformation $Y$ are determined by means of a Newton's iteration, preferably a two-dimensional Newton's iteration, in such a manner that the power of the spectacle lens in the far and/or the near reference point of the individual spectacle lens design is the same as the power of the spectacle lens in the far and/or the near reference point of the initial design.

16. Method according to claim 14 or 15, wherein the reciprocal object distance $S_1(u_0, y)$ is described by a double asymptote function:

$$S_I\,(u_0,\,y) = b_s + \frac{a_s}{(1+e^{c_s(y-y_0+d_s)})^{m_s}}$$

with coefficients $a_s$, $b_s$, $c_s$, $d_s$, $m_s$ and wherein for preset coefficients $a_s$, $b_s$, $m_s$ the coefficients $c_s$, $d_s$ are determined by means of a Newton's iteration.

17. Method for producing an individual progressive spectacle lens with a variably adjustable vertical position of the far and/or near reference point comprising the following steps:

   • computing an individual spectacle lens design, which has the required vertical position of the far and/or the near reference point, using the method for computing an individual spectacle lens design according to one of claims 1 to 16;
   • computing or optimising the spectacle lens according to the individual spectacle lens design.

18. Device for producing an individual progressive spectacle lens with a variably adjustable vertical position of the far and/or near reference point comprising:

   • design computing means, which are designed to perform a computation method for an individual spectacle lens design according to one of claims 1 to 16;
   • optimising or computing means, which are designed to perform a computation or optimisation of the spectacle lens according to the individual spectacle lens design.

19. Computer program product, which, when loaded and performed on a computer, is designed to perform a method for computing and optimising a spectacle lens, wherein the method comprises the following steps:

   • computing an individual spectacle lens design, which has the required vertical position of the far and/or near reference point, using the method for computing an individual spectacle lens design according to one of claims 1 to 16;
   • computing or optimising the spectacle lens according to the individual spectacle lens design.


**Revendications**

1. Procédé mis en oeuvre par ordinateur pour calculer un modèle individuel de verre de lunettes pour un verre de lunettes progressif avec une position verticale individuelle réglable de manière variable du point de référence distant et/ou du point de référence proche, comprenant les étapes suivantes :

   - indication d'un modèle initial de départ, présentant une position verticale donnée du point de référence distant et/ou du point de référence proche, sachant que le modèle initial de départ comprend une valeur de consigne $S'_{soll}(y')$ pour la répartition dans l'espace d'au moins une propriété optique du verre de lunettes individuel ;
   - calcul du modèle de verre de lunettes individuel de telle manière que celui-ci présente la position verticale individuelle exigée du point de référence distant et/ou du point de référence proche, sachant que le calcul du modèle de verre de lunettes individuel comprend un calcul d'une valeur de consigne $S_{soll}(y)$ pour la répartition dans l'espace au moins d'une propriété optique du verre de lunettes individuel au moyen d'une formule $S_{soll}(y) = S's_{oll}(y')$ et d'une transformation Y : $y \mapsto y'$, $y \mapsto y'(y) = y - \Delta y(y)$ de la valeur théorique correspondante $S'_{soll}(y')$ du modèle initial de départ, sachant que $y'$ désigne la coordonnée verticale de la donnée théorique du modèle initial de départ et $y$ la coordonnée verticale de la valeur de consigne transformée du modèle de verre de lunettes individuel.

2. Procédé selon la revendication 1, sachant que la transformation Y correspond à : $\Delta y(y) = f(y) + y_0$, et :

   sachant que :

      si $f'(y) > 0$ la transformation provoque une extension locale et
      si $f'(y) < 0$ la transformation provoque une déformation locale du modèle initial de départ.

3. Procédé selon la revendication 2, sachant que la fonction $f(y)$ est une fonction monotone ; et/ou dans lequel les valeurs de | *f'(y)* | sont plus grandes dans la zone de progression que dans la zone proche ou dans la zone distante.

4. Procédé selon l'une quelconque des revendications 2 ou 3, sachant que la transformation Y dépend de la différence de la position verticale du point de référence distant et/ou du point de référence proche du modèle de verre de lunettes individuel et de la différence de la position verticale du point de référence distant et/ou du point de référence proche du modèle initial de départ.

5. Procédé selon l'une quelconque des revendications 2 à 4, sachant que la fonction f (y) est une asymptote double

$$f(y) = b + \frac{a}{(1 + e^{c(y+d)})^m}$$

avec coefficients de transformation *a*, *b*, *c*, *m*, *d ; ou*
une fonction de distribution cumulative de Gauss

$$f(y) = \frac{a}{2}\left(1 + erf\left(\frac{y-b}{\sqrt{2}c}\right)\right)$$

avec coefficients de transformation *a, b, c ; ou*
une fonction cumulative de Lorenz

$$f(y) = \frac{a}{\pi}\left(\arctan\frac{y-b}{c}\right) + \frac{\pi}{2}$$

avec coefficients de transformation *a, b, c ; ou*
une fonction cumulative SDS

$$f(y) = \frac{a}{2c}\left(2d\ln\left(\exp\left(\frac{2y+c}{2d}\right) + \exp\left(\frac{b}{d}\right)\right) - 2d\ln\left(\exp\left(\frac{y}{d}\right) + \exp\left(\frac{2b+c}{2d}\right)\right) + c\right)$$

avec coefficients de transformation *a, b, c, d* ; ou
une fonction logistique dose-effet

$$f(y) = a\left/\left(1 + \left(\frac{y}{b}\right)^c\right)\right.$$

avec coefficients de transformation *a, b, c ; ou*
une fonction cumulative Log normale

$$f(y) = \frac{a}{2}erfc\left(-\ln\left(\frac{y}{b}\right)\Big/\sqrt{2}c\right)$$

avec coefficients de transformation $a$, $b$, $c$.

**6.** Procédé selon la revendication 5, sachant que les coefficients de transformation de la fonction $f(y)$ sont déterminés au moyen d'un procédé itératif à partir des valeurs de départ prédéfinies.

**7.** Procédé selon les revendications 5 ou 6, sachant que les coefficients de transformation de la fonction $f(y)$ sont fixés en fonction :

- de la différence $Y_F$ - $Y_{FD}$ de la position verticale $Y_F$ du point de référence distant du modèle de verre de lunettes individuel et de la position verticale $Y_{FD}$ du point de référence distant du modèle initial de départ ;
- et/ou de la différence $Y_N$ - $Y_{ND}$ de la position verticale $y_N$ du point de référence proche du modèle de verre de lunettes individuel et de la position $Y_{ND}$ du point de référence proche du modèle initial de départ.

**8.** Procédé selon l'une quelconque des revendications 5 à 7, sachant que les coefficients de transformation $a$ et $b$ sont déterminés numériquement au moyen du procédé itératif de Newton de telle manière que les conditions suivantes sont remplies lorsque $Y_0 = Y_F$ - $Y_{FD}$ :

$$y_{FD} = y_F - \Delta y(y_F) \quad \text{und} \quad y_{ND} = y_N - \Delta y(y_N)$$

sachant que :

$Y_F$ désigne la position verticale du point de référence distant du modèle de verre de lunettes individuel ;
$Y_{FD}$ désigne la position verticale du point de référence distant du modèle initial de départ ;
$Y_N$ désigne la position verticale du point de référence proche du modèle de verre de lunettes individuel ;
$Y_{ND}$ désigne la position verticale du point de référence proche du modèle initial de départ.

**9.** Procédé selon l'une quelconque des revendications précédentes, sachant qu'au moins une propriété optique du verre de lunettes est l'astigmatisme ou l'écart astigmatique.

**10.** Procédé selon l'une quelconque des revendications précédentes, sachant que

- le modèle de verre de lunettes individuel comprend en outre une fonction individuelle de distance par rapport à un objet le long de la ligne de vision principale du verre de lunettes ;
- le modèle initial de départ comprend en outre une fonction initiale de distance par rapport à un objet le long de la ligne principale du verre de lunettes ; et

sachant que la fonction individuelle de distance par rapport à un objet est obtenue au moyen d'une deuxième transformation $Y_2$ de la fonction initiale de distance par rapport à l'objet.

**11.** Procédé selon la revendication 10, sachant que les coefficients de transformation de la deuxième transformation $Y_2$ sont déterminés au moyen d'une itération de Newton, de telle manière que la valeur de réfraction du verre de lunettes au point de référence distant et/ou au point de référence proche du modèle de verre de lunettes individuel correspond à la valeur de réfraction du verre de lunettes au point de référence distant et/ou au point de référence proche du modèle initial de départ.

**12.** Procédé selon les revendications 10 ou 11, sachant que l'éloignement réciproque de l'objet $S_1(u_0, y)$ est décrit par une asymptote double

$$S_1(u_0, y) = b_s + \frac{a_s}{(1 + e^{c_s(y - y_0 + d_s)})^{m_s}}$$

avec les coefficients $a_s$, $b_s$, $c_s$, $d_s$, $m_s$ et dans lequel pour des coefficients $a_s$, $b_s$, $m_s$ donnés, les coefficients $c_s$, $d_s$

sont déterminés au moyen d'une itération de Newton.

**13.** Procédé selon l'une quelconque des revendications précédentes, dans lequel la ou les valeurs de consigne du modèle de verre de lunettes individuel sont multipliées par un facteur d'échelle $1/1_D$, ou sont modifiées par une fonction $h = h(S'(y'), l_D/l)$ de telle manière que $S(Y) = S(y') \cdot h(S'(y'), l_D/l)$ ou que la ou les valeurs de consigne du modèle de verre de lunettes individuel $h = h(l_D/l)$ sont modifiées, de telle manière que $S(y) = S(y') \cdot h(l_D/l)$, sachant que

$l$ désigne la longueur de progression du modèle de verre de lunettes individuel ; et

$l_D$ désigne la longueur de progression du modèle initial de départ.

**14.** Procédé mis en oeuvre par ordinateur servant à calculer un modèle de verre de lunettes individuel pour un verre de lunettes progressif avec une position verticale individuelle réglable de manière variable du point de référence distant et/ou du point de référence proche, comprenant les étapes suivantes :

- Indication d'un modèle initial de départ, présentant une position verticale donnée du point de référence distant et/ou du point de référence proche et sachant que le modèle initial de départ comprend une fonction de distance d'un objet $S_1'(y')$ le long de la ligne principale du verre de lunettes ;
- calcul du modèle de verre de lunettes individuel de telle manière que celui-ci présente la position verticale individuelle exigée du point de référence distant et/ou du point de référence proche, sachant que le calcul du modèle de verre de lunettes individuel comprend un calcul d'une fonction de distance d'un objet $S_1(y)$ le long de la ligne principale du verre de lunettes au moyen d'une formule $S_1(y) = S_1'(y')$ et d'une transformation $Y : y \rightarrow y'$, $y \rightarrow y'(y) = y - \Delta y(y)$ de la fonction de distance d'un objet $S_1'(y')$ du modèle initial de départ, sachant que dans ce calcul, $y'$ désigne la coordonnée verticale le long de la ligne principale du verre de lunettes et $y$ la coordonnée verticale le long de la ligne principale du verre de lunettes de la fonction transformée de distance d'un objet du modèle de verre de lunettes individuel.

**15.** Procédé selon la revendication 14, sachant que les coefficients de transformation $Y$ sont déterminés au moyen d'une itération de Newton, de préférence bidimensionnelle, de telle manière que la valeur de réfraction du verre de lunettes au point de référence distant et/ou au point de référence proche du modèle de verre de lunettes individuel correspond à la valeur de réfraction du verre de lunettes au point de référence distant et/ou au point de référence proche du modèle initial de départ.

**16.** Procédé selon les revendications 14 ou 15, sachant que l'éloignement réciproque d'un objet $S_1(u_0, y)$ est décrit par une asymptote double :

$$S_1(u_0, y) = b_s + \frac{a_s}{(1 + e^{c_s(y - y_0 + d_s)})^{m_s}}$$

avec des coefficients $a_s$, $b_s$, $c_s$, $d_s$, $m_s$ et sachant que pour des coefficients $a_s$, $b_s$, $m_s$ donnés, les coefficients $c_s$, $d_s$ sont déterminés au moyen d'une itération de Newton.

**17.** Procédé de fabrication d'un modèle de verre de lunettes individuel progressif avec une position verticale individuelle réglable de manière variable du point de référence distant et/ou du point de référence proche, comprenant les étapes suivantes :

- calcul d'un modèle de verre de lunettes individuel comportant la position verticale exigée du point de référence distant et/ou du point de référence proche, selon le procédé de calcul d'un modèle de verre de lunettes individuel selon l'une quelconque des revendications 1 à 16 ;
- calcul et/ou optimisation du verre de lunettes selon le modèle de verre de lunettes individuel.

**18.** Dispositif de fabrication d'un modèle de verre de lunettes individuel progressif avec une position verticale individuelle réglable de manière variable du point de référence distant et/ou du point de référence proche, comprenant :

- les moyens de calcul du modèle réalisés pour réaliser un procédé de calcul d'un modèle de verre de lunettes individuel selon l'une quelconque des revendications 1 à 16 ;

- les moyens d'optimisation ou de calcul réalisés pour calculer ou optimiser le verre de lunettes selon le modèle de verre de lunettes individuel.

**19.** Résultat d'un programme informatique réalisé, lorsqu'il est chargé et exécuté sur un ordinateur, pour réaliser un procédé de calcul et d'optimisation d'un verre de lunettes, dans lequel le procédé comprend les étapes suivantes :

- calcul d'un modèle de verre de lunettes individuel comportant la position verticale exigée du point de référence distant et/ou du point de référence proche, selon le procédé de calcul d'un modèle de verre de lunettes individuel selon l'une quelconque des revendications 1 à 16 ;
- calcul et/ou optimisation du verre de lunettes selon le modèle de verre de lunettes individuel.

$f(y)/mm$

a)

Fig. 1a

$f(y)/mm$

b)

Fig. 1b

| y=f(x) | 3.999 | 3.987 | 0.149 | 0.021 | 0.000 |
|---|---|---|---|---|---|
| x | -20.00 | -14.00 | 4.00 | 8.00 | 20.00 |

Funktionsverlauf

$f(x)= b+a/((1.d0+exp(c^*(x+d)))^{**}m)$

Variation der PZ-Länge

Addition  a =  -4.0000

Asymptote oben =  0.0000    a + b

Asymptote unten =  4.0000    b

Abflachungsk. c =  -0.5000    < 0

Zentrum (-d) =  -2.5000

Potenz  m =  1.0000

O.K.    Abbrechen

x= -27.56   y= 0.00    f(x)=0.001

**Fig. 2**

EP 2 115 525 B1

Fig. 3

Fig. 4

Fig. 5

**12** **10**

**Bestelldaten : Rezept und Zentrierung**  _ □ ✕

Brillenglas : Sollwerte | Auge : Refraktion |

| dioptrische Wirkung | Rezept | | Sollwerte Glas | ☑ Akkommodation nachziehen |
|---|---|---|---|---|
| Bezug Ferne A1 | 0.00 | | 0.00 | |
| Bezug Nähe A1 | -2.00 | ⌐ n. Norm | -3.00 | ⌐ A1 Glas wie Rezept |
| | D= A'-A-Akk | | A'= A+D+Akk | |
| Sphäre | 2.00 | dpt | 2.000 | Gebrauchsstellung ▾ |
| Zylinder | 0.00 | dpt | 0.000 | Gebrauchsstellung ▾ |
| Achse | 0.0 | Grad | 0.000 | Gebrauchsstellung ▾ |
| Addition | 2.00 | dpt | 3.000 | Gebrauchsstellung ▾ |
| Prisma horizontal | 0.00 | cm/m | 0.000 | Gebrauchsstellung ▾ |
| Prisma vertikal | 0.00 | cm/m | 0.000 | Gebrauchsstellung ▾ |
| Prisma | 0.00 | cm/m | | alle GSt.  alle SMScv |
| Basis | 45.0 | GradTabo | | |

HSA-Umrechnung | ☑ Augenwerte= Rezeptwerte Brillenglas

**14**

GST und Zentrierung

| Pupillendistanz | 63.0 | mm | | | |
|---|---|---|---|---|---|
| Hornhautscheitelabstanc | 15.0 | mm | | | |
| Vorneigung | 8.0 | Grad | Winkel zw. Nullblickrichtung | | |
| Augendrehpunktabstand | 28.5 | mm | und Z-Achse | 0.0 | Grad |
| Augendrehpunkt | | | Dezentration | | |
| x-Koordinate | -0.00 | mm | x-Koordinate | 0.00 | mm |
| y-Koordinate | -0.50 | mm | y-Koordinate | 0.00 | mm |
| z-Koordinate | 32.12 | mm | z-Koordinate | 0.00 | mm |

OK | Abbrechen | Hilfe |

**Fig. 6**

B_F

B_Z

Z'

Nulblickrichtung

Hauptblickrichtung

B_N

Brechwert

**Fig. 7a**

Nulblickrichtung   B_Z

Z'

B_F

B_N

Brechwert

**Fig. 7b**

Fig. 8b

Fig. 8a

Fig. 9b

Fig. 9a

49

**Fig. 10**

140

Fig. 11

/ Startseite / Performance Consulting / FreeSign Consulting / Impressum / Beenden ..

**RODENSTOCK**

Eingabe | Ausgabe

Maria Mustermann | Kunde Bestellwerte | aktuelle Brille | Design Profiler

Glastyp

142 —

○ Keine Brille
○ Einstärkenbrille
◉ Gleitsichtbrille
○ Mehrstärkenbrille

Rodenstockprodukte | [ Spezifizieren ]

Produkte anderer Hersteller | [ Spezifizieren ]

Addition des Vorgängerglases | Φt [ 1.50 ]

144

/ Drucken / zurück | weiter ▶

EP 2 115 525 B1

RODENSTOCK

Eingabe    Auswahl

Maria Mustermann

Kunde    Bestellwerte    aktuelle Brille    Design Profiler

Für welche Tätigkeiten bzw. Sehanforderungen nutzen Sie Ihre Brille?
Die Anzahl der Punkte pro Bereich bestimmt dessen Wichtigkeit beim Sehen.

Bitte verteilen Sie maximal 9 Punkte auf die vier unten angegebenen Bereiche.

Ferne

mittlere Entfernungen

Nähe

Aktivverhalten

Drucken    /    zurück

weiter

146

Fig. 12

Fig. 13

Fig. 14

Fig. 15 a

Fig. 15b

**160 A**

**RODENSTOCK**

Eingabe | Ausgabe

Sehen

Designempfehlung    Designtuner

Designprofil    Bestellparameter

Sehbereich    max

F Z H    min

Aussehen

BK-Vorgabe dpt 3,0

Index 1,6

ColorMatic

Glasgeometrie    Rechts    Links

Mittendicke

max.Randdicke

Bauhöhe

Gewicht

Aktive Auswahl übernehmen    Ausdruck Kundeninfo    Daten speichern

zurück

Fig. 16

EP 2 115 525 B1

EP 2 115 525 B1

Fig. 17

Rodenstock Brillengläser    O Bestellung    O Anfrage    O Wiederholung

**Bestellung Grundblatt**

Kunden-Nr.: _____    Kommission: _____

Datum: _____    Termin: _____

Glastyp/EDV-Code: _____    R Ø ___ / ___ O Zentr.

Farbe/Beschichtung: _____    L Ø ___ / ___ O Zentr.

| | Sph. | Cyl. | Achse | Add. | Prisma 1 | Basis 1 | Prisma 2 | Basis 2 |
|---|---|---|---|---|---|---|---|---|
| R | | | | | | | | |
| L | | | | | | | | |

Angleich der prismatischen Vertikaldifferenzen bei Anisometropie    O Ja    O Nein

Firma

Prismen aufteilen?
R/L
O Ja
O Nein

**Fassungs- und Zentrierdaten**

| Fassung [Kastenmaß in mm] | | | Zentrierung [Einschleifdaten in mm] | | | |
|---|---|---|---|---|---|---|
| SL | SH | AzG | horizontal | P_R | P_L | Zentrierkorrektur berücksichtigt O Ja O Nein |
| | | | vertikal | Y_R | Y_L | |

R    L

Bohrlöcher und Kerben einzeichnen

O MDM    O optimierter Durchmesser    Mindestranddicke des gerandeten Glases [mm]    Dicke an markierter Stelle [mm]

**Optimierungsparameter / Sonstige Angaben**

| | R | L |
|---|---|---|
| Pupillendistanz (PD) [mm] | R | L |
| HSA der Korrektionsbrille [mm] | R | L |
| HSA der Messbrille [mm] | R | L |
| Fassungsvorneigung Angaben [°] | R | L |
| Fassungsscheibenwinkel [°] | R | L |
| Inset [%] | R | L |

O Standard Design
  O DN= -18 mm
  O DN= -16 mm
  O DN= -14 mm
O Individueller Nahabstand
  Refraktionsabstand Nähe _____ cm
  Hauptsehentfernung Nähe _____ cm

O Fassungsoptimiertes Design
  Bitte Fassungs- und Zentrierdaten
  angeben

O Individuelles Design
  Designpunkt Ferne: (DF): _____
  Designpunkt Nähe: (DN): _____

O Basiskurve _____ dpt

**Prismen**

Für Prismen in Gebrauchsstellung

Anordnung der Refraktionsgläser in der Messbrille (senkrecht vor dem Auge)

| | Sph. | Cyl. | Prisma | Basis | Schräge | Auge | Sph. | Cyl. | Prisma | Basis | Schräge |
|---|---|---|---|---|---|---|---|---|---|---|---|
| 5 | | | | | | | | | | | |
| 4 | | | | | | Fassungs- | | | | | |
| 1 | | | | | | ebene | | | | | |
| 2 | | | | | | | | | | | |
| 3 | | | | | | Objekt | | | | | |

Zentrierung der Refraktionsgläser in der Messbrille

| O PMZ-Fall | O Formfall | O Sonderfall | horizontal [mm] | R | L |
|---|---|---|---|---|---|
| | | Messbrille nur z.T. nachgeführt um | vertikal [mm] | R | L |

Lage der Facette

Voraussichtlicher Facettenverlauf des gerandeten Glases.    R    O Objektseitig    O ½ augenseitig    O ⅓ augenseitig
  L    O Objektseitig    O ½ augenseitig    O ⅓ augenseitig

## Fig. 18

Fig. 19

Fig. 20A          Fig. 20b

Fig. 21, Abb. A

Fig. 21, Abb. b

Fig. 22

## Impression FreeSign Perfalit 1.6

| Solitaire | | | | | | Ø 56 / 62 |

Graduell Grau 10/75%      MDM

| | ⊕ | ▭ | ⌂ | ◿ | ⊕ | ✚ |
|---|---|---|---|---|---|---|
| 📑 | **2.00** | **1.00** | **35** | **4.00** | **45** | **2.00** |
| ≡ | 1.65 | 1.25 | 38 | 3.70 | 36 | 1.78 |

COR 31.7

32.0     9.0 °     DF 1.2     INS 0.5     BC 6.5

13.0     15.0°     DN -15.6     0.0     0.0 PMZ

### Fig. 23

| Bestellwerte | | | |
|---|---|---|---|
| ⊔ | Rechts | ◢ | Prisma |
| ⊔ | Links | ⊕ | Basis |
| ⊕ | Sphäre | ✚ | Addition |
| ⊖ | Zylinder | 📑 | Bestellwert |
| △ | Achse | ⊲ | Sollmesswert |
| Ø | Durchmesser | ☺ | Mittendickenminimierung |
| Individuelle Parameter | | Designparameter | |
| ◖ | Hornhautscheitelabstand | DF | Designpunkt Ferne |
| ◪ | Fassungsscheibenwinkel | DN | Designpunkt Nähe |
| ▶ | Vorneigung | BC | Basiskurve |
| ◉ | Pupillendistanz rechts | INS | Inset |
| ◉ | Pupillendistanz links | | |
| Zentrierung | | | |
| ⌀◉ | Korrigierte Einschleif-PD rechts | ⌀◉ | Korrigierte Einschleif-PD links |
| ◉→ | Zentrierkorrektur rechts nasal | ◉← | Zentrierkorrektur links nasal |
| ◉← | Zentrierkorrektur rechts temporal | ◉→ | Zentrierkorrektur links temporal |
| ↓◉ | Zentrierkorrektur rechts unten | ◉↓ | Zentrierkorrektur links unten |
| ↑◉ | Zentrierkorrektur rechts oben | ◉↑ | Zentrierkorrektur links oben |
| PMZ | Pupillenmittenzentrierung | FF | Formelfall |
| Zusatzinformationen | | | |
| CVD Refraktion | Corneal vertex distance refraction | HDEC | Horizontale Vordezentration |
| Prism Adaption | Prismenangleich | MVDN | Hauptsehentfernung Nähe |
| RDN | Refraktionsabstand Nähe | | |

Fig. 24

Fig. 25a

Fig. 25 b

Fig. 26a

Fig. 26b

Fig. 26c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 0100188 W
- WO 2004086125 A
- US 7063421 B1

**In der Beschreibung aufgeführte Nicht-Patentliteratur**

- **Oranna Guth.** *Gradal Individual® FrameFit™ - die neue Gestaltungsfreiheit bei Gleitsichtgläsern,* 2006, 76-80
- **S. Schuldt.** *ysis - Natürliches Sehen erleben,* Mai 2004, 38-43
- **Lehrbuch.** *Numerical Recipes,* ISBN 052138330